# EUROPÄISCHE PATENTSCHRIFT

(11) **EP 2 370 374 B1**
(45) Veröffentlichungstag und Bekanntmachung des Hinweises auf die Patenterteilung: **14.11.2012**
(21) Anmeldenummer: 09782692.9
(22) Anmeldetag: 07.09.2009
(51) Int. Cl.: C04B 24/04, C04B 28/02, C04B 28/10, C04B 28/14, C04B 40/00

(54) **VERWENDUNG VON POLYOLEN UND CYCLOHEXANPOLYCARBONSÄURE-DERIVATEN ZUR ENTSTAUBUNG BAUCHEMISCHER PRODUKTE**
USE OF POLYOLS AND CYCLOHEXANE POLYCARBOXYLIC ACID DERIVATIVES FOR THE REMOVAL OF DUST FROM CHEMICAL CONSTRUCTION PRODUCTS
UTILISATION DE POLYOLS ET DE DÉRIVÉS D'ACIDE CYCLOHEXANE POLYCARBOXYLIQUE POUR DÉPOUSSIÉRER DES PRODUITS CHIMIQUES UTILISÉS DANS LE BÂTIMENT

(30) Priorität: 25.11.2008 EP 08169851
(43) Veröffentlichungstag der Anmeldung: 05.10.2011
(73) Patentinhaber: Construction Research & Technology GmbH, 83308 Trostberg (DE)
(72) Erfinder: Hoetzl, Klaus-Dieter, 86199 Augsburg (DE); Dürndorfer, Silvia, 86368 Gersthofen (DE); Riedmiller, Joachim, 86316 Friedberg (DE); Schwarz, Volker, 86179 Augsburg (DE); Stohr, Werner, 86161 Augsburg (DE)
(86) Internationale Anmeldenummer: PCT/EP2009/061550
(87) Internationale Veröffentlichungsnummer: WO 2010/060659

(56) Entgegenhaltungen:
- EP-A1- 0 403 974
- WO-A2-2005/123821
- DE-A1- 3 538 791
- DE-U1-202006 016 797
- CHEMICAL ABSTRACTS, Bd. 111, Nr. 10, 4. September 1989 (1989-09-04), Columbus, Ohio, US; abstract no.: 111-83164r, Katsuki, N. et al: "Dust-reducing agent for concrete spraying" Seite 328 XP60212 & JP 63 297255 A (SANKO COLLOID KAGAKU KK) 5. Dezember 1988 (1988-12-05)

## Beschreibung

Die vorliegende Erfindung betrifft die Verwendung einer Mischung aus Polyolen und Cyclohexanpolycarbonsäure-Derivaten zur Reduzierung bzw. Minimierung der Staubemission beim Umgang mit pulverförmigen bauchemischen Produkten, ein Verfahren zur Herstellung der pulverförmigen bauchemischen Produkte, sowie hydraulisch abbindende Massen, enthaltend die erfindungsgemäße Mischung aus Polyolen und Cyclohexanpolycarbonsäure-Derivaten.

Trockene, insbesondere pulverförmige bauchemische Produkte, wie hydraulisch abbindende oder zementhaltige Massen (z. B. Fliesenkleber, Fugenfüller, Spachtelmassen, Dichtschlämme, etc.) führen wegen ihrer Fein- und Feinstpartikelanteile bei Umfüll- und Mischprozessen zu einer deutlichen Staubbildung. Deshalb wurden zahlreiche Versuche unternommen, um die Staubentwicklung in solchen Produkten zu vermindern bzw. zu unterbinden.

Es wurde beispielsweise versucht, die Staubentwicklung bei hydraulisch abbindenden Massen, beispielsweise Spachtelmassen über den Mahlgrad bzw. die Kornzusammensetzung der pulverförmigen Produkte zu verringern, wobei jedoch die Verarbeitbarkeit gröberer Pulver schlechter ist.

Eine weitere Methode zur Reduzierung der Staubentwicklung ist die Aggregation z. B. mit Wasser, wässrigen Lösungen oder Dispersionen. So ist beispielsweise aus der US 4,780,143 bekannt, Klinker vor der Vermahlung zu Zement zur Verringerung der Staubentwicklung mit wässrigem Schaum zu versetzen. Auch sind bereits Zusätze von Kunststoffdispersionen zu Zement für Spritzbetonzusammensetzungen vorgeschlagen worden, um die Staubbildung zu erniedrigen. Eine vorrübergehende Aggregation bei hydraulisch abbindenden Massen ist nur dann ohne Bedeutung, wenn die Produkte nachträglich vermahlen werden oder z. B. als Spritzbeton oder Spritzmörtel eingesetzt werden sollen. In feinpulvrigen Spachtelmassen beispielsweise, auf die nach dem Auftragen Fußbodenbeläge verlegt werden sollen, sind jedoch gröbere Aggregationen nicht annehmbar, da sie sich auf der Oberfläche vieler glatter Fußbodenbelagmaterialien abzeichnen.

In der EP 403 874 A1 werden als Additive zur Staubminderung spezielle Ethylenoxid/Propylenoxid-Blockcopolymere genannt. Nachteilig an diesen Additiven ist jedoch, dass zur Erzielung eines signifikanten Effektes oftmals große Mengen hiervon eingesetzt werden müssen.

Die WO 2006/084588 A1 offenbart die Verwendung von hochviskosen, linearen Kohlenwasserstoffen oder Kohlenwasserstoffgemischen als Additive zur Verminderung des Staubens pulverförmiger bauchemischer Produkte. Nachteilig an den dort beschriebenen Systemen ist die hohe Viskosität der eingesetzten Kohlenwasserstoffe, die auch einen hohen Verbrauch und damit eine geringe Effizienz der eingesetzten Additive bedingen.

Das Gebrauchsmuster DE 20 2006 016 797 U1 betrifft einen staubarmen Trockenmörtel, welcher mindestens eine staubmindernde Komponente in einer Menge von 0,01 bis 10 Gew.-%, bezogen auf die Gesamttrockenmischung enthält. Die staubmindernde Komponente wird ausgewählt aus der Reihe der Monoalkohole, wie z. B. 3-Methoxybutanol, Benzylalkohol, 1,2-Propandiol, Hexanol, Diacetonalkohol, Ethyldiglykol, Isopropanol, 2-Ethylhexanol und/oder Alkandiole wie 2-Methylpentan-2,4-diol, Neopentylglykol und n-Butan-2,5-diol. Weiterhin geeignet sind Glykole, Polyethylenglykole, Fettalkohole und Polyvinylalkohole. Besondere Erwähnung finden aliphatische Ether, Zelluloseether, Alkoxylate und Methyl- / Ethyl-Fettsäureether.

Die bekannten staubmindernden Additive müssen in bestimmten Mindest-Konzentrationen eingesetzt werden, um die gewünschte Wirkung in bauchemischen Produkten zu erreichen. Die gewünschte staubmindernde Wirkung wird dabei über die Staubzahl definiert. Dabei ist ein weiterer wichtiger Aspekt, dass die Entstaubungswirkung über die Lagerzeit des Mörtels möglichst in gleicher Größenordnung erhalten bleibt. Die staubmindernden Additive beeinflussen immer in gewisser Weise die erwünschten Eigenschaften der bauchemischen Produkte. Teilweise muss die Zusammensetzung der bauchemischen Produkte entsprechend angepasst werden, was mit erheblichem Formulierungsaufwand verbunden sein kann. Insbesondere bei höherer Einsatzkonzentration der Entstaubungsadditive ist eine solche Maßnahme notwendig. Deshalb versucht man die Einsatzkonzentration der Entstaubungsadditive möglichst gering zu halten. Auch aus wirtschaftlichen Gesichtspunkten ist eine möglichst geringe Einsatzkonzentration wünschenswert. Die notwendigen Konzentrationen der Additive zur Entstaubung hängen dabei insbesondere auch von der Zusammensetzung der Produkte ab. Für zementbasierte Fliesenkleber, Spachtelmassen, Fugenmörtel, Dichtschlämmen und Reparaturmörtel hat sich die Verwendung von Polyolen, insbesondere Polyethylenoxid, besonders bewährt. Das gewünschte Eigenschaftsprofil des damit entstaubten Produktes wird damit nur unwesentlich beeinflusst.

Da mit den genannten Verbindungen bzw. Verfahren das grundlegende Problem des Staubens bauchemischer Mischungen noch immer nicht, vor allem unter wirtschaftlichen Gesichtspunkten endgültig beseitigt ist, lag der vorliegenden Erfindung die Aufgabe zugrunde, Additive zur Reduzierung der Staubentwicklung zur Verfügung zu stellen, die sich in vorteilhafter Weise als Entstaubungsmittel für pulverförmige bauchemische Produkte eignen und die sich durch eine einfache Applikation und hohe Wirksamkeit auszeichnen. Darüberhinaus sollten sie bei der Anwendung nicht zur Klumpenbildung neigen und die Qualität der ausgehärteten Systeme nicht negativ beeinflussen.

Erfindungsgemäß gelöst wurde die Aufgabe durch die Verwendung einer Mischung enthaltend mindestens ein Polyol und mindestens ein Cyclohexanpolycarbonsäure-Derivat der Formel (I), 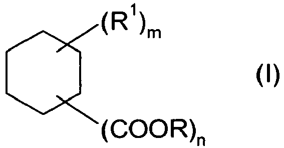 worin
- R¹: für C₁-C₁₀-Alkyl oder C₃-C₈-Cycloalkyl steht,
- m: für 0, 1, 2 oder 3 steht,
- n: für 2, 3 oder 4 steht, und
- R: für Wasserstoff oder C₁-C₃₀-Alkyl, C₁-C₃₀-Alkoxy oder C₃-C₈-Cycloalkyl steht, wobei mindestens ein Rest R für C₁-C₃₀-Alkyl, C₁-C₃₀-Alkoxy oder C₃-C₈-Cycloalkyl, steht,
als Additiv zur Entstaubung pulverförmiger bauchemischer Produkte.

Die vorliegende Erfindung betrifft somit die Verwendung einer Mischung enthaltend mindestens ein Polyol und mindestens ein Cyclohexanpolycarbonsäure-Derivat als Additiv zur Reduzierung bzw. Minimierung der Staubemission beim Umgang mit pulverförmigen bauchemischen Produkten, mit organischen und/oder mineralischen Bestandteilen, ein Verfahren zur Herstellung der pulverförmigen bauchemischen Produkte, sowie pulverförmige bauchemische Produkte, enthaltend die erfindungsgemäße Mischung aus mindestens einem Polyol und mindestens einem Cyclohexanpolycarbonsäure-Derivat.

In der Formel (I) können die Reste R¹ gleich oder verschieden sein, wenn m = 2 oder 3 ist. Die C₁-C₁₀-Alkylgruppen können geradkettig oder verzweigt sein. Wenn R¹ für eine Alkylgruppe steht, handelt es sich bevorzugt um eine C₁-C₈-Alkylgruppe, besonders bevorzugt um eine C₁-C₆-Alkylgruppe. Beispiele für derartige Alkylgruppen sind Methyl, Ethyl, n-Propyl, i-Propyl, n-Butyl, i-Butyl, sek.-Butyl, tert.-Butyl, n-Pentyl, n-Hexyl, n-Octyl und 2-Ethylhexyl. Bevorzugt ist m = 0.

Die m Reste R können gleich oder verschieden sein. Die C₁-C₃₀-Alkylgruppen und die Alkylreste der C₁-C₃₀-Alkoxygruppen können geradkettig oder verzweigt sein. R ist bevorzugt C₁-C₃₀-Alkyl, C₁-C₂₀-Alkyl, besonders bevorzugt C₁-C₁₈-Alkyl, ganz besonders bevorzugt C₁-C₁₃-Alkyl. Beispiele für derartige Alkylgruppen sind die bereits für R¹ genannten Alkylgruppen sowie n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl, und n-Eicosyl.

Bei den Alkylgruppen kann es sich jeweils um einzelne Isomere der genannten Alkylgruppen oder um Gemische verschiedener Alkylgruppen handeln. Die verschiedenen Alkylgruppen können verschiedene Isomere mit derselben Zahl von Kohlenstoffatomen sein und/oder Alkylgruppen, die eine verschiedene Anzahl von Kohlenstoffatomen aufweisen.

Bei den Polyolen handelt es sich bevorzugt um Polyetherpolyole, Polyesterpolyole, Polybutadienpolyole und Polycarbonatpolyole, wobei es sich auch um Mischungen dieser Verbindungen handeln kann. Die Polyole enthalten bevorzugt zwischen zwei und 10, besonders bevorzugt zwischen zwei und drei Hydroxylgruppen und besitzen ein gewichtsmittleres Molekulargewicht zwischen 32 und 20000, besonders bevorzugt zwischen 40 und 2000 und insbesondere zwischen 50 bis 600 g/mol. Als Polyole eignen sich vorzugsweise die bei Raumtemperatur flüssigen Polyhydroxyverbindungen. Als typische Beispiele wären difunktionelle Polyethylenglykole zu nennen. Es können auch Hydroxylgruppen aufweisende statistische Copolymere und/oder Blockcopolymere des Ethylenoxids und Propylenoxids eingesetzt werden. Geeignete Polyetherpolyole sind die bekannten Polyether, wie die unter Verwendung von Startermolekülen hergestellten Polyole aus Styroloxid, Propylenoxid, Butylenoxid, Tetrahydrofuran oder Epichlorhydrin. Bevorzugt handelt es sich bei dem Polyol um Polyethylenglycol, Polypropylenglycol, Polytetramethylenglycol und Polystyroloxid, besonders bevorzugt um Polyethylenglycol mit einer mittleren molaren Masse von 200 bis 600 g/mol.

Ein weiterer als Polyolkomponente einsetzbarer Copolymertyp, der endständig Hydroxylgruppen aufweist, ist gemäß der allgemeinen Formel (herstellbar z.B. mittels "Controlled" High-Speed Anionic Polymerization gemäß Macromolecules 2004, 37, 4038-4043): 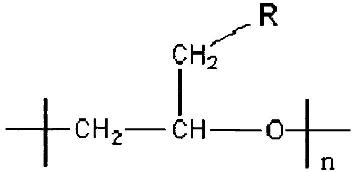 in welcher R gleich oder verschieden ist und bevorzugt durch OMe, OiPr, Cl oder Br repräsentiert wird.

Weiterhin eignen sich als Polyolkomponente insbesondere die bei 25°C flüssigen, Polyesterdi- bzw. polyole, die durch Kondensation von Di- oder Tricarbonsäuren, wie Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure und/oder Dimerfettsäure, mit niedermolekularen Diolen, Triolen oder Polyolen, wie Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-Dodecandiol, Dimerfettalkohol, Glycerin, Pentaerythritol und/ oder Trimethylolpropan, herstellbar sind.

Eine weitere geeignete Gruppe der Polyole sind die Polyester z.B. auf der Basis von Caprolacton, welche auch als "Polycaprolactone" bezeichnet werden. Weitere einsetzbare Polyole sind Polycarbonat-Polyole und Dimerdiole sowie Polyole auf Basis pflanzlicher Öle und ihrer Derivate, wie Rizinusöl und dessen Derivate oder epoxidiertes Sojabohnenöl. Außerdem kommen Hydroxylgruppen aufweisende Polycarbonate in Frage, welche durch Reaktion von Kohlensäurederivaten, z. B. Diphenylcarbonat, Dimethylcarbonat oder Phosgen, mit Diolen erhältlich sind. Besonders eignen sich z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A, Glyzerin, Trimethylolpropan, 1,2,6-Hexantriol, 1,2,4-Butantriol, Trimethylolpropan, Pentaerythrit, Chinit, Mannit, Sorbit, Methylglykosid und 1,3,4,6-Dianhydrohexite. Auch die Hydroxy-funktionellen Polybutadiene, welche u.a. unter dem Handelsnamen "Poly-bd®" käuflich sind, können als Polyole ebenso wie deren hydrierten Analoga eingesetzt werden. Weiterhin kommen Hydroxy-funktionelle Polysulfide, welche unter dem Handelsnamen "Thiokol® NPS-282" vertrieben werden, sowie Hydroxy-funktionelle Polysiloxane in Frage.

Die pulverförmigen bauchemischen Produkte enthalten organische und/oder mineralische Bestandteile.

Pulverförmige bauchemische Produkte aus organischen und/oder mineralischen Bestandteilen können beispielsweise Fliesenkleber, Dichtungsschlämme, Armierungskleber, WDVS-Kleber, mineralische Putze, Reparaturmörtel, selbstverlaufende Spachtelmassen, Feinspachtel, Estrichsysteme, Dickbettmörtel, Fugenmörtel oder Oberflächenschutzsysteme, aber auch Pigmentzubereitungen sein.

Unter den organischen Bestandteilen der bauchemischen Produkte versteht man beispielsweise redispergierbare Polymerpulver, Verdicker, Stabilisierer, Entschäumer, Dispergiermittel, Emulgatoren oder Pigmente.

Die mineralischen Bestandteile können beispielsweise Zement, Gips, Anhydrit, Kalk, Kreide, Sand, Quarzmehl, Ton, Asche, Schlacke, Microsilica, Leichtfüllstoffe wie Blähglas, Blähton, Poraven^{®}, Expancell^{®} sowie Pigmente sein.

Ein weiterer Gegenstand der Erfindung betrifft die Verwendung der erfindungsgemäßen Mischung enthaltend mindestens ein Polyol und mindestens ein Cyclohexanpolycarbonsäure-Derivat als Additive zur Entstaubung pulverförmiger Polymere bzw. Polymerpulver sowie redispergierbarer Polymerpulver wie nachstehend aufgeführt:

| Redispergierbare Polymerpulver | Polymere | Polymerpulver |
|---|---|---|
| VAc/E/Veova | Stärken | PVC (Polyvinylchlorid) |
| S/Acrylat | Cellulosen | Phenolharzbinder |
| S/B | Gumme | Vinurane |
| UF/MF | | Kauritharze |
| Reinacrylate | | |

| | | |
|---|---|---|
| VAc = Vinylacetat S = Styrol B = Butadien E = Ethylen Veova = Vinylester der Versatinsäure UF = Ureaformaldehyd MF = Melaminformaldehyd | | |

Bei den erfindungsgemäß verwendeten Cyclohexanpolycarbonsäure-Derivaten handelt es sich insbesondere um Mono-, Di-, Tri-, Tetraester und Anyhdride der Cyclohexanpolycarbonsäuren. Bevorzugt liegen alle Carbonsäuregruppen in veresterter Form vor. Die eingesetzten Ester sind Alkyl-, Cykloalkyl- sowie Alkoxyalkylester, bevorzugt Alkylester, wobei bevorzugte Alkylgruppen R bereits vorstehend genannt sind.

Bevorzugt ist das mindestens eine Cyclohexanpolycarbonsäurederivat ausgewählt aus der Gruppe bestehend aus kernhydrierten Mono- und Dialkylestern der Phthalsäure, Isophthalsäure und Terephthalsäure, kernhydrierten Mono-, Di- und Trialkylestern der Trimellitsäure, der Trimesinsäure und der Hemimellitsäure oder Mono-, Di-, Tri- und Tetraalkylestern der Pyromellitsäure, wobei die Alkylgruppen R linear oder verzweigt sein können und jeweils 1 bis 30, bevorzugt 1 bis 20, besonders bevorzugt 1 bis 18, ganz besonders bevorzugt 1 bis 13 Kohlenstoffatome aufweisen, und Gemischen aus zwei oder mehr davon. Geeignete Alkylgruppen R sind vorstehend bereits genannt.

Besonders bevorzugt sind Cyclohexan-1,4-dicarbonsäurealkylester, wie z.B. Cyclohexan-1,4-dicarbonsäuremonomethylester, Cyclohexan-1,4-dicarbonsäuredimethylester, Cyclohexan-1,4-dicarbonsäurediethylester, Cyclohexan-1,4-dicarbonsäuredi-n-propylester, Cyclohexan-1,4-dicarbonsäuredi-n-butylester, Cyclohexan-1,4-dicarbonsäuredi-tert-butylester, Cyclohexan-1,4-dicarbonsäurediisobutylester, Cyclohexan-1,4-dicarbonsäuremonoglykolester, Cyclohexan-1,4-dicarbonsäurediglykolester, Cyclohexan-1,4-dicarbonsäuredi-n-octylester, Cyclohexan-1,4-dicarbonsäurediisooctylester, Cyclohexan-1,4-dicarbonsäuremono-2-ethylhexylester, Cyclohexan-1,4-dicarbonsäuredi-2-ethylhexylester, Cyclohexan-1,4-dicarbonsäuredi-n-nonylester, Cyclohexan-1,4-dicarbonsäurediisononylester, Cyclohexan-1,4-dicarbonsäuredi-n-decylester, Cyclohexan-1,4-dicarbonsäuredi-n-undecylester, Cyclohexan-1,4-dicarbonsäurediisodecylester, Cyclohexan-1,4-dicarbonsäurediisododecylester, Cyclohexan-1,4-dicarbonsäuredi-n-octadecylester, Cyclohexan-1,4-dicarbonsäurediisooctadecylester, Cyclohexan-1,4-dicarbonsäuredi-n-eicosylester, Cyclohexan-1,4-dicarbonsäuremonocyclohexylester, Cyclohexan-1,4-dicarbonsäuredicyclohexylester;
Cyclohexan-1,4-dicarbonsäurediisopropylester, Cyclohexan-1,4-dicarbonsäuredi-n-hexylester, Cyclohexan-1,4-dicarbonsäurediisohexylester, Cyclohexan-1,4-dicarbonsäuredi-n-heptylester, Cyclohexan-1,4-dicarbonsäurediisoheptylester, Cyclohexan-1,4-dicarbonsäuredi-2-propylheptylester, Cyclohexan-1,4-dicarbonsäure-diisoundecylester, Cyclohexan-1,4-dicarbonsäuredi-n-dodecylester, Cyclohexan-1,4-dicarbonsäuredi-n-tridecylester, Cyclohexan-1,4-dicarbonsäurediisotridecylester, Cyclohexan-1,4-dicarbonsäuredi-n-pentylester, Cyclohexan-1,4-dicarbonsäurediisopentylester;
Cyclohexan-1,2-dicarbonsäurediisopropylester, Cyclohexan-1,2-dicarbonsäuredi-n-hexylester, Cyclohexan-1,2-dicarbonsäurediisohexylester, Cyclohexan-1,2-dicarbonsäuredi-n-heptylester, Cyclohexan-1,2-dicarbonsäurediisoheptylester, Cyclohexan-1,2-dicarbonsäuredi-2-propylheptylester, Cyclohexan-1,2-dicarbonsäurediisoundecylester, Cyclohexan-1,2-dicarbonsäuredi-n-dodecylester, Cyclohexan-1,2-dicarbonsäuredi-n-tridecylester, Cyclohexan-1,2-dicarbonsäurediisotridecylester, Cyclohexan-1,2-dicarbonsäuredi-n-pentylester, Cyclohexan-1,2-dicarbonsäurediisopentylester;
Cyclohexan-1,2-dicarbonsäurealkylester, wie z.B. Cyclohexan-1,2-dicarbonsäuremonomethylester, Cyclohexan-1,2-dicarbonsäuredimethylester, Cyclohexan-1,2-dicarbonsäurediethylester, Cyclohexan-1,2-dicarbonsäuredi-n-propylester, Cyclohexan-1,2-dicarbonsäuredi-n-butylester, Cyclohexan-1,2-dicarbonsäuredi-tert.-butylester, Cyclohexan-1,2-dicarbonsäurediisobutylester, Cyclohexan-1,2-dicarbonsäuremonoglykolester, Cyclohexan-1,2-dicarbonsäurediglykolester, Cyclohexan-1,2-dicarbonsäuredi-n-octylester, Cyclohexan-1,2-dicarbonsäurediisooctylester, Cyclohexan-1,2-dicarbonsäuredi-2-ethylhexylester, Cyclohexan-1,2-dicarbonsäuredi-n-nonylester, Cyclohexan-1,2-dicarbonsäurediisononylester, Cyclohexan-1,2-dicarbonsäuredi-n-decylester, Cyclohexan-1,2-dicarbonsäurediisodecylester, Cyclohexan-1,2-dicarbonsäuredi-n-undecylester, Cyclohexan-1,2-dicarbonsäurediisododecylester, Cyclohexan-1,2-dicarbonsäuredi-n-octadecylester, Cyclohexan-1,2-dicarbonsäurediisooctadecylester, Cyclohexan-1,2-dicarbonsäuredi-n-eicosylester, Cyclohexan-1,2-dicarbonsäuremonocyclohexylester, Cyclohexan-1,2-dicarbonsäuredicyclohexylester;
gemischte Ester der Cyclohexan-1,2-dicarbonsäure mit C₁ bis C₁₃-Alkoholen, wie z.B. Cyclohexan-1,2-dicarbonsäureethylmethylester, Cyclohexan-1,2-dicarbonsäure-n-propylmethylester, Cyclohexan-1,2-dicarbonsäureisopropylmethylester, Cyclohexan-1,2-dicarbonsäure-n-butylmethylester, Cyclohexan-1,2-dicarbonsäure-tert-butylmethylester, Cyclohexan-1,2-dicarbonsäureisobutylmethylester, Cyclohexan-1,2-dicarbonsäureglycolmethylester, Cyclohexan-1,2-dicarbonsäure-n-hexylmethylester, Cyclohexan-1,2-dicarbonsäureisohexylmethylester, Cyclohexan-1,2-dicarbonsäure-n-heptylmethylester, Cyclohexan-1,2-dicarbonsäureisoheptylmethylester, Cyclohexan-1,2-dicarbonsäure-n-octylmethylester, Cyclohexan-1,2-dicarbonsäureisooctylmethylester, Cyclohexan-1,2-dicarbonsäure-(2-ethylhexyl)methylester, Cyclohexan-1,2-dicarbonsäure-n-nonylmethylester, Cyclohexan-1,2-dicarbonsäureisononylmethylester, Cyclohexan-1,2-dicarbonsäure-(2-propylheptyl)methylester, Cyclohexan-1,2-dicarbonsäure-n-decylmethylester, Cyclohexan-1,2-dicarbonsäureisodecylmethylester, Cyclohexan-1,2-dicarbonsäure-n-undecylmethylester, Cyclohexan-1,2-dicarbonsäureisoundecylmethylester, Cyclohexan-1,2-dicarbonsäure-n-docecylmethylester, Cyclohexan-1,2-dicarbonsäureisododecylmethylester, Cyclohexan-1,2-dicarbonsäure-n-tridecylmethylester, Cyclohexan-1,2-dicarbonsäureisotridecylmethylester, Cyclohexan-1,2-dicarbonsäure-n-propylethylester, Cyclohexan-1,2-dicarbonsäureisopropylethylester, Cyclohexan-1,2-dicarbonsäure-n-butylethylester, Cyclohexan-1,2-dicarbonsäure-tert-butylethylester, Cyclohexan-1,2-dicarbonsäureisobutylethylester, Cyclohexan-1,2-dicarbonsäureglycolethylester, Cyclohexan-1,2-dicarbonsäure-n-hexylethylester, Cyclohexan-1,2-dicarbonsäureisohexylethylester, Cyclohexan-1,2-dicarbonsäure-n-heptylethylester, Cyclohexan-1,2-dicarbonsäureisoheptylethylester, Cyclohexan-1,2-dicarbonsäure-n-octylethylester, Cyclohexan-1,2-dicarbonsäureisooctylethylester, Cyclohexan-1,2-dicarbonsäure-(2-ethylhexyl)ethylester, Cyclohexan-1,2-dicarbonsäure-n-nonylethylester, Cyclohexan-1,2-dicarbonsäureisononylethylester, Cyclohexan-1,2-dicarbonsäure-(2-propylheptyl)ethylester, Cyclohexan-1,2-dicarbonsäure-n-decylethylester, Cyclohexan-1,2-dicarbonsäureisodecylethylester, Cyclohexan-1,2-dicarbonsäure-n-undecylethylester, Cyclohexan-1,2-dicarbonsäureisoundecylethylester, Cyclohexan-1,2-dicarbonsäure-n-docecylethylester, Cyclohexan-1,2-dicarbonsäureisododecylethylester, Cyclohexan-1,2-dicarbonsäure-n-tridecylethylester, Cyclohexan-1,2-dicarbonsäureisotridecylethylester, Cyclohexan-1,2-dicarbonsäureisopropyl-n-propylester, Cyclohexan-1,2-dicarbonsäure-n-butyl-n-propylester, Cyclohexan-1,2-dicarbonsäure-tert-butyl-n-propylester, Cyclohexan-1,2-dicarbonsäureisobutyl-n-propylester, Cyclohexan-1,2-dicarbonsäureglycol-n-propylester, Cyclohexan-1,2-dicarbonsäure-n-hexyl-n-propylester, Cyclohexan-1,2-dicarbonsäureisohexyl-n-propylester, Cyclohexan-1,2-dicarbonsäure-n-heptyl-n-propylester, Cyclohexan-1,2-dicarbonsäureisoheptyl-n-propylester, Cyclohexan-1,2-dicarbonsäure-n-octyl-n-propylester, Cyclohexan-1,2-dicarbonsäureisooctyl-n-propylester, Cyclohexan-1,2-dicarbonsäure-(2-ethylhexyl)-n-propylester, Cyclohexan-1,2-dicarbonsäure-n-nonyl-n-propylester, Cyclohexan-1,2-dicarbonsäureisononyl-n-propylester, Cyclohexan-1,2-dicarbonsäure-(2-propylheptyl)-n-propylester, Cyclohexan-1,2-dicarbonsäure-n-decyl-n-propylester, Cyclohexan-1,2-dicarbonsäureisodecyl-n-propylester, Cyclohexan-1,2-dicarbonsäure-n-undecyl-n-propylester, Cyclohexan-1,2-dicarbonsäureisoundecyl-n-propylester, Cyclohexan-1,2-dicarbonsäure-n-docecyl-n-propylester, Cyclohexan-1,2-dicarbonsäureisododecyl-n-propylester, Cyclohexan-1,2-dicarbonsäure-n-tridecyl-n-propylester, Cyclohexan-1,2-dicarbonsäureisotridecyl-n-propylester, Cyclohexan-1,2-dicarbonsäure-n-butylisopropylester, Cyclohexan-1,2-dicarbonsäure-tert-butylisopropylester, Cyclohexan-1,2-dicarbonsäureisobutylisopropylester, Cyclohexan-1,2-dicarbonsäureglycolisopropylester, Cyclohexan-1,2-dicarbonsäure-n-hexylisopropylester, Cyclohexan-1,2-dicarbonsäureisohexylisopropylester, Cyclohexan-1,2-dicarbonsäure-n-heptylisopropylester, Cyclohexan-1,2-dicarbonsäureisoheptylisopropylester, Cyclohexan-1,2-dicarbonsäure-n-octylisopropylester, Cyclohexan-1,2-dicarbonsäureisooctylisopropylester, Cyclohexan-1,2-dicarbonsäure-(2-ethylhexyl)isopropylester, Cyclohexan-1,2-dicarbonsäure-n-nonylisopropylester, Cyclohexan-1,2-dicarbonsäureisononylisopropylester, Cyclohexan-1,2-dicarbonsäure-(2-propylheptyl)isopropylester, Cyclohexan-1,2-dicarbonsäuren-decylisopropylester, Cyclohexan-1,2-dicarbonsäureisodecylisopropylester, Cyclohexan-1,2-dicarbonsäure-n-undecylisopropylester, Cyclohexan-1,2-dicarbonsäureisoundecylisopropylester, Cyclohexan-1,2-dicarbonsäure-n-docecylisopropylester, Cyclohexan-1,2-dicarbonsäureisododecylisopropylester, Cyclohexan-1,2-dicarbonsäure-n-tridecylisopropylester, Cyclohexan-1,2-dicarbonsäureisotridecylisopropylester, Cyclohexan-1,2-dicarbonsäure-tert-butyl-n-butylester, Cyclohexan-1,2-dicarbonsäureisobutyl-n-butylester, Cyclohexan-1,2-dicarbonsäureglycol-n-butylester, Cyclohexan-1,2-dicarbonsäure-n-hexyl-n-butylester, Cyclohexan-1,2-dicarbonsäureisohexyl-n-butylester, Cyclohexan-1,2-dicarbonsäure-n-heptyl-n-butylester, Cyclohexan-1,2-dicarbonsäureisoheptyl-n-butylester, Cyclohexan-1,2-dicarbonsäure-n-octyl-n-butylester, Cyclohexan-1,2-dicarbonsäureisooctyl-n-butylester, Cyclohexan-1,2-dicarbonsäure-(2-ethylhexyl)-n-butylester, Cyclohexan-1,2-dicarbonsäure-n-nonyl-n-butylester, Cyclohexan-1,2-dicarbonsäureisononyl-n-butylester, Cyclohexan-1,2-dicarbonsäure-(2-propylheptyl)-n-butylester, Cyclohexan-1,2-dicarbonsäure-n-decyl-n-butylester, Cyclohexan-1,2-dicarbonsäureisodecyl-n-butylester, Cyclohexan-1,2-dicarbonsäure-n-undecyl-n-butylester, Cyclohexan-1,2-dicarbonsäureisoundecyl-n-butylester, Cyclohexan-1,2-dicarbonsäure-n-docecyl-n-butylester, Cyclohexan-1,2-dicarbonsäureisododecyl-n-butylester, Cyclohexan-1,2-dicarbonsäure-n-tridecyl-n-butylester, Cyclohexan-1,2-dicarbonsäureisotridecyl-n-butylester, Cyclohexan-1,2-dicarbonsäureisobutyl-tert-butylester, Cyclohexan-1,2-dicarbonsäureglycol-tert-butylester, Cyclohexan-1,2-dicarbonsäure-n-hexyl-tert-butylester, Cyclohexan-1,2-dicarbonsäureisohexyl-tert-butylester, Cyclohexan-1,2-dicarbonsäure-n-heptyl-tert-butylester, Cyclohexan-1,2-dicarbonsäureisoheptyl-tert-butylester, Cyclohexan-1,2-dicarbonsäure-n-octyl-tert-butylester, Cyclohexan-1,2-dicarbonsäureisooctyl-tert-butylester, Cyclohexan-1,2-dicarbonsäure-(2-ethylhexyl)-tert-butylester, Cyclohexan-1,2-dicarbonsäure-n-nonyl-tert-butylester, Cyclohexan-1,2-dicarbonsäureisononyl-tert-butylester, Cyclohexan-1,2-dicarbonsäure-(2-propylheptyl)-tert-butylester, Cyclohexan-1,2-dicarbonsäure-n-decyl-tert-butylester, Cyclohexan-1,2-dicarbonsäureisodecyl-tert-butylester, Cyclohexan-1,2-dicarbonsäure-n-undecyl-tert-butylester, Cyclohexan-1,2-dicarbonsäureisoundecyl-tert-butylester, Cyclohexan-1,2-dicarbonsäure-n-docecyl-tert-butylester, Cyclohexan-1,2-dicarbonsäureisododecyl-tert-butylester, Cyclohexan-1,2-dicarbonsäure-n-tridecyl-tert-butylester, Cyclohexan-1,2-dicarbonsäureisotridecyl-tert-butylester, Cyclohexan-1,2-dicarbonsäureglycolisobutylester, Cyclohexan-1,2-dicarbonsäure-n-hexylisobutylester, Cyclohexan-1,2-dicarbonsäureisohexylisobutylester, Cyclohexan-1,2-dicarbonsäure-n-heptylisobutylester, Cyclohexan-1,2-dicarbonsäureisoheptylisobutylester, Cyclohexan-1,2-dicarbonsäure-n-octylisobutylester, Cyclohexan-1,2-dicarbonsäureisooctylisobutylester, Cyclohexan-1,2-dicarbonsäure-(2-ethylhexyl)isobutylester, Cyclohexan-1,2-dicarbonsäure-n-nonylisobutytester, Cyclohexan-1,2-dicarbonsäureisononylisobutylester, Cyclohexan-1,2-dicarbonsäure-(2-propylheptyl)isobutylester, Cyclohexan-1,2-dicarbonsäure-n-decylisobutylester, Cyclohexan-1,2-dicarbonsäureisodecylisobutylester, Cyclohexan-1,2-dicarbonsäure-n-undecylisobutylester, Cyclohexan-1,2-dicarbonsäureisoundecylisobutylester, Cyclohexan-1,2-dicarbonsäure-n-docecylisobutylester, Cyclohexan-1,2-dicarbonsäureisododecylisobutylester, Cyclohexan-1,2-dicarbonsäure-n-tridecylisobutylester, Cyclohexan-1,2-dicarbonsäureisotridecylisobutylester, Cyclohexan-1,2-dicarbonsäure-n-hexylglycolester, Cyclohexan-1,2-dicarbonsäureisohexylglycolester, Cyclohexan-1,2-dicarbonsäure-n-heptylglycolester, Cyclohexan-1,2-dicarbonsäureisoheptylglycolester, Cyclohexan-1,2-dicarbonsäure-n-octylglycolester, Cyclohexan-1,2-dicarbonsäureisooctylglycolester, Cyclohexan-1,2-dicarbonsäure-(2-ethylhexyl)glycolester, Cyclohexan-1,2-dicarbonsäure-n-nonylglycolester, Cyclohexan-1,2-dicarbonsäureisononylglycolester, Cyclohexan-1,2-dicarbonsäure-(2-propylheptyl)glycolester, Cyclohexan-1,2-dicarbonsäure-n-decylglycolester, Cyclohexan-1,2-dicarbonsäureisodecylglycolester, Cyclohexan-1,2-dicarbonsäure-n-undecylglycolester, Cyclohexan-1,2-dicarbonsäureisoundecylglycolester, Cyclohexan-1,2-dicarbonsäure-n-docecylglycolester, Cyclohexan-1,2-dicarbonsäureisododecylglycolester, Cyclohexan-1,2-dicarbonsäure-n-tridecylglycolester, Cyclohexan-1,2-dicarbonsäureisotridecylglycolester, Cyclohexan-1,2-dicarbonsäureisohexyl-n-hexylester, Cyclohexan-1,2-dicarbonsäure-n-heptyl-n-hexylester, Cyclohexan-1,2-dicarbonsäureisoheptyl-n-hexylester, Cyclohexan-1,2-dicarbonsäure-n-octyl-n-hexylester, Cyclohexan-1,2-dicarbonsäureisooctyl-n-hexylester, Cyclohexan-1,2-dicarbonsäure-(2-ethylhexyl)-n-hexylester, Cyclohexan-1,2-dicarbonsäure-n-nonyl-n-hexylester, Cyclohexan-1,2-dicarbonsäureisononyl-n-hexylester, Cyclohexan-1,2-dicarbonsäure-(2-propylheptyl)-n-hexylester, Cyclohexan-1,2-dicarbonsäure-n-decyl-n-hexylester, Cyclohexan-1,2-dicarbonsäureisodecyl-n-hexylester, Cyclohexan-1,2-dicarbonsäure-n-undecyl-n-hexylester, Cyclohexan-1,2-dicarbonsäureisoundecyl-n-hexylester, Cyclohexan-1,2-dicarbonsäure-n-docecyl-n-hexylester, Cyclohexan-1,2-dicarbonsäureisododecyl-n-hexylester, Cyclohexan-1,2-dicarbonsäure-n-tridecyl-n-hexylester, Cyclohexan-1,2-dicarbonsäureisotridecyl-n-hexylester, Cyclohexan-1,2-dicarbonsäure-n-heptylisohexylester, Cyclohexan-1,2-dicarbonsäureisoheptylisohexylester, Cyclohexan-1,2-dicarbonsäure-n-octylisohexylester, Cyclohexan-1,2-dicarbonsäureisooctylisohexylester, Cyclohexan-1,2-dicarbonsäure-(2-ethylhexyl)isohexylester, Cyclohexan-1,2-dicarbonsäure-n-nonylisohexylester, Cyclohexan-1,2-dicarbonsäureisononylisohexylester, Cyclohexan-1,2-dicarbonsäure-(2-propylheptyl)isohexylester, Cyclohexan-1,2-dicarbonsäure-n-decylisohexylester, Cyclohexan-1,2-dicarbonsäureisodecylisohexylester, Cyclohexan-1,2-dicarbonsäure-n-undecylisohexylester, Cyclohexan-1,2-dicarbonsäureisoundecylisohexylester, Cyclohexan-1,2-dicarbonsäure-n-docecylisohexylester, Cyclohexan-1,2-dicarbonsäureisododecylisohexylester, Cyclohexan-1,2-dicarbonsäure-n-tridecylisohexylester, Cyclohexan-1,2-dicarbonsäureisotridecylisohexylester, Cyclohexan-1,2-dicarbonsäureisoheptyl-n-heptylester, Cyclohexan-1,2-dicarbonsäure-n-octyl-n-heptylester, Cyclohexan-1,2-dicarbonsäureisooctyl-n-heptylester, Cyclohexan-1,2-dicarbonsäure-(2-ethylhexyl)-n-heptylester, Cyclohexan-1,2-dicarbonsäure-n-nonyl-n-heptylester, Cyclohexan-1,2-dicarbonsäureisononyl-n-heptylester, Cyclohexan-1,2-dicarbonsäure-(2-propylheptyl)-n-heptylester, Cyclohexan-1,2-dicarbonsäure-n-decyl-n-heptylester, Cyclohexan-1,2-dicarbonsäureisodecyl-n-heptylester, Cyclohexan-1,2-dicarbonsäure-n-undecyl-n-heptylester, Cyclohexan-1,2-dicarbonsäureisoundecyl-n-heptylester, Cyclohexan-1,2-dicarbonsäure-n-docecyl-n-heptylester, Cyclohexan-1,2-dicarbonsäureisododecyl-n-heptylester, Cyclohexan-1,2-dicarbonsäure-n-tridecyl-n-heptylester, Cyclohexan-1,2-dicarbonsäureisotridecyl-n-heptylester, Cyclohexan-1,2-dicarbonsäure-n-octylisoheptylester, Cyclohexan-1,2-dicarbonsäureisooctylisoheptylester, Cyclohexan-1,2-dicarbonsäure-(2-ethylhexyl)isoheptylester, Cyclohexan-1,2-dicarbonsäure-n-nonylisoheptylester, Cyclohexan-1,2-dicarbonsäureisononylisoheptylester, Cyclohexan-1,2-dicarbonsäure-(2-propylheptyl)isoheptylester, Cyclohexan-1,2-dicarbonsäuren-decylisoheptylester, Cyclohexan-1,2-dicarbonsäureisodecylisoheptylester, Cyclohexan-1,2-dicarbonsäure-n-undecylisoheptylester, Cyclohexan-1,2-dicarbonsäureisoundecylisoheptylester, Cyclohexan-1,2-dicarbonsäure-n-docecylisoheptylester, Cyclohexan-1,2-dicarbonsäureisododecylisoheptylester, Cyclohexan-1,2-dicarbonsäure-n-tridecylisoheptylester, Cyclohexan-1,2-dicarbonsäureisotridecylisoheptylester, Cyclohexan-1,2-dicarbonsäureisooctyl-n-octylester, Cyclohexan-1,2-dicarbonsäure-(2-ethylhexyl)-n-octylester, Cyclohexan-1,2-dicarbonsäure-n-nonyl-n-octylester, Cyclohexan-1,2-dicarbonsäureisononyl-n-octylester, Cyclohexan-1,2-dicarbonsäure-(2-propylheptyl)-n-octylester, Cyclohexan-1,2-dicarbonsäure-n-decyl-n-octylester, Cyclohexan-1,2-dicarbonsäureisodecyl-n-octylester, Cyclohexan-1,2-dicarbonsäure-n-undecyl-n-octylester, Cyclohexan-1,2-dicarbonsäureisoundecyl-n-octylester, Cyclohexan-1,2-dicarbonsäure-n-docecyl-n-octylester, Cyclohexan-1,2-dicarbonsäureisododecyl-n-octylester, Cyclohexan-1,2-dicarbonsäure-n-tridecyl-n-octylester, Cyclohexan-1,2-dicarbonsäureisotridecyl-n-octylester, Cyclohexan-1,2-dicarbonsäure-(2-ethylhexyl)isooctylester, Cyclohexan-1,2-dicarbonsäure-n-nonylisooctylester, Cyclohexan-1,2-dicarbonsäureisononylisooctylester, Cyclohexan-1,2-dicarbonsäure-(2-propylheptyl)isooctylester, Cyclohexan-1,2-dicarbonsäure-n-decylisooctylester, Cyclohexan-1,2-dicarbonsäureisodecylisooctylester, Cyclohexan-1,2-dicarbonsäure-n-undecylisooctylester, Cyclohexan-1,2-dicarbonsäureisoundecylisooctylester, Cyclohexan-1,2-dicarbonsäure-n-docecylisooctylester, Cyclohexan-1,2-dicarbonsäureisododecylisooctylester, Cyclohexan-1,2-dicarbonsäure-n-tridecylisooctylester, Cyclohexan-1,2-dicarbonsäureisotridecylisooctylester, Cyclohexan-1,2-dicarbonsäure-n-nonyl-(2-ethylhexyl)ester, Cyclohexan-1,2-dicarbonsäureisononyl-(2-ethylhexyl)ester, Cyclohexan-1,2-dicarbonsäure-(2-propylheptyl)-(2-ethylhexyl)ester, Cyclohexan-1,2-dicarbonsäure-n-decyl-(2-ethylhexyl)ester, Cyclohexan-1,2-dicarbonsäureisodecyl-(2-ethylhexyl)ester, Cyclohexan-1,2-dicarbonsäure-n-undecyl-(2-ethylhexyl)ester, Cyclohexan-1,2-dicarbonsäureisoundecyl-(2-ethylhexyl)ester, Cyclohexan-1,2-dicarbonsäure-n-docecyl-(2-ethylhexyl)ester, Cyclohexan-1,2-dicarbonsäureisododecyl-(2-ethylhexyl)ester, Cyclohexan-1,2-dicarbonsäure-n-tridecyl-(2-ethylhexyl)ester, Cyclohexan-1,2-dicarbonsäureisotridecyl-(2-ethylhexyl)ester, Cyclohexan-1,2-dicarbonsäureisononyl-n-nonylester, Cyclohexan-1,2-dicarbonsäure-(2-propylheptyl)-n-nonylester, Cyclohexan-1,2-dicarbonsäure-n-decyl-n-nonylester, Cyclohexan-1,2-dicarbonsäureisodecyl-n-nonylester, Cyclohexan-1,2-dicarbonsäure-n-undecyl-n-nonylester, Cyclohexan-1,2-dicarbonsäureisoundecyl-n-nonylester, Cyclohexan-1,2-dicarbonsäure-n-docecyl-n-nonylester, Cyclohexan-1,2-dicarbonsäureisododecyl-n-nonylester, Cyclohexan-1,2-dicarbonsäure-n-tridecyl-n-nonylester, Cyclohexan-1,2-dicarbonsäureisotridecyl-n-nonylester, Cyclohexan-1,2-dicarbonsäure-(2-propylheptyl)isononylester, Cyclohexan-1,2-dicarbonsäure-n-decylisononylester, Cyclohexan-1,2-dicarbonsäureisodecylisononylester, Cyclohexan-1,2-dicarbonsäure-n-undecylisononylester, Cyclohexan-1,2-dicarbonsäureisoundecylisononylester, Cyclohexan-1,2-dicarbonsäure-n-docecylisononylester, Cyclohexan-1,2-dicarbonsäureisododecylisononylester, Cyclohexan-1,2-dicarbonsäure-n-tridecylisononylester, Cyclohexan-1,2-dicarbonsäureisotridecylisononylester, Cyclohexan-1,2-dicarbonsäure-n-decyl-(2-propylheptyl)ester, Cyclohexan-1,2-dicarbonsäureisodecyl-(2-propylheptyl)ester, Cyclohexan-1,2-dicarbonsäure-n-undecyl-(2-propylheptyl)ester, Cyclohexan-1,2-dicarbonsäureisoundecyl-(2-propylheptyl)ester, Cyclohexan-1,2-dicarbonsäure-n-docecyl-(2-propylheptyl)ester, Cyclohexan-1,2-dicarbonsäureisododecyl-(2-propylheptyl)ester, Cyclohexan-1,2-dicarbonsäure-n-tridecyl-(2-propylheptyl)ester, Cyclohexan-1,2-dicarbonsäureisotridecyl-(2-propylheptyl)ester, Cyclohexan-1,2-dicarbonsäureisodecyl-n-decylester, Cyclohexan-1,2-dicarbonsäure-n-undecyl-n-decylester, Cyclohexan-1,2-dicarbonsäureisoundecyl-n-decylester, Cyclohexan-1,2-dicarbonsäure-n-docecyl-n-decylester, Cyclohexan-1,2-dicarbonsäureisododecyl-n-decylester, Cyclohexan-1,2-dicarbonsäure-n-tridecyl-n-decylester, Cyclohexan-1,2-dicarbonsäureisotridecyl-n-decylester, Cyclohexan-1,2-dicarbonsäure-n-undecylisodecylester, Cyclohexan-1,2-dicarbonsäureisoundecylisodecylester, Cyclohexan-1,2-dicarbonsäure-n-docecylisodecylester, Cyclohexan-1,2-dicarbonsäureisododecylisodecylester, Cyclohexan-1,2-dicarbonsäure-n-tridecylisodecylester, Cyclohexan-1,2-dicarbonsäureisotridecylisodecylester, Cyclohexan-1,2-dicarbonsäureisoundecyl-n-undecylester, Cyclohexan-1,2-dicarbonsäure-n-docecyl-n-undecylester, Cyclohexan-1,2-dicarbonsäureisododecyl-n-undecylester, Cyclohexan-1,2-dicarbonsäure-n-tridecyl-n-undecylester, Cyclohexan-1,2-dicarbonsäureisotridecyl-n-undecylester, Cyclohexan-1,2-dicarbonsäure-n-docecylisoundecylester, Cyclohexan-1,2-dicarbonsäureisododecylisoundecylester, Cyclohexan-1,2-dicarbonsäure-n-tridecylisoundecylester, Cyclohexan-1,2-dicarbonsäureisotridecylisoundecylester, Cyclohexan-1,2-dicarbonsäureisododecyl-n-dodecylester, Cyclohexan-1,2-dicarbonsäuren-tridecyl-n-dodecylester, Cyclohexan-1,2-dicarbonsäureisotridecyl-n-dodecylester, Cyclohexan-1,2-dicarbonsäure-n-tridecylisododecylester, Cyclohexan-1,2-dicarbonsäureisotridecylisododecylester, Cyclohexan-1,2-dicarbonsäureisotridecyl-n-tridecylester, Cyclohexan-1,2-dicarbonsäuremethylcyclohexylester, Cyclohexan-1,2-dicarbonsäureethylcyclohexylester, Cyclohexan-1,2-dicarbonsäure-n-propylcyclohexylester, Cyclohexan-1,2-dicarbonsäureisopropylcyclohexylester, Cyclohexan-1,2-dicarbonsäure-n-butylcyclohexylester, Cyclohexan-1,2-dicarbonsäure-tert-butylcyclohexylester, Cyclohexan-1,2-dicarbonsäureisobutylcyclohexylester, Cyclohexan-1,2-dicarbonsäureglycolcyclohexylester, Cyclohexan-1,2-dicarbonsäure-n-hexylcyclohexylester, Cyclohexan-1,2-dicarbonsäureisohexylcyclohexylester, Cyclohexan-1,2-dicarbonsäure-n-heptylcyclohexylester, Cyclohexan-1,2-dicarbonsäureisoheptylcyclohexylester, Cyclohexan-1,2-dicarbonsäure-n-octylcyclohexylester, Cyclohexan-1,2-dicarbonsäureisooctylcyclohexylester, Cyclohexan-1,2-dicarbonsäure-(2-ethylhexyl)cyclohexylester, Cyclohexan-1,2-dicarbonsäure-n-nonylcyclohexylester, Cyclohexan-1,2-dicarbonsäureisononylcyclohexylester, Cyclohexan-1,2-dicarbonsäure-(2-propylheptyl)cyclohexylester, Cyclohexan-1,2-dicarbonsäuren-decylcyclohexylester, Cyclohexan-1,2-dicarbonsäureisodecylcyclohexylester, Cyclohexan-1,2-dicarbonsäure-n-undecylcyclohexylester, Cyclohexan-1,2-dicarbonsäureisoundecylcyclohexylester, Cyclohexan-1,2-dicarbonsäure-n-docecylcyclohexylester, Cyclohexan-1,2-dicarbonsäureisododecylcyclohexylester, Cyclohexan-1,2-dicarbonsäure-n-tridecylcyclohexylester, Cyclohexan-1,2-dicarbonsäureisotridecylcyclohexylester, Cyclohexan-1,2-dicarbonsäuremethylisopentylester, Cyclohexan-1,2-dicarbonsäureethylisopentylester, Cyclohexan-1,2-dicarbonsäure-n-propylisopentylester, Cyclohexan-1,2-dicarbonsäureisopropylisopentylester, Cyclohexan-1,2-dicarbonsäure-n-butylisopentylester, Cyclohexan-1,2-dicarbonsäure-tert-butylisopentylester, Cyclohexan-1,2-dicarbonsäureisobutylisopentylester, Cyclohexan-1,2-dicarbonsäureglycolisopentylester, Cyclohexan-1,2-dicarbonsäure-n-hexylisopentylester, Cyclohexan-1,2-dicarbonsäureisohexylisopentylester, Cyclohexan-1,2-dicarbonsäure-n-heptylisopentylester, Cyclohexan-1,2-dicarbonsäureisoheptylisopentylester, Cyclohexan-1,2-dicarbonsäure-n-octylisopentylester, Cyclohexan-1,2-dicarbonsäureisooctylisopentylester, Cyclohexan-1,2-dicarbonsäure-(2-ethylhexyl)isopentylester, Cyclohexan-1,2-dicarbonsäure-n-nonylisopentylester, Cyclohexan-1,2-dicarbonsäureisononylisopentylester, Cyclohexan-1,2-dicarbonsäure-(2-propylheptyl)isopentylester, Cyclohexan-1,2-dicarbonsäuren-decylisopentylester, Cyclohexan-1,2-dicarbonsäureisodecylisopentylester, Cyclohexan-1,2-dicarbonsäure-n-undecylisopentylester, Cyclohexan-1,2-dicarbonsäureisoundecylisopentylester, Cyclohexan-1,2-dicarbonsäure-n-docecylisopentylester, Cyclohexan-1,2-dicarbonsäureisododecylisopentylester, Cyclohexan-1,2-dicarbonsäure-n-tridecylisopentylester, Cyclohexan-1,2-dicarbonsäureisotridecylisopentylester, Cyclohexan-1,2-dicarbonsäuremethyl-n-pentylester, Cyclohexan-1,2-dicarbonsäureethyl-n-pentylester, Cyclohexan-1,2-dicarbonsäure-n-propyl-n-pentylester, Cyclohexan-1,2-dicarbonsäureisopropyl-n-pentylester, Cyclohexan-1,2-dicarbonsäure-n-butyl-n-pentylester, Cyclohexan-1,2-dicarbonsäure-tert-butyl-n-pentylester, Cyclohexan-1,2-dicarbonsäureisobutyl-n-pentylester, Cyclohexan-1,2-dicarbonsäureglycol-n-pentylester, Cyclohexan-1,2-dicarbonsäure-n-hexyl-n-pentylester, Cyclohexan-1,2-dicarbonsäureisohexyl-n-pentylester, Cyclohexan-1,2-dicarbonsäure-n-heptyl-n-pentylester, Cyclohexan-1,2-dicarbonsäureisoheptyl-n-pentylester, Cyclohexan-1,2-dicarbonsäure-n-octyl-n-pentylester, Cyclohexan-1,2-dicarbonsäureisooctyl-n-pentylester, Cyclohexan-1,2-dicarbonsäure-(2-ethylhexyl)-n-pentylester, Cyclohexan-1,2-dicarbonsäure-n-nonyl-n-pentylester, Cyclohexan-1,2-dicarbonsäureisononyl-n-pentylester, Cyclohexan-1,2-dicarbonsäure-(2-propylheptyl)-n-pentylester, Cyclohexan-1,2-dicarbonsäure-n-decyl-n-pentylester, Cyclohexan-1,2-dicarbonsäureisodecyl-n-pentylester, Cyclohexan-1,2-dicarbonsäure-n-undecyl-n-pentylester, Cyclohexan-1,2-dicarbonsäureisoundecyl-n-pentylester, Cyclohexan-1,2-dicarbonsäure-n-docecyl-n-pentylester, Cyclohexan-1,2-dicarbonsäureisododecyl-n-pentylester, Cyclohexan-1,2-dicarbonsäure-n-tridecyl-n-pentylester, Cyclohexan-1,2-dicarbonsäureisotridecyl-n-pentylester;
gemischte Ester der Cyclohexan-1,3-dicarbonsäure mit C₁ bis C₁₃-Alkoholen, wie z.B. Cyclohexan-1,3-dicarbonsäureethylmethylester, Cyclohexan-1,3-dicarbonsäure-n-propylmethylester, Cyclohexan-1,3-dicarbonsäureisopropylmethylester, Cyclohexan-1,3-dicarbonsäure-n-butylmethylester, Cyclohexan-1,3-dicarbonsäure-tert-butylmethylester, Cyclohexan-1,3-dicarbonsäureisobutylmethylester, Cyclohexan-1,3-dicarbonsäureglycolmethylester, Cyclohexan-1,3-dicarbonsäure-n-hexylmethylester, Cyclohexan-1,3-dicarbonsäureisohexylmethylester, Cyclohexan-1,3-dicarbonsäure-n-heptylmethylester, Cyclohexan-1,3-dicarbonsäureisoheptylmethylester, Cyclohexan-1,3-dicarbonsäure-n-octylmethylester, Cyclohexan-1,3-dicarbonsäureisooctylmethylester, Cyclohexan-1,3-dicarbonsäure-(2-ethylhexyl)methylester, Cyclohexan-1,3-dicarbonsäure-n-nonylmethylester, Cyclohexan-1,3-dicarbonsäureisononylmethylester, Cyclohexan-1,3-dicarbonsäure-(2-propylheptyl)methylester, Cyclohexan-1,3-dicarbonsäure-n-decylmethylester, Cyclohexan-1,3-dicarbonsäureisodecylmethylester, Cyclohexan-1,3-dicarbonsäure-n-undecylmethylester, Cyclohexan-1,3-dicarbonsäureisoundecylmethylester, Cyclohexan-1,3-dicarbonsäure-n-docecylmethylester, Cyclohexan-1,3-dicarbonsäureisododecylmethylester, Cyclohexan-1,3-dicarbonsäure-n-tridecylmethylester, Cyclohexan-1,3-dicarbonsäureisotridecylmethylester, Cyclohexan-1,3-dicarbonsäure-n-propylethylester, Cyclohexan-1,3-dicarbonsäureisopropylethylester, Cyclohexan-1,3-dicarbonsäure-n-butylethylester, Cyclohexan-1,3-dicarbonsäure-tert-butylethylester, Cyclohexan-1,3-dicarbonsäureisobutylethylester, Cyclohexan-1,3-dicarbonsäureglycolethylester, Cyclohexan-1,3-dicarbonsäure-n-hexylethylester, Cyclohexan-1,3-dicarbonsäureisohexylethylester, Cyclohexan-1,3-dicarbonsäure-n-heptylethylester, Cyclohexan-1,3-dicarbonsäureisoheptylethylester, Cyclohexan-1,3-dicarbonsäure-n-octylethylester, Cyclohexan-1,3-dicarbonsäureisooctylethylester, Cyclohexan-1,3-dicarbonsäure-(2-ethylhexyl)ethylester, Cyclohexan-1,3-dicarbonsäure-n-nonylethylester, Cyclohexan-1,3-dicarbonsäureisononylethylester, Cyclohexan-1,3-dicarbonsäure-(2-propylheptyl)ethylester, Cyclohexan-1,3-dicarbonsäure-n-decylethylester, Cyclohexan-1,3-dicarbonsäureisodecylethylester, Cyclohexan-1,3-dicarbonsäure-n-undecylethylester, Cyclohexan-1,3-dicarbonsäureisoundecylethylester, Cyclohexan-1,3-dicarbonsäure-n-docecylethylester, Cyclohexan-1,3-dicarbonsäureisododecylethylester, Cyclohexan-1,3-dicarbonsäure-n-tridecylethylester, Cyclohexan-1,3-dicarbonsäureisotridecylethylester, Cyclohexan-1,3-dicarbonsäureisopropyl-n-propylester, Cyclohexan-1,3-dicarbonsäure-n-butyl-n-propylester, Cyclohexan-1,3-dicarbonsäure-tert-butyl-n-propylester, Cyclohexan-1,3-dicarbonsäureisobutyl-n-propylester, Cyclohexan-1,3-dicarbonsäureglycol-n-propylester, Cyclohexan-1,3-dicarbonsäure-n-hexyl-n-propylester, Cyclohexan-1,3-dicarbonsäureisohexyl-n-propylester, Cyclohexan-1,3-dicarbonsäure-n-heptyl-n-propylester, Cyclohexan-1,3-dicarbonsäureisoheptyl-n-propylester, Cyclohexan-1,3-dicarbonsäure-n-octyl-n-propylester, Cyclohexan-1,3-dicarbonsäureisooctyl-n-propylester, Cyclohexan-1,3-dicarbonsäure-(2-ethylhexyl)-n-propylester, Cyclohexan-1,3-dicarbonsäure-n-nonyl-n-propylester, Cyclohexan-1,3-dicarbonsäureisononyl-n-propylester, Cyclohexan-1,3-dicarbonsäure-(2-propylheptyl)-n-propylester, Cyclohexan-1,3-dicarbonsäure-n-decyl-n-propylester, Cyclohexan-1,3-dicarbonsäureisodecyl-n-propylester, Cyclohexan-1,3-dicarbonsäure-n-undecyl-n-propylester, Cyclohexan-1,3-dicarbonsäureisoundecyl-n-propylester, Cyclohexan-1,3-dicarbonsäure-n-docecyl-n-propylester, Cyclohexan-1,3-dicarbonsäureisododecyl-n-propylester, Cyclohexan-1,3-dicarbonsäure-n-tridecyl-n-propylester, Cyclohexan-1,3-dicarbonsäureisotridecyl-n-propylester, Cyclohexan-1,3-dicarbonsäure-n-butylisopropylester, Cyclohexan-1,3-dicarbonsäure-tert-butylisopropylester, Cyclohexan-1,3-dicarbonsäureisobutylisopropylester, Cyclohexan-1,3-dicarbonsäureglycolisopropylester, Cyclohexan-1,3-dicarbonsäure-n-hexylisopropylester, Cyclohexan-1,3-dicarbonsäureisohexylisopropylester, Cyclohexan-1,3-dicarbonsäure-n-heptylisopropylester, Cyclohexan-1,3-dicarbonsäureisoheptylisopropylester, Cyclohexan-1,3-dicarbonsäure-n-octylisopropylester, Cyclohexan-1,3-dicarbonsäureisooctylisopropylester, Cyclohexan-1,3-dicarbonsäure-(2-ethylhexyl)isopropylester, Cyclohexan-1,3-dicarbonsäure-n-nonylisopropylester, Cyclohexan-1,3-dicarbonsäureisononylisopropylester, Cyclohexan-1,3-dicarbonsäure-(2-propylheptyl)isopropylester, Cyctohexan-1,3-dicarbonsäuren-decylisopropylester, Cyclohexan-1,3-dicarbonsäureisodecylisopropylester, Cyclohexan-1,3-dicarbonsäure-n-undecylisopropylester, Cyclohexan-1,3-dicarbonsäureisoundecylisopropylester, Cyclohexan-1,3-dicarbonsäure-n-docecylisopropylester, Cyclohexan-1,3-dicarbonsäureisododecylisopropylester, Cyclohexan-1,3-dicarbonsäure-n-tridecylisopropylester, Cyclohexan-1,3-dicarbonsäureisotridecylisopropylester, Cyclohexan-1,3-dicarbonsäure-tert-butyl-n-butylester, Cyclohexan-1,3-dicarbonsäureisobutyl-n-butylester, Cyclohexan-1,3-dicarbonsäureglycol-n-butylester, Cyclohexan-1,3-dicarbonsäure-n-hexyl-n-butylester, Cyclohexan-1,3-dicarbonsäureisohexyl-n-butylester, Cyclohexan-1,3-dicarbonsäure-n-heptyl-n-butylester, Cyclohexan-1,3-dicarbonsäureisoheptyl-n-butylester, Cyclohexan-1,3-dicarbonsäure-n-octyl-n-butylester, Cyclohexan-1,3-dicarbonsäureisooctyl-n-butylester, Cyclohexan-1,3-dicarbonsäure-(2-ethylhexyl)-n-butylester, Cyclohexan-1,3-dicarbonsäure-n-nonyl-n-butylester, Cyclohexan-1,3-dicarbonsäureisononyl-n-butylester, Cyclohexan-1,3-dicarbonsäure-(2-propylheptyl)-n-butylester, Cyclohexan-1,3-dicarbonsäure-n-decyl-n-butylester, Cyclohexan-1,3-dicarbonsäureisodecyl-n-butylester, Cyclohexan-1,3-dicarbonsäure-n-undecyl-n-butylester, Cyclohexan-1,3-dicarbonsäureisoundecyl-n-butylester, Cyclohexan-1,3-dicarbonsäure-n-docecyl-n-butylester, Cyclohexan-1,3-dicarbonsäureisododecyl-n-butylester, Cyclohexan-1,3-dicarbonsäure-n-tridecyl-n-butylester, Cyclohexan-1,3-dicarbonsäureisotridecyl-n-butylester, Cyclohexan-1,3-dicarbonsäureisobutyl-tert-butylester, Cyclohexan-1,3-dicarbonsäureglycol-tert-butylester, Cyclohexan-1,3-dicarbonsäure-n-hexyl-tert-butylester, Cyclohexan-1,3-dicarbonsäureisohexyl-tert-butylester, Cyclohexan-1,3-dicarbonsäure-n-heptyl-tert-butylester, Cyclohexan-1,3-dicarbonsäureisoheptyl-tert-butylester, Cyclohexan-1,3-dicarbonsäure-n-octyl-tert-butylester, Cyclohexan-1,3-dicarbonsäureisooctyl-tert-butylester, Cyclohexan-1,3-dicarbonsäure-(2-ethylhexyl)-tert-butylester, Cyclohexan-1,3-dicarbonsäure-n-nonyl-tert-butylester, Cyclohexan-1,3-dicarbonsäureisononyl-tert-butylester, Cyclohexan-1,3-dicarbonsäure-(2-propylheptyl)-tert-butylester, Cyclohexan-1,3-dicarbonsäure-n-decyl-tert-butylester, Cyclohexan-1,3-dicarbonsäureisodecyl-tert-butylester, Cyclohexan-1,3-dicarbonsäure-n-undecyl-tert-butylester, Cyclohexan-1,3-dicarbonsäureisoundecyl-tert-butylester, Cyclohexan-1,3-dicarbonsäure-n-docecyl-tert-butylester, Cyclohexan-1,3-dicarbonsäureisododecyl-tert-butylester, Cyclohexan-1,3-dicarbonsäure-n-tridecyl-tert-butylester, Cyclohexan-1,3-dicarbonsäureisotridecyl-tert-butylester, Cyclohexan-1,3-dicarbonsäureglycolisobutylester, Cyclohexan-1,3-dicarbonsäure-n-hexylisobutylester, Cyclohexan-1,3-dicarbonsäureisohexylisobutylester, Cyclohexan-1,3-dicarbonsäure-n-heptylisobutylester, Cyclohexan-1,3-dicarbonsäureisoheptylisobutylester, Cyclohexan-1,3-dicarbonsäure-n-octylisobutylester, Cyclohexan-1,3-dicarbonsäureisooctylisobutylester, Cyclohexan-1,3-dicarbonsäure-(2-ethylhexyl)isobutylester, Cyclohexan-1,3-dicarbonsäure-n-nonylisobutylester, Cyclohexan-1,3-dicarbonsäureisononylisobutylester, Cyclohexan-1,3-dicarbonsäure-(2-propylheptyl)isobutylester, Cyclohexan-1,3-dicarbonsäure-n-decylisobutylester, Cyclohexan-1,3-dicarbonsäureisodecylisobutylester, Cyclohexan-1,3-dicarbonsäure-n-undecylisobutylester, Cyclohexan-1,3-dicarbonsäureisoundecylisobutylester, Cyclohexan-1,3-dicarbonsäure-n-docecylisobutylester, Cyclohexan-1,3-dicarbonsäureisododecylisobutylester, Cyclohexan-1,3-dicarbonsäure-n-tridecylisobutylester, Cyclohexan-1,3-dicarbonsäureisotridecylisobutylester, Cyclohexan-1,3-dicarbonsäure-n-hexylglycolester, Cyclohexan-1,3-dicarbonsäureisohexylglycolester, Cyclohexan-1,3-dicarbonsäure-n-heptylglycolester, Cyclohexan-1,3-dicarbonsäureisoheptylglycolester, Cyclohexan-1,3-dicarbonsäure-n-octylglycolester, Cyclohexan-1,3-dicarbonsäureisooctylglycolester, Cyclohexan-1,3-dicarbonsäure-(2-ethylhexyl)glycolester, Cyclohexan-1,3-dicarbonsäure-n-nonylglycolester, Cyclohexan-1,3-dicarbonsäureisononylglycolester, Cyclohexan-1,3-dicarbonsäure-(2-propylheptyl)glycolester, Cyclohexan-1,3-dicarbonsäure-n-decylglycolester, Cyclohexan-1,3-dicarbonsäureisodecylglycolester, Cyclohexan-1,3-dicarbonsäure-n-undecylglycolester, Cyclohexan-1,3-dicarbonsäureisoundecylglycolester, Cyclohexan-1,3-dicarbonsäure-n-docecylglycolester, Cyclohexan-1,3-dicarbonsäureisododecylglycolester, Cyclohexan-1,3-dicarbonsäure-n-tridecylglycolester, Cyclohexan-1,3-dicarbonsäureisotridecylglycolester, Cyclohexan-1,3-dicarbonsäureisohexyl-n-hexylester, Cyclohexan-1,3-dicarbonsäure-n-heptyl-n-hexylester, Cyclohexan-1,3-dicarbonsäureisoheptyl-n-hexylester, Cyclohexan-1,3-dicarbonsäure-n-octyl-n-hexylester, Cyclohexan-1,3-dicarbonsäureisooctyl-n-hexylester, Cyclohexan-1,3-dicarbonsäure-(2-ethylhexyl)-n-hexylester, Cyclohexan-1,3-dicarbonsäure-n-nonyl-n-hexylester, Cyclohexan-1,3-dicarbonsäureisononyl-n-hexylester, Cyclohexan-1,3-dicarbonsäure-(2-propylheptyl)-n-hexylester, Cyclohexan-1,3-dicarbonsäure-n-decyl-n-hexylester, Cyclohexan-1,3-dicarbonsäureisodecyl-n-hexylester, Cyclohexan-1,3-dicarbonsäure-n-undecyl-n-hexylester, Cyclohexan-1,3-dicarbonsäureisoundecyl-n-hexylester, Cyclohexan-1,3-dicarbonsäure-n-docecyl-n-hexylester, Cyclohexan-1,3-dicarbonsäureisododecyl-n-hexylester, Cyclohexan-1,3-dicarbonsäure-n-tridecyl-n-hexylester, Cyclohexan-1,3-dicarbonsäureisotridecyl-n-hexylester, Cyclohexan-1,3-dicarbonsäure-n-heptylisohexylester, Cyclohexan-1,3-dicarbonsäureisoheptylisohexylester, Cyclohexan-1,3-dicarbonsäure-n-octylisohexylester, Cyclohexan-1,3-dicarbonsäureisooctylisohexylester, Cyclohexan-1,3-dicarbonsäure-(2-ethylhexyl)isohexylester, Cyclohexan-1,3-dicarbonsäure-n-nonylisohexylester, Cyclohexan-1,3-dicarbonsäureisononylisohexylester, Cyclohexan-1,3-dicarbonsäure-(2-propylheptyl)isohexylester, Cyclohexan-1,3-dicarbonsäure-n-decylisohexylester, Cyclohexan-1,3-dicarbonsäureisodecylisohexylester, Cyclohexan-1,3-dicarbonsäure-n-undecylisohexylester, Cyclohexan-1,3-dicarbonsäureisoundecylisohexylester, Cyclohexan-1,3-dicarbonsäure-n-docecylisohexylester, Cyclohexan-1,3-dicarbonsäureisododecylisohexylester, Cyclohexan-1,3-dicarbonsäure-n-tridecylisohexylester, Cyclohexan-1,3-dicarbonsäureisotridecylisohexylester, Cyclohexan-1,3-dicarbonsäureisoheptyl-n-heptylester, Cyclohexan-1,3-dicarbonsäure-n-octyl-n-heptylester, Cyclohexan-1,3-dicarbonsäureisooctyl-n-heptylester, Cyclohexan-1,3-dicarbonsäure-(2-ethylhexyl)-n-heptylester, Cyclohexan-1,3-dicarbonsäure-n-nonyl-n-heptylester, Cyclohexan-1,3-dicarbonsäureisononyl-n-heptylester, Cyclohexan-1,3-dicarbonsäure-(2-propylheptyl)-n-heptylester, Cyclohexan-1,3-dicarbonsäure-n-decyl-n-heptylester, Cyclohexan-1,3-dicarbonsäureisodecyl-n-heptylester, Cyclohexan-1,3-dicarbonsäure-n-undecyl-n-heptylester, Cyclohexan-1,3-dicarbonsäureisoundecyl-n-heptylester, Cyclohexan-1,3-dicarbonsäure-n-docecyl-n-heptylester, Cyclohexan-1,3-dicarbonsäureisododecyl-n-heptylester, Cyclohexan-1,3-dicarbonsäure-n-tridecyl-n-heptylester, Cyclohexan-1,3-dicarbonsäureisotridecyl-n-heptylester, Cyclohexan-1,3-dicarbonsäure-n-octylisoheptylester, Cyclohexan-1,3-dicarbonsäureisooctylisoheptylester, Cyclohexan-1,3-dicarbonsäure-(2-ethylhexyl)isoheptylester, Cyclohexan-1,3-dicarbonsäure-n-nonylisoheptylester, Cyclohexan-1,3-dicarbonsäureisononylisoheptylester, Cyclohexan-1,3-dicarbonsäure-(2-propylheptyl)isoheptylester, Cyclohexan-1,3-dicarbonsäuren-decylisoheptylester, Cyclohexan-1,3-dicarbonsäureisodecylisoheptylester, Cyclohexan-1,3-dicarbonsäure-n-undecylisoheptylester, Cyclohexan-1,3-dicarbonsäureisoundecylisoheptylester, Cyclohexan-1,3-dicarbonsäure-n-docecylisoheptylester, Cyclohexan-1,3-dicarbonsäureisododecylisoheptylester, Cyclohexan-1,3-dicarbonsäure-n-tridecylisoheptylester, Cyclohexan-1,3-dicarbonsäureisotridecylisoheptylester, Cyclohexan-1,3-dicarbonsäureisooctyl-n-octylester, Cyclohexan-1,3-dicarbonsäure-(2-ethylhexyl)-n-octylester, Cyclohexan-1,3-dicarbonsäure-n-nonyl-n-octylester, Cyclohexan-1,3-dicarbonsäureisononyl-n-octylester, Cyclohexan-1,3-dicarbonsäure-(2-propylheptyl)-n-octylester, Cyclohexan-1,3-dicarbonsäure-n-decyl-n-octylester, Cyclohexan-1,3-dicarbonsäureisodecyl-n-octylester, Cyclohexan-1,3-dicarbonsäure-n-undecyl-n-octylester, Cyclohexan-1,3-dicarbonsäureisoundecyl-n-octylester, Cyclohexan-1,3-dicarbonsäure-n-docecyl-n-octylester, Cyclohexan-1,3-dicarbonsäureisododecyl-n-octylester, Cyclohexan-1,3-dicarbonsäure-n-tridecyl-n-octylester, Cyclohexan-1,3-dicarbonsäureisotridecyl-n-octylester, Cyclohexan-1,3-dicarbonsäure-(2-ethylhexyl)isooctylester, Cyclohexan-1,3-dicarbonsäure-n-nonylisooctylester, Cyclohexan-1,3-dicarbonsäureisononylisooctylester, Cyclohexan-1,3-dicarbonsäure-(2-propylheptyl)isooctylester, Cyclohexan-1,3-dicarbonsäure-n-decylisooctylester, Cyclohexan-1,3-dicarbonsäureisodecylisooctylester, Cyclohexan-1,3-dicarbonsäure-n-undecylisooctylester, Cyclohexan-1,3-dicarbonsäureisoundecylisooctylester, Cyclohexan-1,3-dicarbonsäure-n-docecylisooctylester, Cyclohexan-1,3-dicarbonsäureisododecylisooctylester, Cyclohexan-1,3-dicarbonsäure-n-tridecylisooctylester, Cyclohexan-1,3-dicarbonsäureisotridecylisooctylester, Cyclohexan-1,3-dicarbonsäure-n-nonyl-(2-ethylhexyl)ester, Cyclohexan-1,3-dicarbonsäureisononyl-(2-ethylhexyl)ester, Cyclohexan-1,3-dicarbonsäure-(2-propylheptyl)-(2-ethylhexyl)ester, Cyclohexan-1,3-dicarbonsäure-n-decyl-(2-ethylhexyl)ester, Cyclohexan-1,3-dicarbonsäureisodecyl-(2-ethylhexyl)ester, Cyclohexan-1,3-dicarbonsäure-n-undecyl-(2-ethylhexyl)ester, Cyclohexan-1,3-dicarbonsäureisoundecyl-(2-ethylhexyl)ester, Cyclohexan-1,3-dicarbonsäure-n-docecyl-(2-ethylhexyl)ester, Cyclohexan-1,3-dicarbonsäureisododecyl-(2-ethylhexyl)ester, Cyclohexan-1,3-dicarbonsäure-n-tridecyl-(2-ethylhexyl)ester, Cyclohexan-1,3-dicarbonsäureisotridecyl-(2-ethylhexyl)ester, Cyclohexan-1,3-dicarbonsäureisononyl-n-nonylester, Cyclohexan-1,3-dicarbonsäure-(2-propylheptyl)-n-nonylester, Cyclohexan-1,3-dicarbonsäure-n-decyl-n-nonylester, Cyclohexan-1,3-dicarbonsäureisodecyl-n-nonylester, Cyclohexan-1,3-dicarbonsäure-n-undecyl-n-nonylester, Cyclohexan-1,3-dicarbonsäureisoundecyl-n-nonylester, Cyclohexan-1,3-dicarbonsäure-n-docecyl-n-nonylester, Cyclohexan-1,3-dicarbonsäureisododecyl-n-nonylester, Cyclohexan-1,3-dicarbonsäure-n-tridecyl-n-nonylester, Cyclohexan-1,3-dicarbonsäureisotridecyl-n-nonylester, Cyclohexan-1,3-dicarbonsäure-(2-propylheptyl)isononylester, Cyclohexan-1,3-dicarbonsäure-n-decylisononylester, Cyclohexan-1,3-dicarbonsäureisodecylisononylester, Cyclohexan-1,3-dicarbonsäure-n-undecylisononylester, Cyclohexan-1,3-dicarbonsäureisoundecylisononylester, Cyclohexan-1,3-dicarbonsäure-n-docecylisononylester, Cyclohexan-1,3-dicarbonsäureisododecylisononylester, Cyclohexan-1,3-dicarbonsäure-n-tridecylisononylester, Cyclohexan-1,3-dicarbonsäureisotridecylisononylester, Cyclohexan-1,3-dicarbonsäure-n-decyl-(2-propylheptyl)ester, Cyclohexan-1,3-dicarbonsäureisodecyl-(2-propylheptyl)ester, Cyclohexan-1,3-dicarbonsäure-n-undecyl-(2-propylheptyl)ester, Cyclohexan-1,3-dicarbonsäureisoundecyl-(2-propylheptyl)ester, Cyclohexan-1,3-dicarbonsäure-n-docecyl-(2-propylheptyl)ester, Cyclohexan-1,3-dicarbonsäureisododecyl-(2-propylheptyl)ester, Cyclohexan-1,3-dicarbonsäure-n-tridecyl-(2-propylheptyl)ester, Cyclohexan-1,3-dicarbonsäureisotridecyl-(2-propylheptyl)ester, Cyclohexan-1,3-dicarbonsäureisodecyl-n-decylester, Cyclohexan-1,3-dicarbonsäure-n-undecyl-n-decylester, Cyclohexan-1,3-dicarbonsäureisoundecyl-n-decylester, Cyclohexan-1,3-dicarbonsäure-n-docecyl-n-decylester, Cyclohexan-1,3-dicarbonsäureisododecyl-n-decylester, Cyclohexan-1,3-dicarbonsäure-n-tridecyl-n-decylester, Cyclohexan-1,3-dicarbonsäureisotridecyl-n-decylester, Cyclohexan-1,3-dicarbonsäure-n-undecylisodecylester, Cyclohexan-1,3-dicarbonsäureisoundecylisodecylester, Cyclohexan-1,3-dicarbonsäure-n-docecylisodecylester, Cyclohexan-1,3-dicarbonsäureisododecylisodecylester, Cyclohexan-1,3-dicarbonsäure-n-tridecylisodecylester, Cyclohexan-1,3-dicarbonsäureisotridecylisodecylester, Cyclohexan-1,3-dicarbonsäureisoundecyl-n-undecylester, Cyclohexan-1,3-dicarbonsäure-n-docecyl-n-undecylester, Cyclohexan-1,3-dicarbonsäureisododecyl-n-undecylester, Cyclohexan-1,3-dicarbonsäure-n-tridecyl-n-undecylester, Cyclohexan-1,3-dicarbonsäureisotridecyl-n-undecylester, Cyclohexan-1,3-dicarbonsäure-n-docecylisoundecylester, Cyclohexan-1,3-dicarbonsäureisododecylisoundecylester, Cyclohexan-1,3-dicarbonsäure-n-tridecylisoundecylester, Cyclohexan-1,3-dicarbonsäureisotridecylisoundecylester, Cyclohexan-1,3-dicarbonsäureisododecyl-n-dodecylester, Cyclohexan-1,3-dicarbonsäuren-tridecyl-n-dodecylester, Cyclohexan-1,3-dicarbonsäureisotridecyl-n-dodecylester, Cyclohexan-1,3-dicarbonsäure-n-tridecylisododecylester, Cyclohexan-1,3-dicarbonsäureisotridecylisododecylester, Cyclohexan-1,3-dicarbonsäureisotridecyl-n-tridecylester, Cyclohexan-1,3-dicarbonsäuremethylcyclohexylester, Cyclohexan-1,3-dicarbonsäureethylcyclohexylester, Cyclohexan-1,3-dicarbonsäure-n-propylcyclohexylester, Cyclohexan-1,3-dicarbonsäureisopropylcyclohexylester, Cyclohexan-1,3-dicarbonsäure-n-butylcyclohexylester, Cyclohexan-1,3-dicarbonsäure-tert-butylcyclohexylester, Cyclohexan-1,3-dicarbonsäureisobutylcyclohexylester, Cyclohexan-1,3-dicarbonsäureglycolcyclohexylester, Cyclohexan-1,3-dicarbonsäure-n-hexylcyclohexylester, Cyclohexan-1,3-dicarbonsäureisohexylcyclohexylester, Cyclohexan-1,3-dicarbonsäure-n-heptylcyclohexylester, Cyclohexan-1,3-dicarbonsäureisoheptylcyclohexylester, Cyclohexan-1,3-dicarbonsäure-n-octylcyclohexylester, Cyclohexan-1,3-dicarbonsäureisooctylcyclohexylester, Cyclohexan-1,3-dicarbonsäure-(2-ethylhexyl)cyclohexylester, Cyclohexan-1,3-dicarbonsäure-n-nonylcyclohexylester, Cyclohexan-1,3-dicarbonsäureisononylcyclohexylester, Cyclohexan-1,3-dicarbonsäure-(2-propylheptyl)cyclohexylester, Cyclohexan-1,3-dicarbonsäuren-decylcyclohexylester, Cyclohexan-1,3-dicarbonsäureisodecylcyclohexylester, Cyclohexan-1,3-dicarbonsäure-n-undecylcyclohexylester, Cyclohexan-1,3-dicarbonsäureisoundecylcyclohexylester, Cyclohexan-1,3-dicarbonsäure-n-docecylcyclohexylester, Cyclohexan-1,3-dicarbonsäureisododecylcyclohexylester, Cyclohexan-1,3-dicarbonsäure-n-tridecytcyclohexylester, Cyclohexan-1,3-dicarbonsäureisotridecylcyclohexylester, Cyclohexan-1,3-dicarbonsäuremethylisopentylester, Cyclohexan-1,3-dicarbonsäureethylisopentylester, Cyclohexan-1,3-dicarbonsäure-n-propylisopentylester, Cyclohexan-1,3-dicarbonsäureisopropylisopentylester, Cyclohexan-1,3-dicarbonsäure-n-butylisopentylester, Cyclohexan-1,3-dicarbonsäure-tert-butylisopentylester, Cyclohexan-1,3-dicarbonsäureisobutylisopentylester, Cyclohexan-1,3-dicarbonsäureglycolisopentylester, Cyclohexan-1,3-dicarbonsäure-n-hexylisopentylester, Cyclohexan-1,3-dicarbonsäureisohexylisopentylester, Cyclohexan-1,3-dicarbonsäure-n-heptylisopentylester, Cyclohexan-1,3-dicarbonsäureisoheptylisopentylester, Cyclohexan-1,3-dicarbonsäure-n-octylisopentylester, Cyclohexan-1,3-dicarbonsäureisooctylisopentylester, Cyclohexan-1,3-dicarbonsäure-(2-ethylhexyl)isopentylester, Cyclohexan-1,3-dicarbonsäure-n-nonylisopentylester, Cyclohexan-1,3-dicarbonsäureisononylisopentylester, Cyclohexan-1,3-dicarbonsäure-(2-propylheptyl)isopentylester, Cyclohexan-1,3-dicarbonsäuren-decylisopentylester, Cyclohexan-1,3-dicarbonsäureisodecylisopentylester, Cyclohexan-1,3-dicarbonsäure-n-undecylisopentylester, Cyclohexan-1,3-dicarbonsäureisoundecylisopentylester, Cyclohexan-1,3-dicarbonsäure-n-docecylisopentylester, Cyclohexan-1,3-dicarbonsäureisododecylisopentylester, Cyclohexan-1,3-dicarbonsäure-n-tridecylisopentylester, Cyclohexan-1,3-dicarbonsäureisotridecylisopentylester, Cyclohexan-1,3-dicarbonsäuremethyl-n-pentylester, Cyclohexan-1,3-dicarbonsäureethyl-n-pentylester, Cyclohexan-1,3-dicarbonsäure-n-propyl-n-pentylester, Cyclohexan-1,3-dicarbonsäureisopropyl-n-pentylester, Cyclohexan-1,3-dicarbonsäure-n-butyt-n-pentylester, Cyclohexan-1,3-dicarbonsäure-tert-butyl-n-pentylester, Cyclohexan-1,3-dicarbonsäureisobutyl-n-pentylester, Cyclohexan-1,3-dicarbonsäureglycol-n-pentylester, Cyclohexan-1,3-dicarbonsäure-n-hexyl-n-pentylester, Cyclohexan-1,3-dicarbonsäureisohexyl-n-pentylester, Cyclohexan-1,3-dicarbonsäure-n-heptyl-n-pentylester, Cyclohexan-1,3-dicarbonsäureisoheptyl-n-pentylester, Cyclohexan-1,3-dicarbonsäure-n-octyl-n-pentylester, Cyclohexan-1,3-dicarbonsäureisooctyl-n-pentylester, Cyclohexan-1,3-dicarbonsäure-(2-ethylhexyl)-n-pentylester, Cyclohexan-1,3-dicarbonsäure-n-nonyl-n-pentylester, Cyclohexan-1,3-dicarbonsäureisononyl-n-pentylester, Cyclohexan-1,3-dicarbonsäure-(2-propylheptyl)-n-pentylester, Cyclohexan-1,3-dicarbonsäure-n-decyl-n-pentylester, Cyclohexan-1,3-dicarbonsäureisodecyl-n-pentylester, Cyclohexan-1,3-dicarbonsäure-n-undecyl-n-pentylester, Cyclohexan-1,3-dicarbonsäureisoundecyl-n-pentylester, Cyclohexan-1,3-dicarbonsäure-n-docecyl-n-pentylester, Cyclohexan-1,3-dicarbonsäureisododecyl-n-pentylester, Cyclohexan-1,3-dicarbonsäure-n-tridecyl-n-pentylester, Cyclohexan-1,3-dicarbonsäureisotridecyl-n-pentylester;
gemischte Ester der Cyclohexan-1,4-dicarbonsäure mit C₁ bis C₁₃-Alkoholen, wie z.B. Cyclohexan-1,4-dicarbonsäureethylmethylester, Cyclohexan-1,4-dicarbonsäure-n-propylmethylester, Cyclohexan-1,4-dicarbonsäureisopropylmethylester, Cyclohexan-1,4-dicarbonsäure-n-butylmethylester, Cyclohexan-1,4-dicarbonsäure-tert-butylmethylester, Cyclohexan-1,4-dicarbonsäureisobutylmethylester, Cyclohexan-1,4-dicarbonsäureglycolmethylester, Cyclohexan-1,4-dicarbonsäure-n-hexylmethylester, Cyclohexan-1,4-dicarbonsäureisohexylmethylester, Cyclohexan-1,4-dicarbonsäure-n-heptylmethylester, Cyclohexan-1,4-dicarbonsäureisoheptylmethylester, Cyclohexan-1,4-dicarbonsäure-n-octylmethylester, Cyclohexan-1,4-dicarbonsäureisooctylmethylester, Cyclohexan-1,4-dicarbonsäure-(2-ethylhexyl)methylester, Cyclohexan-1,4-dicarbonsäure-n-nonylmethylester, Cyclohexan-1,4-dicarbonsäureisononylmethylester, Cyclohexan-1,4-dicarbonsäure-(2-propylheptyl)methylester, Cyclohexan-1,4-dicarbonsäure-n-decylmethylester, Cyclohexan-1,4-dicarbonsäureisodecylmethylester, Cyclohexan-1,4-dicarbonsäure-n-undecylmethylester, Cyclohexan-1,4-dicarbonsäureisoundecylmethylester, Cyclohexan-1,4-dicarbonsäure-n-docecylmethylester, Cyclohexan-1,4-dicarbonsäureisododecylmethylester, Cyclohexan-1,4-dicarbonsäure-n-tridecylmethylester, Cyclohexan-1,4-dicarbonsäureisotridecylmethylester, Cyclohexan-1,4-dicarbonsäure-n-propylethylester, Cyclohexan-1,4-dicarbonsäureisopropylethylester, Cyclohexan-1,4-dicarbonsäure-n-butylethylester, Cyclohexan-1,4-dicarbonsäure-tert-butylethylester, Cyclohexan-1,4-dicarbonsäureisobutylethylester, Cyclohexan-1,4-dicarbonsäureglycolethylester, Cyclohexan-1,4-dicarbonsäure-n-hexylethylester, Cyclohexan-1,4-dicarbonsäureisohexylethylester, Cyclohexan-1,4-dicarbonsäure-n-heptylethylester, Cyclohexan-1,4-dicarbonsäureisoheptylethylester, Cyclohexan-1,4-dicarbonsäure-n-octylethylester, Cyclohexan-1,4-dicarbonsäureisooctylethylester, Cyclohexan-1,4-dicarbonsäure-(2-ethylhexyl)ethylester, Cyclohexan-1,4-dicarbonsäure-n-nonylethylester, Cyclohexan-1,4-dicarbonsäureisononylethylester, Cyclohexan-1,4-dicarbonsäure-(2-propylheptyl)ethylester, Cyclohexan-1,4-dicarbonsäure-n-decylethylester, Cyclohexan-1,4-dicarbonsäureisodecylethylester, Cyclohexan-1,4-dicarbonsäure-n-undecylethylester, Cyclohexan-1,4-dicarbonsäureisoundecylethylester, Cyclohexan-1,4-dicarbonsäure-n-docecylethylester, Cyclohexan-1,4-dicarbonsäureisododecylethylester, Cyclohexan-1,4-dicarbonsäure-n-tridecytethylester, Cyclohexan-1,4-dicarbonsäureisotridecylethylester, Cyclohexan-1,4-dicarbonsäureisopropyl-n-propylester, Cyclohexan-1,4-dicarbonsäure-n-butyl-n-propylester, Cyclohexan-1,4-dicarbonsäure-tert-butyl-n-propylester, Cyctohexan-1,4-dicarbonsäureisobutyl-n-propylester, Cyclohexan-1,4-dicarbonsäureglycol-n-propylester, Cyclohexan-1,4-dicarbonsäure-n-hexyl-n-propylester, Cyclohexan-1,4-dicarbonsäureisohexyl-n-propylester, Cyclohexan-1,4-dicarbonsäure-n-heptyl-n-propylester, Cyclohexan-1,4-dicarbonsäureisoheptyl-n-propylester, Cyclohexan-1,4-dicarbonsäure-n-octyl-n-propylester, Cyclohexan-1,4-dicarbonsäureisooctyl-n-propylester, Cyclohexan-1,4-dicarbonsäure-(2-ethylhexyl)-n-propylester, Cyclohexan-1,4-dicarbonsäure-n-nonyl-n-propylester, Cyclohexan-1,4-dicarbonsäureisononyl-n-propylester, Cyclohexan-1,4-dicarbonsäure-(2-propylheptyl)-n-propylester, Cyclohexan-1,4-dicarbonsäure-n-decyl-n-propylester, Cyclohexan-1,4-dicarbonsäureisodecyl-n-propylester, Cyclohexan-1,4-dicarbonsäure-n-undecyl-n-propylester, Cyclohexan-1,4-dicarbonsäureisoundecyl-n-propylester, Cyclohexan-1,4-dicarbonsäure-n-docecyl-n-propylester, Cyclohexan-1,4-dicarbonsäureisododecyl-n-propylester, Cyclohexan-1,4-dicarbonsäure-n-tridecyl-n-propylester, Cyclohexan-1,4-dicarbonsäureisotridecyl-n-propylester, Cyclohexan-1,4-dicarbonsäure-n-butylisopropylester, Cyclohexan-1,4-dicarbonsäure-tert-butylisopropylester, Cyclohexan-1,4-dicarbonsäureisobutylisopropylester, Cyclohexan-1,4-dicarbonsäureglycolisopropylester, Cyclohexan-1,4-dicarbonsäure-n-hexylisopropylester, Cyclohexan-1,4-dicarbonsäureisohexylisopropylester, Cyclohexan-1,4-dicarbonsäure-n-heptylisopropylester, Cyclohexan-1,4-dicarbonsäureisoheptylisopropylester, Cyclohexan-1,4-dicarbonsäure-n-octylisopropylester, Cyclohexan-1,4-dicarbonsäureisooctylisopropylester, Cyclohexan-1,4-dicarbonsäure-(2-ethylhexyl)isopropylester, Cyclohexan-1,4-dicarbonsäure-n-nonylisopropylester, Cyclohexan-1,4-dicarbonsäureisononylisopropylester, Cyclohexan-1,4-dicarbonsäure-(2-propylheptyl)isopropylester, Cyclohexan-1,4-dicarbonsäuren-decylisopropylester, Cyclohexan-1,4-dicarbonsäureisodecylisopropylester, Cyclohexan-1,4-dicarbonsäure-n-undecylisopropylester, Cyclohexan-1,4-dicarbonsäureisoundecylisopropylester, Cyclohexan-1,4-dicarbonsäure-n-docecylisopropylester, Cyclohexan-1,4-dicarbonsäureisododecylisopropylester, Cyclohexan-1,4-dicarbonsäure-n-tridecylisopropylester, Cyclohexan-1,4-dicarbonsäureisotridecylisopropylester, Cyclohexan-1,4-dicarbonsäure-tert-butyl-n-butylester, Cyclohexan-1,4-dicarbonsäureisobutyl-n-butylester, Cyclohexan-1,4-dicarbonsäureglycol-n-butylester, Cyclohexan-1,4-dicarbonsäure-n-hexyl-n-butylester, Cyclohexan-1,4-dicarbonsäureisohexyl-n-butylester, Cyclohexan-1,4-dicarbonsäure-n-heptyl-n-butylester, Cyclohexan-1,4-dicarbonsäureisoheptyl-n-butylester, Cyclohexan-1,4-dicarbonsäure-n-octyl-n-butylester, Cyclohexan-1,4-dicarbonsäureisooctyl-n-butylester, Cyclohexan-1,4-dicarbonsäure-(2-ethylhexyl)-n-butylester, Cyctohexan-1,4-dicarbonsäure-n-nonyl-n-butylester, Cyclohexan-1,4-dicarbonsäureisononyl-n-butylester, Cyclohexan-1,4-dicarbonsäure-(2-propylheptyl)-n-butylester, Cyclohexan-1,4-dicarbonsäure-n-decyl-n-butylester, Cyclohexan-1,4-dicarbonsäureisodecyl-n-butylester, Cyclohexan-1,4-dicarbonsäure-n-undecyl-n-butylester, Cyclohexan-1,4-dicarbonsäureisoundecyl-n-butylester, Cyclohexan-1,4-dicarbonsäure-n-docecyl-n-butylester, Cyclohexan-1,4-dicarbonsäureisododecyl-n-butylester, Cyclohexan-1,4-dicarbonsäure-n-tridecyl-n-butylester, Cyclohexan-1,4-dicarbonsäureisotridecyl-n-butylester, Cyclohexan-1,4-dicarbonsäureisobutyt-tert-butylester, Cyclohexan-1,4-dicarbonsäureglycol-tert-butylester, Cyclohexan-1,4-dicarbonsäure-n-hexyl-tert-butylester, Cyclohexan-1,4-dicarbonsäureisohexyl-tert-butylester, Cyclohexan-1,4-dicarbonsäure-n-heptyl-tert-butylester, Cyclohexan-1,4-dicarbonsäureisoheptyl-tert-butylester, Cyclohexan-1,4-dicarbonsäure-n-octyl-tert-butylester, Cyclohexan-1,4-dicarbonsäureisooctyl-tert-butylester, Cyclohexan-1,4-dicarbonsäure-(2-ethylhexyl)-tert-butylester, Cyclohexan-1,4-dicarbonsäure-n-nonyl-tert-butylester, Cyclohexan-1,4-dicarbonsäureisononyl-tert-butylester, Cyclohexan-1,4-dicarbonsäure-(2-propylheptyl)-tert-butylester, Cyclohexan-1,4-dicarbonsäure-n-decyl-tert-butylester, Cyclohexan-1,4-dicarbonsäureisodecyl-tert-butylester, Cyclohexan-1,4-dicarbonsäure-n-undecyl-tert-butylester, Cyclohexan-1,4-dicarbonsäureisoundecyl-tert-butylester, Cyclohexan-1,4-dicarbonsäure-n-docecyl-tert-butylester, Cyclohexan-1,4-dicarbonsäureisododecyl-tert-butylester, Cyclohexan-1,4-dicarbonsäure-n-tridecyl-tert-butylester, Cyclohexan-1,4-dicarbonsäureisotridecyl-tert-butylester, Cyclohexan-1,4-dicarbonsäureglycolisobutylester, Cyclohexan-1,4-dicarbonsäure-n-hexylisobutylester, Cyclohexan-1,4-dicarbonsäureisohexylisobutylester, Cyclohexan-1,4-dicarbonsäure-n-heptylisobutylester, Cyclohexan-1,4-dicarbonsäureisoheptylisobutylester, Cyclohexan-1,4-dicarbonsäure-n-octylisobutylester, Cyclohexan-1,4-dicarbonsäureisooctylisobutylester, Cyclohexan-1,4-dicarbonsäure-(2-ethylhexyl)isobutylester, Cyclohexan-1,4-dicarbonsäure-n-nonylisobutylester, Cyclohexan-1,4-dicarbonsäureisononylisobutylester, Cyclohexan-1,4-dicarbonsäure-(2-propylheptyl)isobutylester, Cyclohexan-1,4-dicarbonsäure-n-decylisobutylester, Cyclohexan-1,4-dicarbonsäureisodecylisobutylester, Cyclohexan-1,4-dicarbonsäure-n-undecylisobutylester, Cyclohexan-1,4-dicarbonsäureisoundecylisobutylester, Cyclohexan-1,4-dicarbonsäure-n-docecylisobutylester, Cyclohexan-1,4-dicarbonsäureisododecylisobutylester, Cyclohexan-1,4-dicarbonsäure-n-tridecylisobutylester, Cyclohexan-1,4-dicarbonsäureisotridecylisobutylester, Cyclohexan-1,4-dicarbonsäure-n-hexylglycolester, Cyclohexan-1,4-dicarbonsäureisohexylglycolester, Cyclohexan-1,4-dicarbonsäure-n-heptylglycolester, Cyclohexan-1,4-dicarbonsäureisoheptylglycolester, Cyclohexan-1,4-dicarbonsäure-n-octylglycolester, Cyclohexan-1,4-dicarbonsäureisooctylglycolester, Cyclohexan-1,4-dicarbonsäure-(2-ethylhexyl)glycolester, Cyclohexan-1,4-dicarbonsäure-n-nonylglycolester, Cyclohexan-1,4-dicarbonsäureisononylglycolester, Cyclohexan-1,4-dicarbonsäure-(2-propylheptyl)glycolester, Cyclohexan-1,4-dicarbonsäure-n-decylglycolester, Cyclohexan-1,4-dicarbonsäureisodecylglycolester, Cyclohexan-1,4-dicarbonsäure-n-undecylglycolester, Cyclohexan-1,4-dicarbonsäureisoundecylglycolester, Cyclohexan-1,4-dicarbonsäure-n-docecylglycolester, Cyclohexan-1,4-dicarbonsäureisododecylglycolester, Cyclohexan-1,4-dicarbonsäure-n-tridecylglycolester, Cyclohexan-1,4-dicarbonsäureisotridecylglycolester, Cyclohexan-1,4-dicarbonsäureisohexyl-n-hexylester, Cyclohexan-1,4-dicarbonsäure-n-heptyl-n-hexylester, Cyclohexan-1,4-dicarbonsäureisoheptyl-n-hexylester, Cyclohexan-1,4-dicarbonsäure-n-octyl-n-hexylester, Cyclohexan-1,4-dicarbonsäureisooctyl-n-hexylester, Cyclohexan-1,4-dicarbonsäure-(2-ethylhexyl)-n-hexylester, Cyclohexan-1,4-dicarbonsäure-n-nonyl-n-hexylester, Cyclohexan-1,4-dicarbonsäureisononyl-n-hexylester, Cyclohexan-1,4-dicarbonsäure-(2-propylheptyl)-n-hexylester, Cyclohexan-1,4-dicarbonsäure-n-decyl-n-hexylester, Cyclohexan-1,4-dicarbonsäureisodecyl-n-hexylester, Cyclohexan-1,4-dicarbonsäure-n-undecyl-n-hexylester, Cyclohexan-1,4-dicarbonsäureisoundecyl-n-hexylester, Cyclohexan-1,4-dicarbonsäure-n-docecyl-n-hexylester, Cyclohexan-1,4-dicarbonsäureisododecyl-n-hexylester, Cyclohexan-1,4-dicarbonsäure-n-tridecyl-n-hexylester, Cyclohexan-1,4-dicarbonsäureisotridecyl-n-hexylester, Cyclohexan-1,4-dicarbonsäure-n-heptylisohexylester, Cyclohexan-1,4-dicarbonsäureisoheptylisohexylester, Cyclohexan-1,4-dicarbonsäure-n-octylisohexylester, Cyclohexan-1,4-dicarbonsäureisooctylisohexylester, Cyclohexan-1,4-dicarbonsäure-(2-ethylhexyl)isohexylester, Cyclohexan-1,4-dicarbonsäure-n-nonylisohexylester, Cyclohexan-1,4-dicarbonsäureisononylisohexylester, Cyclohexan-1,4-dicarbonsäure-(2-propylheptyl)isohexylester, Cyclohexan-1,4-dicarbonsäure-n-decylisohexylester, Cyclohexan-1,4-dicarbonsäureisodecylisohexylester, Cyclohexan-1,4-dicarbonsäure-n-undecylisohexylester, Cyclohexan-1,4-dicarbonsäureisoundecylisohexylester, Cyclohexan-1,4-dicarbonsäure-n-docecylisohexylester, Cyclohexan-1,4-dicarbonsäureisododecylisohexylester, Cyclohexan-1,4-dicarbonsäure-n-tridecylisohexylester, Cyclohexan-1,4-dicarbonsäureisotridecylisohexylester, Cyclohexan-1,4-dicarbonsäureisoheptyl-n-heptylester, Cyclohexan-1,4-dicarbonsäure-n-octyl-n-heptylester, Cyclohexan-1,4-dicarbonsäureisooctyl-n-heptylester, Cyclohexan-1,4-dicarbonsäure-(2-ethylhexyl)-n-heptylester, Cyclohexan-1,4-dicarbonsäure-n-nonyl-n-heptylester, Cyclohexan-1,4-dicarbonsäureisononyl-n-heptylester, Cyclohexan-1,4-dicarbonsäure-(2-propylheptyl)-n-heptylester, Cyclohexan-1,4-dicarbonsäure-n-decyl-n-heptylester, Cyclohexan-1,4-dicarbonsäureisodecyl-n-heptylester, Cyclohexan-1,4-dicarbonsäure-n-undecyl-n-heptylester, Cyclohexan-1,4-dicarbonsäureisoundecyl-n-heptylester, Cyclohexan-1,4-dicarbonsäure-n-docecyl-n-heptylester, Cyclohexan-1,4-dicarbonsäureisododecyl-n-heptylester, Cyclohexan-1,4-dicarbonsäure-n-tridecyl-n-heptylester, Cyclohexan-1,4-dicarbonsäureisotridecyl-n-heptylester, Cyclohexan-1,4-dicarbonsäure-n-octylisoheptylester, Cyclohexan-1,4-dicarbonsäureisooctylisoheptylester, Cyclohexan-1,4-dicarbonsäure-(2-ethylhexyl)isoheptylester, Cyclohexan-1,4-dicarbonsäure-n-nonylisoheptylester, Cyclohexan-1,4-dicarbonsäureisononylisoheptylester, Cyclohexan-1,4-dicarbonsäure-(2-propylheptyl)isoheptylester, Cyclohexan-1,4-dicarbonsäuren-decylisoheptylester, Cyclohexan-1,4-dicarbonsäureisodecylisoheptylester, Cyclohexan-1,4-dicarbonsäure-n-undecylisoheptylester, Cyclohexan-1,4-dicarbonsäureisoundecylisoheptylester, Cyclohexan-1,4-dicarbonsäure-n-docecylisoheptylester, Cyclohexan-1,4-dicarbonsäureisododecylisoheptylester, Cyclohexan-1,4-dicarbonsäure-n-tridecylisoheptylester, Cyclohexan-1,4-dicarbonsäureisotridecylisoheptylester, Cyclohexan-1,4-dicarbonsäureisooctyl-n-octylester, Cyclohexan-1,4-dicarbonsäure-(2-ethylhexyl)-n-octylester, Cyclohexan-1,4-dicarbonsäure-n-nonyl-n-octylester, Cyclohexan-1,4-dicarbonsäureisononyl-n-octylester, Cyclohexan-1,4-dicarbonsäure-(2-propylheptyl)-n-octylester, Cyclohexan-1,4-dicarbonsäure-n-decyl-n-octylester, Cyclohexan-1,4-dicarbonsäureisodecyl-n-octylester, Cyclohexan-1,4-dicarbonsäure-n-undecyl-n-octylester, Cyclohexan-1,4-dicarbonsäureisoundecyl-n-octylester, Cyclohexan-1,4-dicarbonsäure-n-docecyl-n-octylester, Cyclohexan-1,4-dicarbonsäureisododecyl-n-octylester, Cyclohexan-1,4-dicarbonsäure-n-tridecyl-n-octylester, Cyclohexan-1,4-dicarbonsäureisotridecyl-n-octylester, Cyclohexan-1,4-dicarbonsäure-(2-ethylhexyl)isooctylester, Cyclohexan-1,4-dicarbonsäure-n-nonylisooctylester, Cyclohexan-1,4-dicarbonsäureisononylisooctylester, Cyclohexan-1,4-dicarbonsäure-(2-propylheptyl)isooctylester, Cyclohexan-1,4-dicarbonsäure-n-decylisooctylester, Cyclohexan-1,4-dicarbonsäureisodecylisooctylester, Cyclohexan-1,4-dicarbonsäure-n-undecylisooctylester, Cyclohexan-1,4-dicarbonsäureisoundecylisooctylester, Cyclohexan-1,4-dicarbonsäure-n-docecylisooctylester, Cyclohexan-1,4-dicarbonsäureisododecylisooctylester, Cyclohexan-1,4-dicarbonsäure-n-tridecylisooctylester, Cyclohexan-1,4-dicarbonsäureisotridecylisooctylester, Cyclohexan-1,4-dicarbonsäure-n-nonyl-(2-ethylhexyl)ester, Cyclohexan-1,4-dicarbonsäureisononyl-(2-ethylhexyl)ester, Cyclohexan-1,4-dicarbonsäure-(2-propylheptyl)-(2-ethylhexyl)ester, Cyclohexan-1,4-dicarbonsäure-n-decyl-(2-ethylhexyl)ester, Cyclohexan-1,4-dicarbonsäureisodecyl-(2-ethylhexyl)ester, Cyclohexan-1,4-dicarbonsäure-n-undecyl-(2-ethylhexyl)ester, Cyclohexan-1,4-dicarbonsäureisoundecyl-(2-ethylhexyl)ester, Cyclohexan-1,4-dicarbonsäure-n-docecyl-(2-ethylhexyl)ester, Cyclohexan-1,4-dicarbonsäureisododecyl-(2-ethylhexyl)ester, Cyclohexan-1,4-dicarbonsäure-n-tridecyl-(2-ethylhexyl)ester, Cyclohexan-1,4-dicarbonsäureisotridecyl-(2-ethylhexyl)ester, Cyclohexan-1,4-dicarbonsäureisononyl-n-nonylester, Cyclohexan-1,4-dicarbonsäure-(2-propylheptyl)-n-nonylester, Cyclohexan-1,4-dicarbonsäure-n-decyl-n-nonylester, Cyclohexan-1,4-dicarbonsäureisodecyl-n-nonylester, Cyclohexan-1,4-dicarbonsäure-n-undecyl-n-nonylester, Cyclohexan-1,4-dicarbonsäureisoundecyl-n-nonylester, Cyclohexan-1,4-dicarbonsäure-n-docecyl-n-nonylester, Cyclohexan-1,4-dicarbonsäureisododecyl-n-nonylester, Cyclohexan-1,4-dicarbonsäure-n-tridecyl-n-nonylester, Cyclohexan-1,4-dicarbonsäureisotridecyl-n-nonylester, Cyclohexan-1,4-dicarbonsäure-(2-propylheptyl)isononylester, Cyclohexan-1,4-dicarbonsäure-n-decylisononylester, Cyclohexan-1,4-dicarbonsäureisodecylisononylester, Cyclohexan-1,4-dicarbonsäure-n-undecylisononylester, Cyclohexan-1,4-dicarbonsäureisoundecylisononylester, Cyclohexan-1,4-dicarbonsäure-n-docecylisononylester, Cyclohexan-1,4-dicarbonsäureisododecylisononylester, Cyclohexan-1,4-dicarbonsäure-n-tridecylisononylester, Cyclohexan-1,4-dicarbonsäureisotridecylisononylester, Cyclohexan-1,4-dicarbonsäure-n-decyl-(2-propylheptyl)ester, Cyclohexan-1,4-dicarbonsäureisodecyl-(2-propylheptyl)ester, Cyclohexan-1,4-dicarbonsäure-n-undecyl-(2-propylheptyl)ester, Cyclohexan-1,4-dicarbonsäureisoundecyl-(2-propylheptyl)ester, Cyclohexan-1,4-dicarbonsäure-n-docecyl-(2-propylheptyl)ester, Cyclohexan-1,4-dicarbonsäureisododecyl-(2-propylheptyl)ester, Cyclohexan-1,4-dicarbonsäure-n-tridecyl-(2-propylheptyl)ester, Cyclohexan-1,4-dicarbonsäureisotridecyl-(2-propylheptyl)ester, Cyclohexan-1,4-dicarbonsäureisodecyl-n-decylester, Cyclohexan-1,4-dicarbonsäure-n-undecyl-n-decylester, Cyclohexan-1,4-dicarbonsäureisoundecyl-n-decylester, Cyclohexan-1,4-dicarbonsäure-n-docecyl-n-decylester, Cyclohexan-1,4-dicarbonsäureisododecyl-n-decylester, Cyclohexan-1,4-dicarbonsäure-n-tridecyl-n-decylester, Cyclohexan-1,4-dicarbonsäureisotridecyl-n-decylester, Cyclohexan-1,4-dicarbonsäure-n-undecylisodecylester, Cyclohexan-1,4-dicarbonsäureisoundecylisodecylester, Cyclohexan-1,4-dicarbonsäure-n-docecylisodecylester, Cyclohexan-1,4-dicarbonsäureisododecylisodecylester, Cyclohexan-1,4-dicarbonsäure-n-tridecylisodecylester, Cyclohexan-1,4-dicarbonsäureisotridecylisodecylester, Cyclohexan-1,4-dicarbonsäureisoundecyl-n-undecylester, Cyclohexan-1,4-dicarbonsäure-n-docecyl-n-undecylester, Cyclohexan-1,4-dicarbonsäureisododecyl-n-undecylester, Cyclohexan-1,4-dicarbonsäure-n-tridecyl-n-undecylester, Cyclohexan-1,4-dicarbonsäureisotridecyl-n-undecylester, Cyclohexan-1,4-dicarbonsäure-n-docecylisoundecylester, Cyclohexan-1,4-dicarbonsäureisododecylisoundecylester, Cyclohexan-1,4-dicarbonsäure-n-tridecylisoundecylester, Cyclohexan-1,4-dicarbonsäureisotridecylisoundecylester, Cyclohexan-1,4-dicarbonsäureisododecyl-n-dodecylester, Cyclohexan-1,4-dicarbonsäuren-tridecyl-n-dodecylester, Cyclohexan-1,4-dicarbonsäureisotridecyl-n-dodecylester, Cyclohexan-1,4-dicarbonsäure-n-tridecylisododecylester, Cyclohexan-1,4-dicarbonsäureisotridecylisododecylester, Cyclohexan-1,4-dicarbonsäureisotridecyl-n-tridecylester, Cyclohexan-1,4-dicarbonsäuremethylcyclohexylester, Cyclohexan-1,4-dicarbonsäureethylcyclohexylester, Cyclohexan-1,4-dicarbonsäure-n-propylcyclohexylester, Cyclohexan-1,4-dicarbonsäureisopropylcyclohexylester, Cyclohexan-1,4-dicarbonsäure-n-butylcyclohexylester, Cyclohexan-1,4-dicarbonsäure-tert-butylcyclohexylester, Cyclohexan-1,4-dicarbonsäureisobutylcyclohexylester, Cyclohexan-1,4-dicarbonsäureglycolcyclohexylester, Cyclohexan-1,4-dicarbonsäure-n-hexylcyclohexylester, Cyclohexan-1,4-dicarbonsäureisohexylcyclohexylester, Cyclohexan-1,4-dicarbonsäure-n-heptylcyclohexylester, Cyclohexan-1,4-dicarbonsäureisoheptylcyclohexylester, Cyclohexan-1,4-dicarbonsäure-n-octylcyclohexylester, Cyclohexan-1,4-dicarbonsäureisooctylcyclohexylester, Cyclohexan-1,4-dicarbonsäure-(2-ethylhexyl)cyclohexylester, Cyclohexan-1,4-dicarbonsäure-n-nonylcyclohexylester, Cyclohexan-1,4-dicarbonsäureisononylcyclohexylester, Cyclohexan-1,4-dicarbonsäure-(2-propylheptyl)cyclohexylester, Cyclohexan-1,4-dicarbonsäuren-decylcyclohexylester, Cyclohexan-1,4-dicarbonsäureisodecylcyclohexylester, Cyclohexan-1,4-dicarbonsäure-n-undecylcyclohexylester, Cyclohexan-1,4-dicarbonsäureisoundecylcyclohexylester, Cyclohexan-1,4-dicarbonsäure-n-docecylcyclohexylester, Cyclohexan-1,4-dicarbonsäureisododecylcyclohexylester, Cyclohexan-1,4-dicarbonsäure-n-tridecylcyclohexylester, Cyclohexan-1,4-dicarbonsäureisotridecylcyclohexylester, Cyclohexan-1,4-dicarbonsäuremethylisopentylester, Cyclohexan-1,4-dicarbonsäureethylisopentylester, Cyclohexan-1,4-dicarbonsäure-n-propylisopentylester, Cyclohexan-1,4-dicarbonsäureisopropylisopentylester, Cyclohexan-1,4-dicarbonsäure-n-butylisopentylester, Cyclohexan-1,4-dicarbonsäure-tert-butylisopentylester, Cyclohexan-1,4-dicarbonsäureisobutylisopentylester, Cyclohexan-1,4-dicarbonsäureglycolisopentylester, Cyclohexan-1,4-dicarbonsäure-n-hexylisopentylester, Cyclohexan-1,4-dicarbonsäureisohexylisopentylester, Cyclohexan-1,4-dicarbonsäure-n-heptylisopentylester, Cyclohexan-1,4-dicarbonsäureisoheptylisopentylester, Cyclohexan-1,4-dicarbonsäure-n-octylisopentylester, Cyclohexan-1,4-dicarbonsäureisooctylisopentylester, Cyclohexan-1,4-dicarbonsäure-(2-ethylhexyl)isopentylester, Cyclohexan-1,4-dicarbonsäure-n-nonylisopentylester, Cyclohexan-1,4-dicarbonsäureisononylisopentylester, Cyclohexan-1,4-dicarbonsäure-(2-propylheptyl)isopentylester, Cyclohexan-1,4-dicarbonsäuren-decylisopentylester, Cyclohexan-1,4-dicarbonsäureisodecylisopentylester, Cyclohexan-1,4-dicarbonsäure-n-undecylisopentylester, Cyclohexan-1,4-dicarbonsäureisoundecylisopentylester, Cyclohexan-1,4-dicarbonsäure-n-docecylisopentylester, Cyclohexan-1,4-dicarbonsäureisododecylisopentylester, Cyclohexan-1,4-dicarbonsäure-n-tridecylisopentylester, Cyclohexan-1,4-dicarbonsäureisotridecylisopentylester, Cyclohexan-1,4-dicarbonsäuremethyl-n-pentylester, Cyclohexan-1,4-dicarbonsäureethyl-n-pentylester, Cyclohexan-1,4-dicarbonsäure-n-propyl-n-pentylester, Cyclohexan-1,4-dicarbonsäureisopropyl-n-pentylester, Cyclohexan-1,4-dicarbonsäure-n-butyl-n-pentylester, Cyclohexan-1,4-dicarbonsäure-tert-butyl-n-pentylester, Cyclohexan-1,4-dicarbonsäureisobutyl-n-pentylester, Cyclohexan-1,4-dicarbonsäureglycol-n-pentylester, Cyclohexan-1,4-dicarbonsäure-n-hexyl-n-pentylester, Cyclohexan-1,4-dicarbonsäureisohexyl-n-pentylester, Cyclohexan-1,4-dicarbonsäure-n-heptyl-n-pentylester, Cyclohexan-1,4-dicarbonsäureisoheptyl-n-pentylester, Cyclohexan-1,4-dicarbonsäure-n-octyl-n-pentylester, Cyclohexan-1,4-dicarbonsäureisooctyl-n-pentylester, Cyclohexan-1,4-dicarbonsäure-(2-ethylhexyl)-n-pentylester, Cyclohexan-1,4-dicarbonsäure-n-nonyl-n-pentylester, Cyclohexan-1,4-dicarbonsäureisononyl-n-pentylester, Cyclohexan-1,4-dicarbonsäure-(2-propylheptyl)-n-pentylester, Cyclohexan-1,4-dicarbonsäure-n-decyl-n-pentylester, Cyclohexan-1,4-dicarbonsäureisodecyl-n-pentylester, Cyclohexan-1,4-dicarbonsäure-n-undecyl-n-pentylester, Cyclohexan-1,4-dicarbonsäureisoundecyl-n-pentylester, Cyclohexan-1,4-dicarbonsäure-n-docecyl-n-pentylester, Cyclohexan-1,4-dicarbonsäureisododecyl-n-pentylester, Cyclohexan-1,4-dicarbonsäure-n-tridecyl-n-pentylester, Cyclohexan-1,4-dicarbonsäureisotridecyl-n-pentylester;
Cyclohexan-1,3-dicarbonsäurealkylester, wie z.B. Cyclohexan-1,3-dicarbonsäuremonomethylester, Cyclohexan-1,3-dicarbonsäuredimethylester, Cyclohexan-1,3-dicarbonsäurediethylester, Cyclohexan-1,3-dicarbonsäuredi-n-propylester, Cyclohexan-1,3-dicarbonsäuredi-n-butylester, Cyclohexan-1,3-dicarbonsäuredi-tert.-butylester, Cyclohexan-1,3-dicarbonsäurediisobutylester, Cyclohexan-1,3-dicarbonsäuremonoglykolester, Cyclohexan-1,3-dicarbonsäurediglykolester, Cyclohexan-1,3-dicarbonsäuredi-n-octylester, Cyclohexan-1,3-dicarbonsäuredüsooctylester, Cyclohexan-1,3-dicarbonsäuredi-2-ethylhexylester, Cyclohexan-1,3-dicarbonsäuredi-n-nonylester, Cyclohexan-1,3-dicarbonsäuredüsononylester, Cyclohexan-1,3-dicarbonsäuredi-n-decylester, Cyclohexan-1,3-dicarbonsäuredüsodecylester, Cyclohexan-1,3-dicarbonsäuredi-n-undecylester, Cyclohexan-1,3-dicarbonsäurediisododecylester, Cyclohexan-1,3-dicarbonsäuredi-n-octadecylester, Cyclohexan-1,3-dicarbonsäurediisooctadecylester, Cyclohexan-1,3-dicarbonsäuredi-n-eicosylester, Cyclohexan-1,3-dicarbonsäuremonocyclohexylester, Cyclohexan-1,3-dicarbonsäuredicyclohexylester.

Cyclohexan-1,3-dicarbonsäurediisopropylester, Cyclohexan-1,3-dicarbonsäuredi-n-hexylester, Cyclohexan-1,3-dicarbonsäurediisohexylester, Cyclohexan-1,3-dicarbonsäuredi-n-heptylester, Cyclohexan-1,3-dicarbonsäurediisoheptylester, Cyclohexan-1,3-dicarbonsäuredi-2-propylheptylester, Cyclohexan-1,3-dicarbonsäurediisoundecylester, Cyclohexan-1,3-dicarbonsäuredi-n-dodecylester, Cyclohexan-1,2-dicarbonsäuredi-n-tridecylester, Cyclohexan-1,3-dicarbonsäurediisotridecylester, Cyclohexan-1,3-dicarbonsäuredi-n-pentylester, Cyclohexan-1,3-dicarbonsäurediisopentylester;
Cyclohexan-1,2,4-tricarbonsäurealkylester, wie z.B. Cyclohexan-1,2,4-tricarbonsäuremonomethylester, Cyclohexan-1,2,4-tricarbonsäuredimethylester, Cyclohexan-1,2,4-tricarbonsäurediethylester, Cyclohexan-1,2,4-tricarbonsäuredi-n-propylester, Cyclohexan-1,2,4-tricarbonsäurediisopropylester, Cyclohexan-1,2,4-tricarbonsäuredi-n-butylester, Cyclohexan-1,2,4-tricarbonsäuredi-tert-butylester, Cyclohexan-1,2,4-tricarbonsäurediisobutylester, Cyclohexan-1,2,4-tricarbonsäuremonoglykolester, Cyclohexan-1,2,4-tricarbonsäurediglykolester, Cyclohexan-1,2,4-tricarbonsäuredi-n-octylester, Cyclohexan-1,2,4-tricarbonsäurediisooctylester, Cyclohexan-1,2,4-tricarbonsäuredi-2-ethylhexylester, Cyclohexan-1,2,4-tricarbonsäuredi-n-nonylester, Cyclohexan-1,2,4-tricarbonsäurediisononylester, Cyclohexan-1,2,4-tricarbonsäuredi-n-decylester, Cyclohexan-1,2,4-tricarbonsäuredüsodecylester, Cyclohexan-1,2,4-tricarbonsäuredi-n-undecylester, Cyclohexan-1,2,4-tricarbonsäurediisododecylester, Cyclohexan-1,2,4-tricarbonsäuredi-n-octadecyl-ester, Cyclohexan-1,2,4-tricarbonsäurediisooctadecylester, Cyclohexan-1,2,4-tricarbonsäuredi-n-eicosylester, Cyclohexan-1,2,4-tricarbonsäuremonocyclohexylester, Cyclohexan-1,2,4-tricarbonsäuredicyclohexylester sowie Cyclohexan-1,2,4-tricarbonsäuretrimethylester, Cyclohexan-1,2,4-tricarbonsäuretriethylester, Cyclohexan-1,2,4-tricarbonsäuretri-n-propylester, Cyclohexan-1,2,4-tricarbonsäuretri-n-butylester, Cyclohexan-1,2,4-tricarbonsäuretri-tert-butylester, Cyclohexan-1,2,4-tricarbonsäuretriisobutylester, Cyclohexan-1,2,4-tricarbonsäuretriglykolester, Cyclohexan-1,2,4-tricarbonsäuretri-n-octylester, Cyclohexan-1,2,4-tricarbonsäuretriisooctylester, Cyclohexan-1,2,4-tricarbonsäuretri-2-ethylhexylester, Cyclohexan-1,2,4-tricarbonsäuretri-n-nonylester, Cyclohexan-1,2,4-tricarbonsäuretriisononylester, Cyclohexan-1,2,4-tricarbonsäuretri-n-decylester, Cyclohexan-1,2,4-tricarbonsäuretriisododecylester, Cyclohexan-1,2,4-tricarbonsäuretri-n-undecylester, Cyclohexan-1,2,4-tricarbonsäuretriisododecylester, Cyclohexan-1,2,4-tricarbonsäuretri-n-octadecylester, Cyclohexan-1,2,4-tricarbonsäuretriisooctadecytester, Cyclohexan-1,2,4-tricarbonsäuretri-n-eicosylester, Cyclohexan-1,2,4-tricarbonsäuretricyclohexylester, Cyclohexan-1,2,4-tricarbonsäuredi-n-hexylester, Cyclohexan-1,2,4-tricarbonsäurediisohexylester, Cyclohexan-1,2,4-tricarbonsäuretri-n-hexylester, Cyclohexan-1,2,4-tricarbonsäuretriisohexylester, Cyclohexan-1,2,4-tricarbonsäuredi-n-heptylester, Cyclohexan-1,2,4-tricarbonsäurediisoheptylester, Cyclohexan-1,2,4-tricarbonsäuretri-n-heptylester, Cyclohexan-1,2,4-tricarbonsäuretriisoheptylester, Cyclohexan-1,2,4-tricarbonsäuredi-n-pentylester, Cyclohexan-1,2,4-tricarbonsäurediisopentylester, Cyclohexan-1,2,4-tricarbonsäuretri-n-pentylester, Cyclohexan-1,2,4-tricarbonsäuretriisopentylester, Cyclohexan-1,2,4-tricarbonsäuredi-n-tridecylester, Cyclohexan-1,2,4-tricarbonsäurediisotridecylester, Cyclohexan-1,2,4-tricarbonsäuretri-n-tridecylester, Cyclohexan-1,2,4-tricarbonsäuretriisotridecylester, Cyclohexan-1,2,4-tricarbonsäuredi-n-dodecylester, Cyclohexan-1,2,4-tricarbonsäurediisoundecylester, Cyclohexan-1,2,4-tricarbonsäuretri-n-dodecylester, Cyclohexan-1,2,4-tricarbonsäuretriisoundecylester, Cyclohexan-1,2,4-tricarbonsäuretriisopropylester.

Cyclohexan-1,3,5-tricarbonsäurealkylester, wie z.B. Cyclohexan-1,3,5-tricarbonsäuremonomethylester, Cyclohexan-1,3,5-tricarbonsäuredimethylester, Cyclohexan-1,3,5-tricarbonsäurediethylester, Cyclohexan-1,3,5-tricarbonsäuredi-n-propylester, Cyclohexan-1,3,5-tricarbonsäuredi-n-butylester, Cyclohexan-1,3,5-tricarbonsäuredi-tert-butylester, Cyclohexan-1,3,5-tricarbonsäurediisobutylester, Cyclohexan-1,3,5-tricarbonsäuremonoglykolester, Cyclohexan-1,3,5-tricarbonsäurediglykolester, Cyclohexan-1,3,5-tricarbonsäuredi-n-octylester, Cyclohexan-1,3,5-tricarbonsäurediisooctylester, Cyclohexan-1,3,5-tricarbonsäuredi-2-ethylhexylester, Cyclohexan-1,3,5-tricarbonsäuredi-n-nonylester, Cyclohexan-1,3,5-tricarbonsäurediisononylester, Cyclohexan-1,3,5-tricarbonsäuredi-n-decylester, Cyclohexan-1,3,5-tricarbonsäurediisodecylester, Cyclohexan-1,3,5-tricarbonsäuredi-n-undecylester, Cyclohexan-1,3,5-thcarbonsäurediisododecylester, Cyclohexan-1,3,5-tricarbonsäuredi-n-octadecylester, Cyclohexan-1,3,5-tricarbonsäurediisooctadecylester, Cyclohexan-1,3,5-tricarbonsäuredi-n-eicosylester, Cyclohexan-1,3,5-tricarbonsäuremonocyclohexylester, Cyclohexan-1,3,5-tricarbonsäuredicyclohexylester, sowie Cyclohexan-1,3,5-tricarbonsäuretrimethylester, Cyclohexan-1,3,5-tricarbonsäuretriethylester, Cyclohexan-1,3,5-tricarbonsäuretri-n-propylester, Cyclohexan-1,3,5-tricarbonsäuretri-n-butylester, Cyclohexan-1,3,5-tricarbonsäuretri-tert-butylester, Cyclohexan-1,3,5-tricarbonsäuretriisobutylester, Cyclohexan-1,3,5-tricarbonsäuretriglykolester, Cyclohexan-1,3,5-tricarbonsäuretri-n-octylester, Cyclohexan-1,3,5-tricarbonsäuretriisooctylester, Cyclohexan-1,3,5-tricarbonsäuretri-2-ethylhexylester, Cyclohexan-1,3,5-tricarbonsäuretri-n-nonylester, Cyclohexan-1,3,5-tricarbonsäuretriisononylester, Cyclohexan-1,3,5-tricarbonsäuretri-n-decylester, Cyclohexan-1,3,5-tricarbonsäuretriisododecylester, Cyclohexan-1,3,5-tricarbonsäuretri-n-undecylester, Cyclohexan-1,3,5-tricarbonsäuretriisododecylester, Cyclohexan-1,3,5-tricarbonsäuretri-n-octadecylester, Cyclohexan-1,3,5-tricarbonsäuretriisooctadecylester, Cyclohexan-1,3,5-tricarbonsäuretri-n-eicosylester, Cyclohexan-1,3,5-tricarbonsäuretricyclohexylester, Cyclohexan-1,3,5-tricarbonsäuredi-n-hexylester, Cyclohexan-1,3,5-tricarbonsäurediisohexylester, Cyclohexan-1,3,5-tricarbonsäuretri-n-hexylester, Cyclohexan-1,3,5-tricarbonsäuretriisohexylester, Cyclohexan-1,3,5-tricarbonsäuredi-n-heptylester, Cyclohexan-1,3,5-tricarbonsäurediisoheptylester, Cyclohexan-1,3,5-tricarbonsäuretri-n-heptylester, Cyclohexan-1,3,5-tricarbonsäuretriisoheptylester, Cyclohexan-1,3,5-tricarbonsäuredi-n-pentylester, Cyclohexan-1,3,5-tricarbonsäurediisopentylester, Cyclohexan-1,3,5-tricarbonsäuretri-n-pentylester, Cyclohexan-1,3,5-tricarbonsäuretriisopentylester, Cyclohexan-1,3,5-tricarbonsäuredi-n-tridecylester, Cyclohexan-1,3,5-tricarbonsäurediisotridecylester, Cyclohexan-1,3,5-tricarbonsäuretri-n-tridecylester, Cyclohexan-1,3,5-tricarbonsäuretriisotridecylester, Cyclohexan-1,3,5-tricarbonsäuredi-n-dodecylester, Cyclohexan-1,3,5-tricarbonsäurediisoundecylester, Cyclohexan-1,3,5-tricarbonsäuretri-n-dodecylester, Cyclohexan-1,3,5-tricarbonsäuretriisoundecylester, Cyclohexan-1,3,5-tricarbonsäuretriisopropylester.

Cyclohexan-1,2,3-tricarbonsäurealkylester, wie z.B. Cyclohexan-1,2,3-tricarbonsäuremonomethylester, Cyclohexan-1,2,3-tricarbonsäuredimethylester, Cyclohexan-1,2,3-tricarbonsäurediethylester, Cyclohexan-1,2,3-tricarbonsäuredi-n-propylester, Cyclohexan-1,2,3-tricarbonsäuredi-n-butylester, Cyclohexan-1,2,3-tricarbonsäuredi-tert-butylester, Cyclohexan-1,2,3-tricarbonsäurediisobutylester, Cyclohexan-1,2,3-tricarbonsäuremonoglykolester, Cyclohexan-1,2,3-tricarbonsäurediglykolester, Cyclohexan-1,2,3-tricarbonsäuredi-n-octylester, Cyclohexan-1,2,3-tricarbonsäurediisooctylester, Cyclohexan-1,2,3-tricarbonsäuredi-2-ethylhexylester, Cyclohexan-1,2,3-tricarbonsäuredi-n-nonylester, Cyclohexan-1,2,3-tricarbonsäurediisononylester, Cyclohexan-1,2,3-tricarbonsäuredi-n-decylester, Cyclohexan-1,2,3-tricarbonsäurediisodecylester, Cyclohexan-1,2,3-tricarbonsäuredi-n-undecylester, Cyclohexan-1,2,3-tricarbonsäurediisododecylester, Cyclohexan-1,2,3-tricarbonsäuredi-n-octadecylester, Cyclohexan-1,2,3-tricarbonsäurediisooctadecylester, Cyclohexan-1,2,3-tricarbonsäuredi-n-eicosylester, Cyclohexan-1,2,3-tricarbonsäuremonocyclohexylester, Cyclohexan-1,2,3-tricarbonsäuredicyclohexylester, sowie Cyclohexan-1,2,3-tricarbonsäuretrimethylester, Cyclohexan-1,2,3-tricarbonsäuretriethylester, Cyclohexan-1,2,3-tricarbonsäuretri-n-propylester, Cyclohexan-1,2,3-tricarbonsäuretri-n-butylester, Cyclohexan-1,2,3-tricarbonsäuretri-tert-butylester, Cyclohexan-1,2,3-tricarbonsäuretriisobutylester, Cyclohexan-1,2,3-tricarbonsäuretriglykolester, Cyclohexan-1,2,3-tricarbonsäuretri-n-octylester, Cyclohexan-1,2,3-tricarbonsäuretriisooctylester, Cyclohexan-1,2,3-tricarbonsäuretri-2-ethylhexylester, Cyclohexan-1,2,3-tricarbonsäuretri-n-nonylester, Cyclohexan-1,2,3-tricarbonsäuretriisononylester, Cyclohexan-1,2,3-tricarbonsäuretri-n-decylester, Cyclohexan-1,2,3-tricarbonsäuretriisododecylester, Cyclohexan-1,2,3-tricarbonsäuretri-n-undecylester, Cyclohexan-1,2,3-tricarbonsäuretriisododecylester, Cyclohexan-1,2,3-tricarbonsäuretri-n-octadecylester, Cyclohexan-1,2,3-tricarbonsäuretriisooctadecylester, Cyclohexan-1,2,3-tricarbonsäuretri-n-eicosylester, Cyclohexan-1,2,3-tricarbonsäuretricyclohexylester, Cyclohexan-1,2,3-tricarbonsäuredi-n-hexylester, Cyclohexan-1,2,3-tricarbonsäurediisohexylester, Cyclohexan-1,2,3-tricarbonsäuretri-n-hexylester, Cyclohexan-1,2,3-tricarbonsäuretriisohexylester, Cyclohexan-1,2,3-tricarbonsäuredi-n-heptylester, Cyclohexan-1,2,3-tricarbonsäurediisoheptylester, Cyclohexan-1,2,3-tricarbonsäuretri-n-heptylester, Cyclohexan-1,2,3-tricarbonsäuretriisoheptylester, Cyclohexan-1,2,3-tricarbonsäuredi-n-pentylester, Cyclohexan-1,2,3-tricarbonsäurediisopentylester, Cyclohexan-1,2,3-tricarbonsäuretri-n-pentylester, Cyclohexan-1,2,3-tricarbonsäuretriisopentylester, Cyclohexan-1,2,3-tricarbonsäuredi-n-tridecylester, Cyclohexan-1,2,3-tricarbonsäurediisotridecylester, Cyclohexan-1,2,3-tricarbonsäuretri-n-tridecylester, Cyclohexan-1,2,3-tricarbonsäuretriisotridecylester, Cyclohexan-1,2,3-tricarbonsäuredi-n-dodecylester, Cyclohexan-1,2,3-tricarbonsäurediisoundecylester, Cyclohexan-1,2,3-tricarbonsäuretri-n-dodecylester, Cyclohexan-1,2,3-tricarbonsäuretriisoundecylester, Cyclohexan-1,2,3-tricarbonsäuretriisopropylester.

Cyclohexan-1,2,4,5-tetracarbonsäurealkylester, wie z.B. Cyclohexan-1,2,4,5-tetracarbonsäuremonomethylester, Cyclohexan-1,2,4,5-tetracarbonsäuredimethylester, Cyclohexan-1,2,4,5-tetracarbonsäurediethylester, Cyclohexan-1,2,4,5-tetracarbonsäuredi-n-propylester, Cyclohexan-1,2,4,5-tetracarbonsäuredi-n-butylester, Cyclohexan-1,2,4,5-tetracarbonsäuredi-tert.-butylester, Cyclohexan-1,2,4,5-tetracarbonsäurediisobutylester, Cyclohexan-1,2,4,5-tetracarbonsäuremonoglykolester, Cyclohexan-1,2,4,5-tetracarbonsäurediglykolester, Cyclohexan-1,2,4,5-tetracarbonsäuredi-n-octylester, Cyclohexan-1,2,4,5-tetracarbonsäurediisooctylester, Cyclohexan-1,2,4,5-tetracarbonsäuredi-2-ethylhexylester, Cyclohexan-1,2,4,5-tetracarbonsäuredi-n-nonylester, Cyclohexan-1,2,4,5-tetracarbonsäurediisononylester, Cyclohexan-1,2,4,5-tetracarbonsäuredi-n-decylester, Cyclohexan-1,2,4,5-tetracarbonsäurediisodecylester, Cyclohexan-1,2,4,5-tetracarbonsäuredi-n-undecylester, Cyclohexan-1,2,4,5-tetracarbonsäurediisododecylester, Cyclohexan-1,2,4,5-tetracarbonsäuredi-n-octadecylester, Cyclohexan-1,2,4,5-tetracarbonsäurediisooctadecylester, Cyclohexan-1,2,4,5-tetracarbonsäuredi-n-eicosylester, Cyclohexan-1,2,4,5-tetracarbonsäuremonocyclohexylester, Cyclohexan-1,2,4,5-tetracarbonsäuretrimethylester, Cyclohexan-1,2,4,5-tetracarbonsäuretriethylester, Cyclohexan-1,2,4,5-tetracarbonsäuretri-n-propylester, Cyclohexan-1,2,4,5-tetracarbonsäuretri-n-butylester, Cyclohexan-1,2,4,5-tetracarbonsäuretri-tert-butylester, Cyclohexan-1,2,4,5-tetracarbonsäuretriisobutylester, Cyclohexan-1,2,4,5-tetracarbonsäuretriglykolester, Cyclohexan-1,2,4,5-tetracarbonsäuretri-n-octylester, Cyclohexan-1,2,4,5-tetracarbonsäuretriisooctylester, Cyclohexan-1,2,4,5-tetracarbonsäuretri-2-ethylhexylester, Cyclohexan-1,2,4,5-tetracarbonsäuretri-n-nonylester, Cyclohexan-1,2,4,5-tetracarbonsäuretriisononylester, Cyclohexan-1,2,4,5-tetracarbonsäuretri-n-decylester Cyclohexan-1,2,4,5-tetracarbonsäuretriisododecylester, Cyclohexan-1,2,4,5-tetracarbonsäuretri-n-undecylester, Cyclohexan-1,2,4,5-tetracarbonsäuretriisododecylester, Cyclohexan-1,2,4,5-tetracarbonsäuretri-n-octadecylester, Cyclohexan-1,2,4,5-tetracarbonsäuretriisooctadecylester, Cyclohexan-1,2,4,5-tetracarbonsäuretri-n-eicosylester, Cyclohexan-1,2,4,5-tetracarbonsäuretricyclohexylester, sowie Cyclohexan-1,2,4,5-tetracarbonsäuretetramethylester, Cyclohexan-1,2,4,5-tetracarbonsäuretetraethylester, Cyclohexan-1,2,4,5-tetracarbonsäuretetra-n-propylester, Cyclohexan-1,2,4,5-tetracarbonsäuretetra-n-butylester, Cyclohexan-1,2,4,5-tetracarbonsäuretetra-tert-butylester, Cyclohexan-1,2,4,5-tetracarbonsäuretetraisobutylester, Cyclohexan-1,2,4,5-tetracarbonsäuretetraglykolester, Cyclohexan-1,2,4,5-tetracarbonsäuretetra-n-octylester, Cyclohexan-1,2,4,5-tetracarbonsäuretetraisooctylester, Cyclohexan-1,2,4,5-tetracarbonsäuretetra-2-ethylhexylester, Cyclohexan-1,2,4,5-tetracarbonsäuretetra-n-nonylester, Cyclohexan-1,2,4,5-tetracarbonsäuretetraisononylester, Cyclohexan-1,2,4,5-tetracarbonsäuretetra-n-decylester, Cyclohexan-1,2,4,5-tetracarbonsäuretetra-isodecylester, Cyclohexan-1,2,4,5-tetracarbonsäuretetraisododecylester, Cyclohexan-1,2,4,5-tetracarbonsäuretetra-n-undecylester, Cyclohexan-1,2,4,5-tetracarbonsäuretetra-n-octadecylester, Cyclohexan-1,2,4,5-tetracarbonsäuretetraisooctadecylester, Cyclohexan-1,2,4,5-tetracarbonsäuretetra-n-eicosylester, Cyclohexan-1,2,4,5-tetracarbonsäuretetracyclohexylester, Cyclohexan-1,2,4,5-tetracarbonsäuredi-n-hexylester, Cyclohexan-1,2,4,5-tetracarbonsäurediisohexylester, Cyclohexan-1,2,4,5-tetracarbonsäuretri-n-hexylester, Cyclohexan-1,2,4,5-tetracarbonsäuretriisohexylester, Cyclohexan-1,2,4,5-tetracarbonsäuredi-n-heptylester, Cyclohexan-1,2,4,5-tetracarbonsäurediisoheptylester, Cyclohexan-1,2,4,5-tetracarbonsäuretri-n-heptylester, Cyclohexan-1,2,4,5-tetracarbonsäuretriisoheptylester, Cyclohexan-1,2,4,5-tetracarbonsäuredi-n-pentylester, Cyclohexan-1,2,4,5-tetracarbonsäurediisopentylester, Cyclohexan-1,2,4,5-tetracarbonsäuretri-n-pentylester, Cyclohexan-1,2,4,5-tetracarbonsäuretriisopentylester, Cyclohexan-1,2,4,5-tetracarbonsäuredi-n-tridecylester, Cyclohexan-1,2,4,5-tetracarbonsäurediisotridecylester, Cyclohexan-1,2,4,5-tetracarbonsäuretri-n-tridecylester, Cyclohexan-1,2,4,5-tetracarbonsäuretriisotridecylester, Cyclohexan-1,2,4,5-tetracarbonsäuredi-n-dodecylester, Cyclohexan-1,2,4,5-tetracarbonsäurediisoundecylester, Cyclohexan-1,2,4,5-tetracarbonsäuretri-n-dodecylester, Cyclohexan-1,2,4,5-tetracarbonsäuretriisoundecylester, Cyclohexan-1,2,4,5-tetracarbonsäuretriisopropylester, Cyclohexan-1,2,4,5-tetracarbonsäuretetra-n-hexylester, Cyclohexan-1,2,4,5-tetracarbonsäuretetraisohexylester, Cyclohexan-1,2,4,5-tetracarbonsäuretetra-n-heptylester, Cyclohexan-1,2,4,5-tetracarbonsäuretetraisoheptylester, Cyclohexan-1,2,4,5-tetracarbonsäuretetra-n-pentylester, Cyclohexan-1,2,4,5-tetracarbonsäuretetraisopentylester, Cyclohexan-1,2,4,5-tetracarbonsäuretetra-n-tridecylester, Cyclohexan-1,2,4,5-tetracarbonsäuretetraisotridecylester, Cyclohexan-1,2,4,5-tetracarbonsäuretetra-n-dodecylester, Cyclohexan-1,2,4,5-tetracarbonsäuretetraisoundecylester, Cyclohexan-1,2,4,5-tetracarbonsäuretetraisopropylester.

Anhydride der Cyclohexan-1,2-dicarbonsäure, Cyclohexan-1,2,4-tricarbonsäure, Cyclohexan-1,2,3-tricarbonsäure und Cyclohexan-1,2,4,5-tetracarbonsäure.

Im Sinne der vorliegenden Erfindung geeignet sind darüber hinaus auch die in der WO 99/32427 offenbarten, im Folgenden nochmals aufgelisteten Cyclohexan-1,2-dicarbonsäureester:
Gemischte Ester der Cyclohexan-1,2-dicarbonsäure mit C₁- bis C₁₃-Alkoholen; Cyclohexan-1,2-dicarbonsäuredi(isopentyl)ester, erhältlich durch Hydrierung von Di(isopentyl)phthalat mit der Chemical Abstracts Registry Nummer (im Folgenden: CAS Nr.) 84777-06-0;
Cyclohexan-1,2-dicarbonsäuredi(isoheptyl)ester, erhältlich durch Hydrierung von Di(isoheptyl)phthalat mit der CAS Nr. 71888-89-6;
Cyclohexan-1,2-dicarbonsäuredi(isononyl)ester, erhältlich durch Hydrierung eines Di(isononyl)phthalats mit der CAS Nr. 68515-48-0;
Cyclohexan-1,2-dicarbonsäuredi(isononyl)ester, erhältlich durch Hydrierung eines Di(isononyl)phthalats mit der CAS Nr. 28553-12-0, basierend auf n-Buten;
Cyclohexan-1,2-dicarbonsäuredi(isononyl)ester, erhältlich durch Hydrierung eines Di(isononyl)phthalats mit der CAS Nr. 28553-12-0 basierend auf Isobuten;
ein 1,2-Di-C9-Ester der Cyclohexandicarbonsäure, erhältlich durch Hydrierung eines Di(nonyl)phthalats mit der CAS Nr. 68515-46-8;
ein Cyclohexan-1,2-dicarbonsäuredi(isodecyl)ester erhältlich durch Hydrierung eines Di(isodecyl)phthalats mit der CAS Nr. 68515-49-1;
ein 1,2-Di-C7-11-Ester der Cyclohexandicarbonsäure, erhältlich durch Hydrierung des entsprechenden Phthalsäureesters mit der CAS Nr. 68515-42-4;
ein 1,2-Di-C7-11-Ester der Cyclohexandicarbonsäure, erhältlich durch Hydrierung der Di-C7-11-Phthalate mit folgenden CAS Nr.
111 381-89-6,
111 381 90-9,
111 381 91-0,
68515-44-6,
68515-45-7 und
3648-20-2;
ein 1,2-Di-C9-11-Ester der Cyclohexandicarbonsäure, erhältlich durch Hydrierung eines Di-C9-11-Phthalats mit der CAS Nr. 98515-43-6;
ein 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
ein 1,2-Di-C7-9-Cyclohexandicarbonsäureester, erhältlich durch Hydrierung des entsprechenden Phthalsäureesters der verzweigtkettige oder lineare C7-9-Alkylestergruppen aufweist; entsprechende beispielsweise als Ausgangsprodukte verwendbare Phthalate haben die folgende CAS Nr.:
   Di-C7,9-Alkylphthalat mit der CAS Nr. 111 381-89-6;
   Di-C7-Alkylphthalat mit der CAS Nr. 68515-44-6; und
   Di-C9-Alkylphthalat mit der CAS Nr. 68515-45-7.

Der Inhalt der WO 99/32427, der sich u.a. auf diese vorstehend aufgelisteten Verbindungen und die Herstellung von Cyclohexanpolycarbonsäuren unter Verwendung spezieller Makroporen aufweisender Katalysatoren bezieht, wird durch Bezugnahme vollständig in die vorliegende Anmeldung einbezogen.

Erfindungsgemäß sind auch Hydrierprodukte von Phthalsäure-Mischestern mit C10-und C13-Alkoholen verwendbar wie sie in der DE-A 100 32 580.7 beschrieben sind.

Des weiteren sind auch die Hydrierungsprodukte der kommerziell erhältlichen Benzolcarbonsäureester mit den Handelsnamen Jayflex DINP (CAS Nr. 68515-48-0), Jayflex DIDP (CAS Nr. 68515-49-1), Palatinol 9-P, Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911 P (CAS Nr. 68515-43-5), Jayflex L11P (CAS Nr. 3648-20-2), Witamol 110 (CAS Nr. 90193-91-2), Witamol 118 (Di-n-C8-C10-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0) als geeignet im Sinne der vorliegenden Erfindung zu bewerten.

Besonders bevorzugte staubarme bauchemische Produkte umfassen Dialkylester der 1,2-Cyclohexandicarbonsäure. Als Estergruppe R bevorzugt sind geradkettige oder verzweigte Alkylgruppen mit 1 bis 13 C-Atomen oder Gemische der genannten Alkylgruppen. Als Estergruppe R besonders bevorzugt sind geradkettige oder verzweigte Alkylgruppen mit 8 bis 10 C-Atomen oder Gemische der genannten Alkylgruppen. Als Estergruppe R ganz besonders bevorzugt sind Alkylgruppen mit 9 C-Atomen.

Die erfindungsgemäßen Mischungen enthaltend mindestens ein Polyol und mindestens ein Cyclohexanpolycarbonsäure-Derivat zeichnen sich gegenüber den aus dem Stand der Technik bekannten Verbindungen zur Entstaubung von pulverförmigen bauchemischen Produkten durch vergleichbare oder bessere anwendungstechnische Eigenschaften aus. So bilden sie bei der Einmischung keine Verklumpungen und verteilen sich rasch auf der Oberfläche der Inhaltsstoffe pulverförmiger bauchemischer Produkte. Ihre Flammpunkte sind ausreichend hoch, um bei der Herstellung und Anwendung strengen sicherheitstechnischen Standards zu genügen.

Weiterhin zeichnen sich die erfindungsgemäßen Additive durch eine niedrige Viskosität und hohe Effektivität aus ("spreading effect"), die es den Anwendern erlaubt, selbst bei kleinen Einsatzmengen (0,5 bis 2,0 Gew.-%) hohe Entstaubungseffekte zu erreichen.

Durch den vorhandenen "spreading effect" und die niedrige Viskosität findet bei der Zudosierung des Entstaubungsmittels keine Klümpchenbildung in dem zu entstaubenden Produkt statt. Dem Formulierer obiger Produkte ist es somit möglich ohne besondere Sprüheinrichtung das Entstaubungsmittel direkt in seinen vorhandenen Mischprozess zu dosieren.

Die Herstellung der Cyclohexanpolycarbonsäurederivate erfolgt bevorzugt gemäß dem in WO 99/32427 offenbarten Verfahren. Dieses Verfahren umfasst die Hydrierung einer Benzolpolycarbonsäure oder eines Derivats davon oder eines Gemisches aus zwei oder mehr davon durch Inkontaktbringen der Benzolpolycarbonsäure oder des Derivats davon oder des Gemischs aus zwei oder mehr davon mit einem Wasserstoff enthaltenden Gas in Gegenwart eines Katalysators der als Aktivmetall mindestens ein Metall der VIII. Nebengruppe des Periodensystems allein oder zusammen mit mindestens einem Metall der I. oder VII. Nebengruppe des Periodensystems, aufgebracht auf einem Träger, umfasst, wobei der Träger Makroporen aufweist.

In einer bevorzugten Ausführungsform weist der Träger einen mittleren Porendurchmesser von mindestens 50 nm und eine BET-Oberfläche von höchstens 30 m²/g auf und die Menge des Aktivmetalls beträgt 0,01 bis 30 Gew.-%, bezogen auf das Gesamtgewicht des Katalysators.

In einer weiteren Ausführungsform wird ein Katalysator eingesetzt, worin die Menge des Aktivmetalls 0,01 bis 30 Gew.-%, bezogen auf das Gesamtgewicht des Katalysators, beträgt und 10 bis 50% des Porenvolumens des Trägers von Makroporen mit einem Porendurchmesser im Bereich von 50 nm bis 10.000 nm und 50 bis 90% des Porenvolumens des Trägers von Mesoporen mit einem Porendurchmesser im Bereich von 2 bis 50 nm gebildet werden, wobei sich die Summe der Anteile der Porenvolumina zu 100% addiert.

In einer weiteren Ausführungsform weist der Katalysator 0,01 bis 30 Gew.-%, bezogen auf das Gesamtgewicht des Katalysators, eines Aktivmetalls auf, aufgebracht auf einem Träger, wobei der Träger einen mittleren Porenduchmesser von mindestens 0,1 µm und eine BET-Oberfläche von höchstens 15 m²/g aufweist. Als Träger können prinzipiell alle Träger eingesetzt werden, die Makroporen aufweisen, d.h. Träger, die ausschließlich Makroporen aufweisen, sowie solche, die neben Makroporen auch Meso- und/oder Mikroporen enthalten.

Als Aktivmetall können prinzipiell alle Metalle der VIII. Nebengruppe des Periodensystems eingesetzt werden. Bevorzugt werden als Aktivmetalle Platin, Rhodium, Palladium, Cobalt, Nickel oder Ruthenium oder ein Gemisch aus zwei oder mehr davon eingesetzt, wobei insbesondere Ruthenium als Aktivmetall verwendet wird. Unter den ebenfalls verwendbaren Metallen der I. oder VII. oder aber der I. und der VII. Nebengruppe des Periodensystems, die ebenfalls allesamt prinzipiell verwendbar sind, werden vorzugsweise Kupfer und/oder Rhenium eingesetzt.

Die Begriffe "Makroporen" und "Mesoporen" werden im Rahmen der vorliegenden Anmeldung so verwendet, wie sie in Pure Appl. Chem., 45 S. 79 (1976) definiert sind, nämlich als Poren, deren Durchmesser oberhalb von 50 nm (Makroporen) oder deren Durchmesser zwischen 2 nm und 50 nm liegt (Mesoporen).

Der Gehalt des Aktivmetalls beträgt im allgemeinen 0,01 bis 30 Gew.-%, bevorzugt 0,01 bis 5 Gew.-%, besonders bevorzugt 0,1 bis 5 Gew.%, jeweils bezogen auf das Gesamtgewicht des verwendeten Katalysators.

Der verwendete Begriff "Benzolpolycarbonsäure oder eines Derivats davon" umfasst alle Benzolpolycarbonsäuren an sich, zum Beispiel Phthalsäure, Isophthalsäure, Terephthalsäure, Trimellitsäure, Trimesinsäure, Hemimellitsäure und Pyromellitsäure und Derivate davon, wobei insbesondere Mono-, Di-, Tri- und Tetraester, insbesondere Alkylester, und Anhydride zu nennen sind. Bevorzugt sind die Alkylester der genannten Säuren, wobei die Alkylgruppe bevorzugt ein Rest R ist, der vorstehend definiert wurde.

Die bevorzugt eingesetzten Benzolpolycarbonsäurealkylester werden im Allgemeinen durch Umsetzung von Benzolpolycarbonsäuren mit den den Alkylgruppen der Ester entsprechenden Alkoholen hergestellt. Geeignete Reaktionsbedingungen zur Umsetzung der Benzolpolycarbonsäuren mit den entsprechenden Alkoholen sind dem Fachmann bekannt.

Neben den beschriebenen Cyclohexanpolycarbonsäure-Derivaten und nach dem erfindungsgemäßen Verfahren erhältlichen Cyclohexanpolycarbonsäure-Derivate-Gemischen eignen sich auch Isoalkangemische, die einen sehr hohen Anteil an Alkanen desselben Molekulargewichts aufweisen. Dazu zählen Cyclohexanpolycarbonsäure-Derivate-Gemische, die größer gleich 95 Gew.-%, bevorzugt wenigstens 96 Gew.-%, insbesondere wenigstens 97 Gew.-% Cyclohexanpolycarbonsäure-Derivate desselben Molekulargewichts aufweisen.

Ein weiterer Gegenstand der vorliegenden Anmeldung ist daher die Verwendung einer Mischung enthaltend mindestens ein Polyol und mindestens ein Cyclohexanpolycarbonsäure-Derivat als staubmindernde Komponente in bauchemischen Produkten, wobei die Cyclohexanpolycarbonsäurederivate nach dem folgenden Verfahren herstellbar sind
a) Veresterung einer Benzolpolycarbonsäure der Formel II 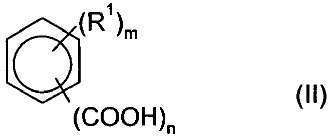 worin
   - R¹: C₁-C₁₀-Alkyl oder C₃-C₈-Cycloalkyl bedeutet,
   - m: 0, 1, 2 oder 3 bedeutet, und
   - n: 2, 3 oder 4 bedeutet,
   mit einem oder mehreren Alkoholen der Formel

   R-OH

   worin
   - R: C₁-C₃₀-Alkyl, bevorzugt C₁-C₂₀-Alkyl, besonders bevorzugt C₁-C₁₈-Alkyl, ganz besonders bevorzugt C₁-C₁₃-Alkyl bedeutet,
   wobei ein Benzolpolycarbonsäureester der Formel III erhalten wird 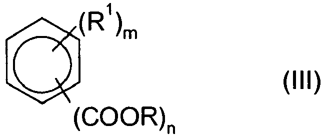
b) Hydrierung des Benzolpolycarbonsäureesters der Formel III zu einem entsprechenden Cyclohexanpolycarbonsäureester.

Bevorzugte Ausführungsformen von R¹, m, n und R sind vorstehend bezüglich der Cyclohexanpolycarbonsäureester gemäß Formel I erwähnt.

Eine bevorzugte Ausführungsform der Hydrierung des Benzolpolycarbonsäureesters der Formel III (Schritt b)) ist vorstehend erwähnt.

Bevorzugt eingesetzte Benzolpolycarbonsäuren sind Phthalsäure, Isophthalsäure, Terephthalsäure, Trimellitsäure, Trimesinsäure, Hemimellitsäure und Pyromellitsäure. Ganz besonders bevorzugt wird Phthalsäure eingesetzt. Die vorstehend genannten Säuren sind kommerziell erhältlich.

Als Alkohole werden bevorzugt die den Resten R der Cyclohexanpolycarbonsäure-Derivate der Formel I entsprechenden Alkohole eingesetzt. Bevorzugt werden somit lineare oder verzweigte Alkohole mit C₁-C₁₃-Alkylresten eingesetzt. Bei den zur Veresterung mit den Benzolpolycarbonsäuren eingesetzten Alkoholen kann es sich jeweils um die den vorstehend genannten Resten R entsprechenden einzelnen Isomere der Alkohole oder um Gemische verschiedener Alkohole mit isomeren Alkylresten mit derselben Zahl von Kohlenstoffatomen handeln und/oder um Gemische verschiedener Alkohole mit unterschiedlicher Zahl der Kohlenstoffatome.

Die zur Umsetzung mit den Benzolpolycarbonsäuren geeigneten Alkohole oder Alkoholgemische können nach allen dem Fachmann bekannten Verfahren hergestellt werden. Geeignete Verfahren zur Herstellung von Alkoholen oder Verfahrensschritte, die bei der Herstellung von Alkoholen angewendet werden, sind zum Beispiel:
- Hydroformylierung mit anschließender Hydrierung der gebildeten Aldehyde, zum Beispiel wie in WO 92/13818, DE-A 2 009 505, DE-A 199 24 339, EP-A 1 113 034, WO 00/63151, WO 99/25668, JP-A 1 160 928, JP-A 03 083 935, JP-A 2000/053803, EP-A 0 278 407, EP-A 1 178 029, FR-A 1 304 144, JP-A 30 44 340, JP-A 30 44 341, JP-A 30 44 342, JP-A 0 40 36 251, GB-A 721,540, DE-A 195 304 14, JP-A 2001/049029, US 2,781,396, US 3,094,564, FR-A 1 324 873, JP-A 0 816 9854, US 3,153,673, US 3,127,451, US 1,828,344, WO 2003/66642, WO 2003/18912, EP-A 0 424 767, WO 2002/68369, EP-A 0 366 089, JP-A 2001/002829, DE-A 100 35 617, DE-A 199 55 593, WO 2002/00580, EP-A 0 643 031, US 2,876,264, JP-A 2000/319444 und DE-A 100 32 580 offenbart;

- Hydrierung von Aldolprodukten, zum Beispiel wie in DE-A 102 51 311, JP-A 05 194 761, US 3,272, 873, DE-A 3 151 086, JP-A 2001/322959, WO 98/03462 und EP-A 0 603 630 offenbart;
- Hydratisierung von Alkenen, zum Beispiel wie in US 5,136,108, EP-A 0 325 144, EP-A 0 325 143, DE-A 100 50 627, US 4,982,022, GB-A 2,187,741, DE-A 36 28 008, US 3,277,191, JP-A 2000/191 566, DE-A 854 377, DE-A 38 01 275, DE-A 39 25 217, JP-A 06 321 828, JP-A 02 088 536, JP-A 06 287 156, JP-A 06 287 155, JP-A 54 141 712, JP-A 08 283 186, JP-A 09 263 558 und US 4,684,751 offenbart.
- Hydrierung von Carbonsäuren und Carbonsäureestern, insbesondere Fettsäuren und Fettsäureestern, zum Beispiel wie in US 5,463,143, US 5,475,159, WO 94/10112, CA 2,314,690, WO 94/06738, JP-A 06 065 125 und US 3,361,832 offenbart.
- Hydrierung von ungesättigten Alkoholen oder von Carbonylverbindungen, zum Beispiel wie in EP-A 0 394 842, DE-A 1 269 605, WO 88/05767, FR-A 1,595,013, EP-A 0 326 674, BE-A 756 877, BE-A 757 561, DE-A 1 277 232, FR-A 1,499,041 und DE-A 1 276 620 offenbart;
- Hydrierung von Epoxiden, zum Beispiel wie in FR-A 1,508,939, GB-A 879 803 und DE-A 1 078 106 offenbart;
- Verfahren umfassend einen Telomerisationsschritt, zum Beispiel wie in EP-A 0 330 999, DE-A 1 138 751, US 5,908,807, NE-6,603,884 und US 3,091,628 offenbart,
- Verfahren umfassend einen Isomerisierungsschritt, zum Beispiel wie in DE-A 42 28 887 offenbart;
- Hydrolyse von Sulfaten, zum Beispiel wie in GB-A 1,165,309 offenbart;
- Umsetzung von Dienen mit Aminen, zum Beispiel wie in DE-A 44 31 528 offenbart;
- Enzymatische Herstellung von Alkoholen, zum Beispiel wie in WO 93/24644 offenbart;
- Selektive Hydrierung von Dienen, zum Beispiel wie in US 3,203,998, DE-A 21 41 186, GB-A 2,093,025, JP-A 02 129 24, JP-A 1 122 8468, DE-A 195 44 133, WO 94/00410, GB-A 2,260,136, DE-A 44 10 746 und JP-A 08 176 036 offenbart;
- Herstellung von Alkoholen aus Nitrilen, zum Beispiel wie in EP-A 0 271 092 offenbart;
- Herstellung von Alkoholen durch Umsetzung von Alkinen, zum Beispiel wie in RU 205 9597-C1 offenbart; und
- Hydrogenolyse von substituierten Tetrahydropyranen, zum Beispiel wie in GB 1,320,188 offenbart.

Dem Fachmann sind weitere Verfahren zur Herstellung von Alkoholen bekannt, die ebenfalls zur Herstellung von zur Veresterung mit Benzolpolycarbonsäuren geeigneten Alkoholen oder Alkoholgemischen eingesetzt werden können. Bevorzugt eingesetzte Alkohole sind - wie vorstehend erwähnt - Alkohole, die C₁-C₁₃-Alkylreste aufweisen. Insbesondere die längerkettigen C₅-C₁₃-Alkohole bzw. Alkoholgemische, die diese Alkohole enthalten, werden besonders bevorzugt durch katalytische Hydroformylierung (auch als Oxoreaktion bezeichnet) von Olefinen und anschließende Hydrierung der gebildeten Aldehyde hergestellt. Geeignete Hydroformylierungsverfahren sind dem Fachmann bekannt und sind in den vorstehend genannten Dokumenten offenbart. Die in den genannten Dokumenten offenbarten Alkohole und Alkoholgemische können mit den vorstehend genannten Benzolpolycarbonsäuren zu den gewünschten Benzolpolycarbonsäurealkylestern bzw. -estergemischen umgesetzt werden.

C₅-Alkohole bzw. Gemische, die C₅-Alkohole, besonders bevorzugt n-Pentanol enthalten, können zum Beispiel durch Hydroformylierung von Butadien in Anwesenheit einer wässrigen Lösung einer Rhodiumverbindung und eines Phosphins als Katalysator hergestellt werden. Ein solches Verfahren ist zum Beispiel in EP-A 0 643 031 offenbart.

Geeignete C₇-Alkoholmischungen, die zur Veresterung mit den Benzolpolycarbonsäuren eingesetzt werden können, sind zum Beispiel in JP-A 2000/319 444 offenbart. Die Herstellung der C₇-Alkoholmischung erfolgt durch Hydroformylierung mit anschließender Hydrierung der gebildeten Aldehyde.

Mischungen enthaltend C₈-Alkohole und deren Herstellungsverfahren sind zum Beispiel in GB-A 721 540 offenbart, worin ein Verfahren zur Herstellung von Isooctylalkoholen ausgehend von Heptenen mittels Hydroformylierung und anschließender Hydrierung beschrieben wird. Weitere Dokumente, die die Herstellung von C₇-Alkoholen bzw. diese Alkohole enthaltenden Mischungen offenbaren, sind DE-A 195 30 414, JP-A 2001/49029, US 2,781,396, US 3,094,564, FR-A 1,324,873, JP-A 08 169 854, US 3,153,673, US 3,127,451 und US 1,828,344.

C₉-Alkohole bzw. Mischungen enthaltend C₉-Alkohole werden bevorzugt durch Dimerisierung von Butenen, Hydroformylierung der erhaltenen Octene und anschließende Hydrierung des erhaltenen C₉-Aldehyds hergestellt.

Geeignete Verfahren und C₉-Alkohole enthaltende Mischungen sind zum Beispiel in WO 92/13818, DE-A 20 09 505, DE-A 199 24 339, EP-A 1 113 034, WO 2000/63151, WO 99/25668, JP-A 1 160 928, JP-A 03 083 935, JP-A 2000/053803, EP-A 0 278 407 und EP-A 1 178 029 offenbart.

C₁₀-Alkohole und Mischungen enthaltend diese Alkohole sind zum Beispiel in WO 2003/66642, WO 2003/18912, EP-A 0 424 767, WO 2002/68369, EP-A 0 366 089 und JP-A 2001/002829 offenbart.

C₁₂-Alkohole bzw. Mischungen enthaltend C₁₂-Alkohole, insbesondere Trimethylnonanol, und ein Verfahren zu dessen Herstellung sind zum Beispiel in WO 98/03462 offenbart.

C₁₃-Alkohole sowie Mischungen enthaltend diese Alkohole sind zum Beispiel in DE-A 100 32 580, DE-A 199 55 593 und WO 2002/00580 offenbart.

Besonders bevorzugt werden in den Hilfsmitteln oder als Hilfsmittel gemäß der vorliegenden Anmeldung Dialkylester der vorstehend genannten Cyclohexandicarbonsäuren, insbesondere 1,2-, 1,3- oder 1,4-Dialkylester und ganz besonders bevorzugt 1,2-Dialkylester eingesetzt. Dabei können Dialkylester eingesetzt werden, worin beide Estergruppen der Dialkylester dieselben Alkylreste tragen, sowie Estergruppen, worin die beiden Estergruppen der Dialkylester unterschiedliche Alkylgruppen tragen. Beispiele für gemischte und nicht gemischte Dialkylester der Cyclohexandicarbonsäuren sind bereits vorstehend genannt. Weiterhin ist es möglich, dass die Alkylgruppen der Cyclohexandicarbonsäurealkylester zwar die gleiche Kohlenstoffatomanzahl aufweisen, jedoch geradkettig sind oder unterschiedliche Verzweigungen aufweisen und somit Isomerengemische bilden. Solche Isomerengemische können auch eingesetzt werden, wenn die Kohlenstoffanzahl der Alkylgruppen der Dialkylester unterschiedlich ist. Der Anteil der verschiedenen Isomeren der Alkylgruppen ergibt sich im Allgemeinen aus der Zusammensetzung der Alkohole, die zur Veresterung der Benzoldicarbonsäuren eingesetzt werden, die nach Veresterung zu den Cyclohexandicarbonsärueestern hydriert werden. Geeignete Alkoholmischungen sind vorstehend bereits genannt. Im Sinne der vorliegenden Anmeldung sind somit unter geradkettigen oder verzweigten Alkylresten mit einer bestimmten Anzahl von Kohlenstoffatomen neben den jeweils einzelnen Isomeren Isomerengemische zu verstehen, deren Zusammensetzung sich - wie vorstehend erwähnt - aus der Zusammensetzung der zur Veresterung der Benzoldicarbonsäuren eingesetzten Alkohole ergibt. Unter geradkettigen Alkylresten sind im Sinne der vorliegenden Anmeldung ausschließlich geradkettige Alkylreste zu verstehen, jedoch auch Mischungen von Alkylresten, die überwiegend geradkettig sind.

Handelt es sich bei den Alkylresten R der Cyclohexanpolycarbonsäureester um C₁- bis C₄-Alkylreste, so werden diese durch Umsetzung der Benzolpolycarbonsäuren der Formel II mit Methanol, Ethanol, n-Propanol, iso-Propanol, n-Butanol, iso-Butanol, sek.-Butanol oder tert.-Butanol erhalten. Dabei können zur Herstellung von Benzolpolycarbonsäureestern, worin R 3 oder 4 ist, jeweils Gemische der genannten Propanole oder Butanole eingesetzt werden oder einzelne Isomere. Bevorzugt werden einzelne Isomere des Propanols oder Butanols eingesetzt. Die Herstellung der vorstehend genannten C₁- bis C₄-Alkohole ist dem Fachmann bekannt.

Handelt es sich bei den Alkylresten R der Cyclohexanpolycarbonsäureester um C₅- bis C₁₃-Alkylreste, werden bevorzugt C₅- bis C₁₃-Alkohole eingesetzt, die Verzweigungsgrade (ISO-Index) von im Allgemeinen 0,10 bis 4, bevorzugt 0,5 bis 3, besonders bevorzugt 0,8 bis 2 und insbesondere bei 1 bis 1,5, d.h. im Allgemeinen handelt es sich bei den jeweiligen Alkoholen um Gemische verschiedener Isomere. Ganz besonders bevorzugt werden C9-Alkoholgemische mit einem ISO-Index vom 1 bis 1,5, insbesondere Nonanolgemische mit einem ISO-Index von 1,25 bzw. 1,6 eingesetzt.
Der ISO-Index ist eine dimensionslose Größe, die mittels Gaschromatographie bestimmt wurde.

| | | |
|---|---|---|
| Methode: | Kapillar GC | |
| Apparatur: | Kapillar Gaschromatograph mit Autosampler, Split/Splitless-Injektionssystem und Flammenionisationsdetektor (FID) | |
| Chemikalien: | - MSTFA (N-Methyl-N-trimethylsilyltrifluoracetamid) | |
| | - Vergleiche zur Bestimmung der Retentionszeiten | |
| Probenvorbereitung: | 3 Tropfen der Probe werden in 1 ml MSTFA aufgenommen und für 60 Minuten bei 80 °C gehalten | |
| GC Bedingungen: | Kapillarsäule: | Ultra-1 |
| | - Länge: | 50 m |
| | - Innendurchmesser: | 0,25 mm |
| | - Filmdicke: | 0,1 Mikrometer |
| | Trägergas: | Helium |
| | Säulenvordruck: | 200 psi constant |
| | Split: | 80 ml/min |
| | Septumspülung: | 3 ml/min |
| | Ofentemperatur: | 120 °C, 25 min isotherm |
| | Injektortemperatur: | 250 °C |
| | Detektortemperatur: | 250 °C (FID) |
| | Injektionsvolumen: | 0,5 Mikroliter |
| Berechnung | Die Vorgehensweise bei der Berechnung des Isoindex wird in der folgenden Tabelle ersichtlich: | |

| Komponente | Name | Verzweigung | Anteil in FI.% | Index |
|---|---|---|---|---|
| 1 | 2-Ethyl-2-methylhexanol-1 | 2 | 1,00 | 0,0200 |
| 2 | 2-Ethyl-4-methylhexanol-1 | 2 | 1,00 | 0,0200 |
| 3 | 2-Ethyl-4-methylhexanol-1 | 2 | 1,00 | 0,0200 |
| 4 | 2-Propyl-3-methylpentanol-1 | 2 | 1,00 | 0,0200 |
| 5 | 2-Propyl-hexanol-1 | 1 | 1,00 | 0,0100 |
| 6 | 2,5-Dimethylheptanol-1 | 2 | 1,00 | 0,0200 |
| 7 | 2,3-Dimethylheptanol-1 | 2 | 1,00 | 0,0200 |
| 8 | 2,3,4-Trimethylhexanol-1 | 3 | 1,00 | 0,0300 |
| 9 | 2-Ethylheptanol-1 | 1 | 1,00 | 0,0100 |
| 10 | 3-Ethyl-4-methylhexanol-1 | 2 | 82,00 | 1,6400 |
| 11 | 3-Ethylheptanol-1 | 1 | 1,00 | 0,0100 |
| 12 | 2-Methyloktanol-1 | 1 | 1,00 | 0,0100 |
| 13 | 4,5-Dimethylheptanol-1 | 2 | 1,00 | 0,0200 |
| 14 | 4,5-Dimethylheptanol-1 | 2 | 1,00 | 0,0200 |
| 15 | 4-Methyloktanol-1 | 1 | 1,00 | 0,0100 |
| 15a | 7-Methyloktanol-1 | 1 | 1,00 | 0,0000 |
| 16 | 6-Methyloktanol-1 | 1 | 1,00 | 0,0100 |
| 17 | Nonanol-1 | 0 | 1,00 | 0,0000 |
| | | Summe: | 99,00 | 1,9000 |
| | Unbekannte Komponente | 2 | 1,00 | 0,0200 |
| | | | Isoindex: | 1,9200 |

Die C₅- bis C₁₃-Alkohole werden gemäß den vorstehend genannten Verfahren hergestellt. Zur Herstellung von Cyclohexanpolycarbonsäureestern, worin R 9 ist, wird besonders bevorzugt ein Nonanol-Gemisch eingesetzt, worin 0 bis 20 Gew.-%, bevorzugt 0,5 bis 18 Gew.-%, besonders bevorzugt 6 bis 16 Gew.-% des Nonanol-Gemisches keine Verzweigung aufweisen, 5 bis 90 Gew.-%, bevorzugt 10 bis 80 Gew.-%, besonders bevorzugt 45 bis 75 Gew.-%, eine Verzweigung, 5 bis 70 Gew.-%, bevorzugt 10 bis 60 Gew.-%, besonders bevorzugt 15 bis 35 Gew.-% zwei Verzweigungen, 0 bis 10 Gew.-%, bevorzugt 0 bis 8 Gew.-%, besonders bevorzugt 0 bis 4 Gew.-% drei Verzweigungen aufweisen und 0 bis 40 Gew.-%, bevorzugt 0,1 bis 30 Gew.-%, besonders bevorzugt 0,5 bis 6,5 Gew.-%. sonstige Komponenten sind. Unter sonstigen Komponenten sind im Allgemeinen Nonanole mit mehr als drei Verzweigungen, Decanole oder Octanole zu verstehen, wobei die Summe der genannten Komponenten 100 Gew.-% ergibt.

Eine besonders bevorzugte Ausführungsform eines Nonanol-Gemisches, das zur Herstellung von bevorzugt verwendeten Cyclohexanpolycarbonsäurederivaten eingesetzt wird, weist die folgende Zusammensetzung auf:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6 Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctaonol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen; wobei die Gesamtsumme der genannten Komponenten 100 Gew.-% ergibt.

Eine weitere besonders bevorzugte Ausführungsform eines Nonanol-Gemisches, das zur Herstellung von bevorzugt verwendeten Cyclohexanpolycarbonsäurederivaten eingesetzt wird, weist die folgende Zusammensetzung auf:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
wobei die Gesamtsumme der genannten Komponenten 100 Gew.-% ergibt.

Ein weiterer Gegenstand der vorliegenden Anmeldung sind Mischungen enthaltend mindestens ein Polyol und mindestens ein Cyclohexanpolycarbonsäure-Derivat, wobei das Cyclohexanpolycarbonsäureester herstellbar ist durch ein Verfahren umfassend die Schritte
a) Veresterung einer Benzolpolycarbonsäure der Formel II 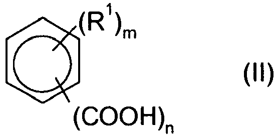 worin
   - R¹: C₁-C₁₀-Alkyl oder C₃-C₈-Cycloalkyl bedeutet,
   - m: 0, 1, 2 oder 3 bedeutet, und
   - n: 2, 3 oder 4 bedeutet,
   mit einem oder mehreren Alkoholen der Formel

   R'-OH

   worin
   R' C₅-C₁₃-Alkyl bedeutet,
   wobei die Alkylreste R' Verzweigungsgrade von 0,1 bis 4, bevorzugt 0,5 bis 3, besonders bevorzugt 0,8 bis 2, ganz besonders bevorzugt 1 bis 1,5 aufweisen (ISO-Index),
   wobei ein Benzolpolycarbonsäureester der Formel III' erhalten wird 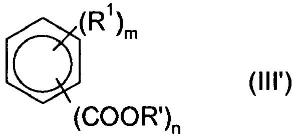
b) Hydrierung des Benzolpolycarbonsäureesters der Formel III' zu einem entsprechenden Cyclohexanpolycarbonsäureester.

Bevorzugte Alkohole R'-OH, insbesondere Nonanolgemische, sind die vorstehend genannten Alkohole und Alkoholgemische. Bevorzugte Ausführungsformen von R¹, m und n sind vorstehend bezüglich der Cyclohexanpolycarbonsäureester gemäß Formel I erwähnt.

Die erfindungsgemäßen Mischung enthaltend mindestens ein Polyol und mindestens ein Cyclohexanpolycarbonsäure-Derivat, hergestellt nach dem vorhergehend beschriebenen Verfahren, sind besonders gut als staubmindernde Mischung in bauchemischen Produkten geeignet.

Ein weiterer Gegenstand der Erfindung sind somit auch pulverförmige bauchemische Produkte enthaltend eine Mischung aus mindestens einem Polyol und mindestens einem Cyclohexanpolycarbonsäure-Derivat, welche sich aus den vorstehend beschriebenen Verwendungen ergeben.

Die pulverförmigen bauchemischen Produkte können weitere übliche Inhaltsstoffe bzw. Bestandteile, wie beispielsweise Erhärtungsbeschleuniger, Sulfatträger, Entschäumer etc. enthalten. Diese Produkte zeichnen sich in vorteilhafter Weise durch einen Anteil an latent hydraulisch und/oder hydraulisch abbindenden Komponenten im Bereich von 10 bis 90 Gew.-%, vorzugsweise 20 bis 60 Gew.-%, jeweils bezogen auf die Gesamtzusammensetzung aus.

Von der vorliegenden Erfindung ist des Weiteren ein entsprechendes pulverförmiges, bauchemisches Produkt umfasst, bei dem es sich um einen kalk- und/oder gips- und/oder zementhaltigen Mörtel handelt. Entsprechend einer zusätzlichen Variante stellt dieses Produkt einen Mörtel wie z. B. Fliesenkleber, Fugenmörtel, Reparaturmörtel, Armierungsmörtel dar oder aber auch Spachtelmassen, Dichtschlämmen, Haftschlämmen, Estriche oder Putze.

Das mit beanspruchte pulverförmige, bauchemische Produkt auf Basis einer Mischung enthaltend mindestens ein Polyol und mindestens ein Cyclohexanpolycarbonsäure-Derivat kann insbesondere einen Mörtel darstellen, der zumindest eine alkalisch angeregt latent hydraulische Komponente enthält, bei der es sich bspw. um ein Geopolymer handelt. Geopolymere sind relativ neue mineralische Baustoffe, die als typische Eigenschaften eine Feuer- und Säurebeständigkeit aufweisen und außerdem vorteilhafte ökologische Eigenschaften besitzen. Chemisch basieren Geopolymere auf Aluminosilikaten und sie stellen im Wesentlichen Polysilico-oxo-aluminate dar.

Die bevorzugten erfindungsgemäßen Mischungen mit mindestens einem Polyol und mindestens einem Cyclohexanpolycarbonsäure-Derivat sind weitgehend frei von Eigengerüchen und weisen ein weites Flüssigintervall auf (zumindest von 0 bis +150 °C).

Die Menge der als Entstaubungsadditiv eingesetzten Mischung beträgt, bezogen auf das zu entstaubende bauchemische Produkt 0,01 bis 10 Gew.-%, bevorzugt 0,1 bis 3 Gew.-% und besonders bevorzugt 0,2 bis 2,0 Gew.-%.

Die Mischungsverhältnisse der erfindungsgemäß eingesetzten Entstaubungskomponenten können in weiten Bereichen frei gewählt werden, wobei die Mischungen aus 5 bis 99,95 Gew.-% Polyol und 95 bis 0,05 Gew.-% Cyclohexanpolycarbonsäure-Derivaten bestehen können. Insbesondere haben sich Mischung aus 85 bis 99,9 Gew.-% Polyol und 15 bis 0,1 Gew.-% Cyclohexanpolycarbonsäure-Derivaten, bevorzugt 90 bis 99 Gew.-% Polyol und 10 bis 1,0 Gew.-% Cyclohexanpolycarbonsäure-Derivaten als besonders vorteilhaft erwiesen.

Ein weiterer Gegenstand der Erfindung ist ein Verfahren zur Herstellung von pulverförmigen bauchemischen Produkten mit vermindertem Staubbildungsverhalten enthaltend mindestens einem Polyol und mindestens einem Cyclohexanpolycarbonsäure-Derivat der Formel (I). Die Mischungen enthaltend mindestens ein Polyol und mindestens ein Cyclohexanpolycarbonsäure-Derivat der Formel (I) werden mit dem bauchemischen Produkt in Kontakt gebracht bzw. beaufschlagt. Im Allgemeinen erfolgt dies durch Aufsprühen ("Bedüsen") der Entstaubungsadditive auf die bauchemischen Produkte mit einer, wie zuvor definierten Mischung. Die Beaufschlagung bzw. das Inkontaktbringen der erfindungsgemäß eingesetzten Entstaubungsadditive mit den zu entstaubenden bauchemischen Produkten kann aber auch auf jede andere geeignete Art und Weise erfolgen, die dem Fachmann geläufig ist, z. B. Mischen der zu entstaubenden bauchemischen Produkte mit der Mischung der vorzugsweise flüssigen Entstaubungsadditive. Erfindungsgemäß bevorzugt ist jedoch ein Sprühauftrag der Entstaubungsadditive, weil dies die einfachste und ökonomischste Variante der Beaufschlagung der zu entstaubenden Produkte ist.

Es ist aber natürlich auch möglich, die bei Raumtemperatur festen Komponenten des Entstaubungsmittels zu schmelzen und in dieser Form mit dem bauschemischen Produkt in Kontakt zu bringen. Es ist als bevorzugt anzusehen, die erfindungsgemäßen Komponenten enthaltend mindestens ein Polyol und enthaltend mindestens ein Cyclohexanpolycarbonsäure-Derivat der Formel (I) als Mischung mit dem bauchemischen Produkt in Kontakt zu bringen. Es ist aber auch möglich die beiden Komponenten separat und ggf. in aufeinanderfolgenden Arbeitsgängen in das bauchemische Produkt einzuarbeiten.

Einzelkomponenten, die mit Entstaubungsmittel versetzt werden, können sogar als Träger zum Entstauben weiterer Formulierungskomponenten (z. B. Zement) dienen. Bei Zusatz von 2,0 % Entstaubungsmittel (90 Teile Polyethylengykol (Pluriol E400 der BASF SE) und 10 Teile Diisononylcyclohexan-1,2-dicarboxylat (Hexamoll DINCH der BASF SE)) zu 5 g Polymerpulver (Acronal^{®} S695P der BASF SE) können z. B. 35 g Portlandzement (CEM I 42,5) entstaubt werden. Hierbei genügt es, wenn das "getränkte" Polymerpulver einfach mit dem Zement gemischt wird.

Dem großtechnischen Anwender steht somit die Möglichkeit offen, vorentstaubte Komponenten durch einfaches Zumischen in seiner Anlage zu verwenden und die gesamte Trockenmischung damit zu entstauben. Aufwendige Prozessänderungen entfallen dadurch.

Durch die niedrige Viskosität und gute Verteilung des Produkts sind auch einfache Zudosierungen des Entstaubungsmittels im Prozess möglich.

Wie zuvor beschrieben, führen die erfindungsgemäß eingesetzten Mischungen bei ihrer Verwendung als Entstaubungsaddititve für trockene, pulverförmige bauchemische Produkte zu einer deutlichen Minimierung der Staubfreisetzung bei diesen Produkten.

Dieser Effekt kann noch weiter gesteigert werden, wenn die erfindungsgemäßen Additive in Kombination mit weiteren geeigneten aus dem Stand der Technik bekannten Additiven, beispielsweise Fasern, wie Polyethylen- oder Polypropylenfasern, die eine Entstaubungswirkung erzielen, eingesetzt werden.

Die Erfindung wird anhand der folgenden, nicht einschränkenden Beispiele näher erläutert.

### Beispiele

Die im Folgenden aufgeführte Trockenmörtelmischung (Fliesenkleber1) wurde dadurch erhalten, dass die jeweiligen Einzelkomponenten in einen Mischbehälter eingewogen und anschließend mit Hilfe einer Bohrmaschine mit aufgesetztem Scheibenrührer homogen vermischt wurden.

### Trockenmörtelmischungen

| | |
|---|---|
| Fliesenkleber1 | |
| Portlandzement CEM I | 60,5 Gew.% |
| Quarzsand 0,1-0,5mm | 23,6 Gew.% |
| Kalksteinmehl< 0,1mm | 10,5 Gew.% |
| Celluloseether | 1,9 Gew.% |
| Dispersionspulver | 3,0 Gew.% |
| Erhärtungsbeschleuniger | 0,5 Gew.% |

### Meßmethode

Die Messungen wurden in Anlehnung an DIN 55999-2 "Bestimmung einer Maßzahl für die Staubentwicklung von Pigmenten und Füllstoffen -Teil 2: Fallmethode" durchgeführt.

Zur Messung wurde das "Staubmessgerät SP3" der LORENZ MESSGERÄTEBAU GmbH & Co. KG verwendet.

### A) Probenherstellung

Die Trockenmörtelmischung wurde in ein Mischgefäß vorgelegt. Das erfindungsgemäße Entstaubungsadditiv-Gemisch bestehend aus dem Polyethylengykol (Pluriol E400 der BASF SE) und Diisononylcyclohexan-1,2-dicarboxylat (Hexamoll DINCH der BASF SE) wurde im angegeben Mengeverhältnis auf die Trockenmörtelmischung mittels Drucksprüher ("Blumenspritze") aufgebracht und mit dem Mörtel vermischt.

### Ergebnisse

### Staubzahlen

1) Polyethylenglykol (Pluriol E400 der BASF SE) (Vergleich)

| | 0 Tage | 7 Tage | 14 Tage | 28 Tage | 56 Tage | 84 Tage | 112 Tage | 140 Tage | 168 Tage |
|---|---|---|---|---|---|---|---|---|---|
| 2 % Pluriol E400 | 14 | 32 | 31 | 42 | 48 | 41 | 57 | 52 | 48 |

2) Diisononylcyclohexan-1,2-dicarboxylat (Hexamoll DINCH der BASF SE) (Vergleich)

| | 0 Tage | 7 Tage | 14 Tage | 24 Tage | 28 Tage | 56 Tage | 84 Tage | 112 Tage | 140 Tage | 168 Tage |
|---|---|---|---|---|---|---|---|---|---|---|
| 2 % Hexamoll DINCH | 19 | 25 | 27 | 13 | 19 | 31 | 34 | X | 16 | 21 |

3) Mischung aus Pluriol E400 und Hexamoll DINCH (Erfindungsgemäß) Gesamtdosierung = 2,0 %

| | 0 Tage | 7 Tage | 14 Tage | 28 Tage | 56 Tage | 84 Tage | 112 Tage | 140 Tage | 168 Tage |
|---|---|---|---|---|---|---|---|---|---|
| 2 % (10 Teile Hexa-moll DINCH und 90 Teile Pluriol E400) | 14 | 26 | 26 | 28 | 38 | 33 | 46 | 32 | 37 |

| | | | | | | | | | |
|---|---|---|---|---|---|---|---|---|---|
| 2 % (5 Teile Hexamoll DINCH und 95 Teile Pluriol E400) | 8 | 24 | 24 | 36 | 31 | 39 | 35 | 31 | 30 |

| | | | | | |
|---|---|---|---|---|---|
| 2 % (3 Teile Hexamoll DINCH und 97 Teile Pluriol E400) | 8 | 16 | 24 | 26 | 30 |

| | | | | | | | | | |
|---|---|---|---|---|---|---|---|---|---|
| 2 % (2 Teile Hexamoll DINCH und 98 Teile Pluriol E400) | 10 | 28 | 28 | 38 | 27 | 39 | 41 | 33 | 40 |

### B) Probenherstellung

Die Trockenmörtelmischung wurde in ein Mischgefäß vorgelegt. Das erfindungsgemäße Entstaubungsadditiv bestehend aus dem Polyethylengykol (Pluriol E400 der BASF SE) und Diisononylcyclohexan-1,2-dicarboxylat (Hexamoll DINCH der BASF SE) wurde im angegeben Mengeverhältnis separat, nacheinander und in der angegebenen Reihenfolge auf die Trockenmörtelmischung mittels Drucksprüher ("Blumenspritze") aufgebracht und mit dem Mörtel vermischt.

### Ergebnisse

### Staubzahlen

4) Pluriol E400 und Hexamoll DINCH (Erfindungsgemäß), separat dosiert, Gesamtdosierung = 2,0 %

| | | | | | |
|---|---|---|---|---|---|
| 2 % (10 Teile Hexamoll DINCH und 90 Teile Pluriol E400) | 9 | 9 | 12 | 13 | 16 |

| | | | | | |
|---|---|---|---|---|---|
| 2 % (90 Teile Pluriol E400 und 10 Teile Hexamoll DINCH) | 6 | 7 | 10 | 16 | 17 |

## Patentansprüche

1. Verwendung einer Mischung enthaltend mindestens einen Polyol und mindestens ein Cyclohexanpolycarbonsäure-Derivat der Formel (I), 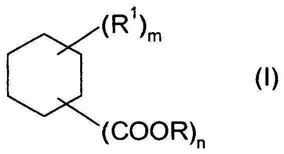 worin
R¹ für C₁-C₁₀-Alkyl oder C₃-C₈-Cycloalkyl steht,
m für 0, 1, 2 oder 3 steht,
n für 2, 3 oder 4 steht, und
R für Wasserstoff oder C₁-C₃₀-Alkyl, C₁-C₃₀-Alkoxy oder C₃-C₈-Cycloalkyl steht, wobei mindestens ein Rest R für C₁-C₃₀-Alkyl, C₁-C₃₀-Alkoxy oder C₃-C₈-Cycloalkyl, steht, als Additiv zur Entstaubung pulverförmiger bauchemischer Produkte.

2. Verwendung nach Anspruch 1 als Additiv zur Entstaubung der organischen Bestandteile bauchemischer Produkte.

3. Verwendung nach Anspruch 1 als Additiv zur Entstaubung der mineralischen Bestandteile bauchemischer Produkte

4. Verwendung nach einem der Ansprüche 1 bis 3, **dadurch gekennzeichnet, dass** R für C₁-C₃₀-Alkyl steht.

5. Verwendung nach einem der Ansprüche 1 bis 4, **dadurch gekennzeichnet, dass** R für Methyl, Ethyl, n-Propyl, i-Propyl, n-Butyl, i-Butyl, sek.-Butyl, tert.-Butyl, n-Pentyl, n-Hexyl, n-Octyl und 2-Ethylhexyl, n-Nonyl, iso-Nonyl, n-Decyl, iso-Decyl, n-Undecyl, iso-Undecyl, n-Dodecyl, iso-Dodecyl, n-Tridecyl, iso-Tridecyl, Stearyl und n-Eicosyl steht.

6. Verwendung nach einem der Ansprüche 1 bis 5, **dadurch gekennzeichnet, dass** mindestens eines der Cyclohexanpolycarbonsäure-Derivate ausgewählt ist aus der Gruppe bestehend aus kernhydrierten Mono- und Dialkylestern der Phthalsäure, Isophthalsäure und Terephthalsäure, kernhydrierten Mono-, Di- und Trialkylestern der Trimellitsäure, der Trimesinsäure und der Hemimellitsäure oder Mono-, Di-, Tri- und Tetraalkylestern der Pyromellitsäure.

7. Verwendung nach einem der Ansprüche 1 bis 6, **dadurch gekennzeichnet, dass** es sich bei den Cyclohexanpolycarbonsäure-Derivaten um Ester handelt, die herstellbar sind durch ein Verfahren umfassend die Schritte
a) Veresterung einer Benzolpolycarbonsäure der Formel II 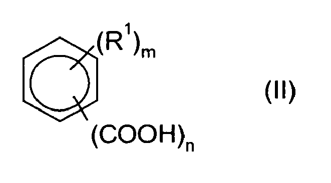 worin
R¹ C₁-C₁₀-Alkyl oder C₃-C₈-Cycloalkyl bedeutet,
m 0, 1, 2 oder 3 bedeutet, und
n 2, 3 oder 4 bedeutet,
mit einem oder mehreren Alkoholen der Formel
R'-OH
worin
R' C₅-C₁₃-Alkyl bedeutet,
wobei die Alkylreste R' Verzweigungsgrade von 0,1 bis 4 aufweisen (ISO-Index),
wobei ein Benzolpolycarbonsäureester der Formel III' erhalten wird 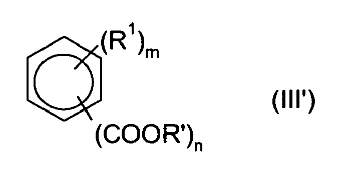
b) Hydrierung des Benzolpolycarbonsäureesters der Formel III' zu einem entsprechenden Cyclohexanpolycarbonsäureester.

8. Verwendung nach Anspruch 7, **dadurch gekennzeichnet, dass** es sich beim Alkohol R'-OH um Nonanolgemische handelt.

9. Verwendung nach einem der Ansprüche 1 bis 8, **dadurch gekennzeichnet, dass** es sich bei dem Polyol um Polyethylenglycol, Polypropylenglycol, Polytetramethylenglycol und Polystyroloxid handelt.

10. Verwendung nach einem der Ansprüche 1 bis 9, **dadurch gekennzeichnet, dass** die Mischung aus Polyol und Cyclohexanpolycarbonsäure-Derivate in Mengen von 0,01 bis 10,0 Gew.-%, jeweils bezogen auf das zu entstaubende bauchemische Produkt, eingesetzt wird.

11. Verwendung nach einem der Ansprüche 1 bis 10, **dadurch gekennzeichnet, dass** die Mischung aus 5 bis 99,95 Gew.-% Polyol und 95 bis 0,05 Gew.-% Cyclohexanpolycarbonsäure-Derivaten besteht.

12. Pulverförmiges bauchemisches Produkt, enthaltend eine Mischung aus mindestens einem Polyol und mindestens einem Cyclohexanpolycarbonsäure-Derivat nach einem der Ansprüche 1 bis 11.

13. Produkt nach Anspruch 12, **dadurch gekennzeichnet, dass** es sich um einen kalk- und/oder gips- und/oder zementhaltigen Mörtel und oder ein alkalisch aktiviertes hydraulisches Bindemittel handelt.

14. Produkt nach einem der Ansprüche 12 oder 13, **dadurch gekennzeichnet, dass** es sich um einen Mörtel, wie Fliesenkleber, Fugenmörtel, Spachtelmassen, Dichtschlämmen, Reparaturmörtel, Estrich, Armierungsmörtel, Putz oder Haftschlämme handelt.

15. Verfahren zur Herstellung eines pulverförmigen bauchemischen Produktes mit reduziertem Staubverhalten gemäß einem der Ansprüche 12 bis 14, **dadurch gekennzeichnet, dass** man deren Einzelkomponenten oder Mischungen daraus mit mindestens einem Polyol und mindestens einem Cyclohexanpolycarbonsäure-Derivat der Formel (I), 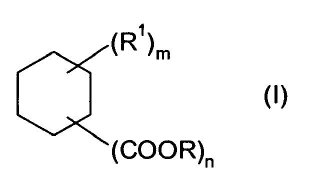 worin
R¹ für C₁-C₁₀-Alkyl oder C₃-C₈-Cycloalkyl steht,
m für 0, 1, 2 oder 3 steht,
n für 2, 3 oder 4 steht, und
R für Wasserstoff oder C₁-C₃₀-Alkyl, C₁-C₃₀-Alkoxy oder C₃-C₈-Cycloalkyl steht, wobei mindestens ein Rest R für C₁-C₃₀-Alkyl, C₁-C₃₀-Alkoxy oder C₃-C₈-Cycloalkyl steht, durch Aufsprühen in Kontakt bringt und insbesondere deren Oberfläche beaufschlagt.

## Claims

1. Use of a mixture containing at least one polyol and at least one cyclohexanepolycarboxylic acid derivative of the formula (I), 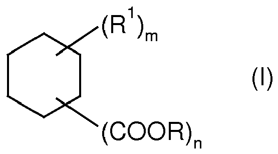 in which
R¹ represents C₁-C₁₀-alkyl or C₃-C₈-cycloalkyl,
m represents 0, 1, 2 or 3,
n represents 2, 3 or 4, and
R represents hydrogen or C₁-C₃₀-alkyl, C₁-C₃₀-alkoxy or C₃-C₈-cycloalkyl, at least one radical R representing C₁-C₃₀-alkyl, C₁-C₃₀-alkoxy or C₃-C₈-cycloalkyl, as an additive for dedusting pulverulent construction chemistry products.

2. Use according to Claim 1 as an additive for dedusting the organic constituents of the construction chemistry products.

3. Use according to Claim 1 as an additive for dedusting the mineral constituents of construction chemistry products.

4. Use according to any of Claims 1 to 3, **characterized in that** R represents C₁-C₃₀-alkyl.

5. Use according to any of Claims 1 to 4, **characterized in that** R represents methyl, ethyl, n-propyl, isopropyl, n-butyl, isobutyl, sec-butyl, tert.-butyl, n-pentyl, n-hexyl, n-octyl and 2-ethylhexyl, n-nonyl, isononyl, n-decyl, isodecyl, n-undecyl, isoundecyl, n-dodecyl, isododecyl, n-tridecyl, isotridecyl, stearyl and n-eicosyl.

6. Use according to any of Claims 1 to 5, **characterized in that** at least one of the cyclohexanepolycarboxylic acid derivatives is selected from the group consisting of mono- and dialkyl esters of phthalic acid, isophthalic acid and terephthalic acid, which esters are hydrogenated on the nucleus, mono-, di- and trialkyl esters of trimellitic acid, of trimesic acid and of hemimellitic acid, which esters are hydrogenated on the nucleus, or mono-, di-, tri-and tetraalkyl esters of pyromellitic acid.

7. Use according to any of Claims 1 to 6, **characterized in that** the cyclohexane polycarboxylic acid derivatives are esters which can be prepared by a process comprising the steps
a) esterification of a benzenepolycarboxylic acid of the formula II 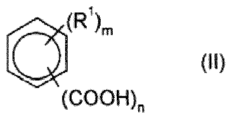 in which
R¹ denotes C₁-C₁₀-alkyl or C₃-C₈-cycloalkyl,
m denotes 0, 1, 2 or 3, and
n denotes 2, 3 or 4,
with one or more alcohols of the formula
R'-OH
in which
R' denotes C₅-C₁₃-alkyl,
the alkyl radicals R' having degrees of branching of 0.1 to 4 (ISO index),
a benzenepolycarboxylate of the formula III' being obtained 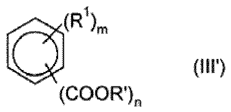
b) hydrogenation of the benzenepolycarboxylate of the formula III' to give a corresponding cyclohexanepolycarboxylate.

8. Use according to Claim 7, **characterized in that** the alcohol R'-OH comprises nonanol mixtures.

9. Use according to any of Claims 1 to 8, **characterized in that** the polyol is polyethylene glycol, polypropylene glycol, polytetramethylene glycol and polystyrene oxide.

10. Use according to any of Claims 1 to 9, **characterized in that** the mixture of polyol and cyclohexanepolycarboxylic acid derivatives is used in amounts of 0.01 to 10.0% by weight, based in each case on the construction chemistry product to be dedusted.

11. Use according to any of Claims 1 to 10, **characterized in that** the mixture consists of 5 to 99.95% by weight of polyol and 95 to 0.05% by weight of cyclohexanepolycarboxylic acid derivatives.

12. Pulverulent construction chemistry product containing a mixture of at least one polyol and at least one cyclohexanepolycarboxylic acid derivative according to any of Claims 1 to 11.

13. Product according to Claim 12, **characterized in that** it is a lime- and/or gypsum- and/or cement-containing mortar and/or a hydraulic binder activated under alkaline conditions.

14. Product according to either of Claims 12 or 13, **characterized in that** it is a mortar, such as tile adhesive, joint mortar, filling compounds, slurry coatings, repair mortar, screed, reinforcing mortar, render or bonding slurry.

15. Process for the preparation of a pulverulent construction chemistry product having reduced dust behaviour according to any of Claims 12 to 14, **characterized in that** individual components thereof or mixtures thereof are brought into contact with at least one polyol and at least one cyclohexanepolycarboxylic acid derivative of the formula (I) 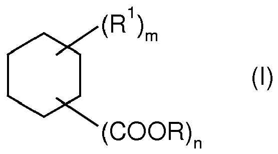 in which
R¹ represents C₁-C₁₀-alkyl or C₃-C₈-cycloalkyl,
m represents 0, 1, 2 or 3,
n represents 2, 3 or 4 and
R represents hydrogen or C₁-C₃₀-alkyl, C₁-C₃₀-alkoxy or C₃-C₈-cycloalkyl, at least one radical R representing C₁-C₃₀-alkyl, C₁-C₃₀-alkoxy or C₃-C₈-cycloalkyl, by spraying on and in particular the surface thereof is treated.

## Revendications

1. Utilisation d'un mélange contenant au moins un polyol et au moins un dérivé de l'acide cyclohexane polycarboxylique de formule (I) 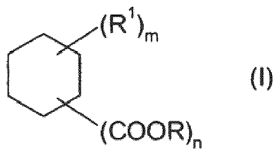 dans laquelle
R¹ représente alkyle en C₁-C₁₀ ou cycloalkyle en C₃-C₈,
m représente 0, 1, 2 ou 3,
n représente 2, 3 ou 4, et
R représente l'hydrogène ou alkyle en C₁-C₃₀, alcoxy en C₁-C₃₀ ou cycloalkyle en C₃-C₈, au moins un radical R représentant alkyle en C₁-C₃₀, alcoxy en C₁-C₃₀ ou cycloalkyle en C₃-C₈, en tant qu'additif pour le dépoussiérage de produits chimiques de construction sous forme de poudre.

2. Utilisation selon la revendication 1, en tant qu'additif pour le dépoussiérage des constituants organiques de produits chimiques de construction.

3. Utilisation selon la revendication 1, en tant qu'additif pour le dépoussiérage des constituants minéraux de produits chimiques de construction.

4. Utilisation selon l'une quelconque des revendications 1 à 3, **caractérisée en ce que** R représente alkyle en C₁-C₃₀.

5. Utilisation selon l'une quelconque des revendications 1 à 4, **caractérisée en ce que** R représente méthyle, éthyle, n-propyle, i-propyle, n-butyle, i-butyle, sec.-butyle, tert.-butyle, n-pentyle, n-hexyle, n-octyle et 2-éthylhexyle, n-nonyle, isononyle, n-décyle, iso-décyle, n-undécyle, iso-undécyle, n-dodécyle, iso-dodécyle, n-tridécyle, iso-tridécyle, stéaryle et n-eicosyle.

6. Utilisation selon l'une quelconque des revendications 1 à 5, **caractérisée en ce qu'**au moins un des dérivés de l'acide cyclohexane polycarboxylique est choisi dans le groupe constitué par les esters mono- et dialkyliques à noyau hydrogéné de l'acide phtalique, de l'acide isophtalique et de l'acide téréphtalique, les esters mono-, di- et trialkyliques à noyau hydrogéné de l'acide triméllitique, de l'acide trimésinique et de l'acide hémiméllitique, ou les esters mono-, di-, tri-et tétraalkyliques de l'acide pyroméllitique.

7. Utilisation selon l'une quelconque des revendications 1 à 6, **caractérisée en ce que** les dérivés de l'acide cyclohexane polycarboxylique sont des esters qui peuvent être fabriqués par un procédé comprenant les étapes suivantes :
a) l'estérification d'un acide benzène polycarboxylique de formule II 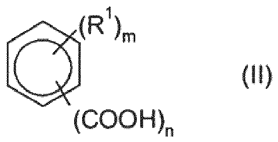 dans laquelle
R¹ signifie alkyle en C₁-C₁₀ ou cycloalkyle en C₃-C₈,
m signifie 0, 1, 2 ou 3,
n signifie 2, 3 ou 4,
avec un ou plusieurs alcools de formule
R'-OH
dans laquelle
R' signifie alkyle en C₅-C₁₃,
les radicaux alkyle R' présentant des degrés de ramification de 0,1 à 4 (indice ISO),
un ester de l'acide benzène polycarboxylique de formule III' étant obtenu 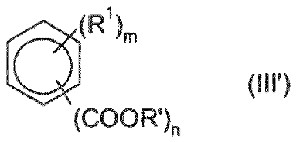
b) l'hydrogénation de l'ester de l'acide benzène polycarboxylique de formule III' en un ester de l'acide cyclohexane polycarboxylique correspondant.

8. Utilisation selon la revendication 7, **caractérisée en ce que** l'alcool R'-OH consiste en des mélanges de nonanols.

9. Utilisation selon l'une quelconque des revendications 1 à 8, **caractérisée en ce que** le polyol est le polyéthylène glycol, le polypropylène glycol, le polytétraméthylène glycol et l'oxyde de polystyrène.

10. Utilisation selon l'une quelconque des revendications 1 à 9, **caractérisée en ce que** le mélange de polyol et de dérivés de l'acide cyclohexane polycarboxylique est utilisé en quantités de 0,01 à 10,0 % en poids, à chaque fois par rapport au produit chimique de construction à dépoussiérer.

11. Utilisation selon l'une quelconque des revendications 1 à 10, **caractérisée en ce que** le mélange est constitué de 5 à 99,95 % en poids de polyol et 95 à 0,05 % en poids de dérivés de l'acide cyclohexane polycarboxylique.

12. Produit chimique de construction sous forme de poudre, contenant un mélange d'au moins un polyol et d'au moins un dérivé de l'acide cyclohexane polycarboxylique selon l'une quelconque des revendications 1 à 11.

13. Produit selon la revendication 12, **caractérisé en ce qu'**il s'agit d'un mortier contenant de la chaux et/ou du gypse et/ou du ciment, et/ou d'un liant hydraulique activé alcaliniquement.

14. Produit selon l'une quelconque des revendications 12 ou 13, **caractérisé en ce qu'**il s'agit d'un mortier, tel que des adhésifs pour tuiles, des mortiers pour joints, des enduits, des pâtes d'étanchéité, des mortiers de réparation, des chapes en mortier, des mortiers armés, des crépis ou des pâtes adhésives.

15. Procédé de fabrication d'un produit chimique de construction sous forme de poudre à comportement réduit de formation de poussières selon l'une quelconque des revendications 12 à 14, **caractérisé en ce que** les composants individuels ou leurs mélanges sont mis en contact avec au moins un polyol et au moins un dérivé de l'acide cyclohexane polycarboxylique de formule (I) 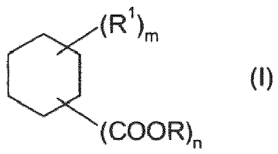 dans laquelle
R¹ représente alkyle en C₁-C₁₀ ou cycloalkyle en C₃-C₈,
m représente 0, 1, 2 ou 3,
n représente 2, 3 ou 4, et
R représente l'hydrogène ou alkyle en C₁-C₃₀, alcoxy en C₁-C₃₀ ou cycloalkyle en C₃-C₈, au moins un radical R représentant alkyle en C₁-C₃₀, alcoxy en C₁-C₃₀ ou cycloalkyle en C₃-C₈, par pulvérisation et leur surface notamment est exposée.
